# EUROPÄISCHE PATENTSCHRIFT

(11) **EP 3 416 837 B1**
(45) Veröffentlichungstag und Bekanntmachung des Hinweises auf die Patenterteilung: **29.04.2020**
(21) Anmeldenummer: 17703985.6
(22) Anmeldetag: 08.02.2017
(51) Int. Cl.: B60G 17/052, F16K 31/53

(54) **MECHANISCH BETÄTIGTE NIVEAUREGELVENTILEINRICHTUNG**
MECHANICALLY ACTUATED LEVEL REGULATING VALVE DEVICE
DISPOSITIF DE VANNE DE CONTROLE DE NIVEAU ACTIONNE MECANIQUEMENT

(30) Priorität: 18.02.2016 EP 16156354
(43) Veröffentlichungstag der Anmeldung: 26.12.2018
(73) Patentinhaber: Haldex Brake Products Aktiebolag, 261 24 Landskrona (SE)
(72) Erfinder: HARRISON, Dudley, Solihull West Midlands B90 4YP (GB); MELLINGS, Carl, Redditch Worcestershire B98 7NR (GB); SULZYC, Georg, 68305 Mannheim (DE); SCHERING, Christian, 48691 Vreden (DE); HEER, Siegfried, 69168 Wiesloch (DE); BECKE, Stefan, 68804 Altlussheim (DE); NÖCKER, Joachim, 69412 Eberbach (DE); TSCHÖKE, Tobias, 69121 Heidelberg (DE); BUSCH, Arne, 67227 Frankenthal (Pfalz) (DE)
(74) Vertreter: REHBERG HÜPPE + PARTNER
(86) Internationale Anmeldenummer: PCT/EP2017/052743
(87) Internationale Veröffentlichungsnummer: WO 2017/140551

(56) Entgegenhaltungen:
- EP-A2- 2 208 624
- WO-A1-00/12331
- DE-B4-102006 006 439
- DE-C1- 4 414 868
- DE-C1- 4 416 280
- DE-C1- 19 923 456
- JP-A- H0 891 034
- JP-A- 2002 293 122
- KR-A- 20100 127 395
- US-A- 2 792 235
- US-A1- 2012 146 307

## Beschreibung

### TECHNISCHES GEBIET DER ERFINDUNG

Die Erfindung betrifft eine mechanisch betätigte Niveauregelventileinrichtung für ein Nutzfahrzeug mit einer Luftfederung.

### STAND DER TECHNIK

Bekannt sind einerseits mechanische Niveauregelventile, bei welchen eine Niveauänderung einer Fahrzeugachse oder eines Fahrzeugrades mechanisch übertragen wird an ein Ventilelement, welches für ein Niveau gemäß der vorbestimmten Niveauhöhe (auch Referenzniveau oder Nullniveau genannt) eine Absperrung des der Achse oder dem Fahrzeugrad zugordneten Luftfederbalgs vornimmt, mit Unterschreiten einer vorgegebenen Niveauhöhe eine Öffnungsstellung einnimmt, in welcher eine Belüftung des Luftfederbalgs zum Anheben des Niveaus erfolgt, und für eine zu große Niveauhöhe eine Entlüftungsstellung einnimmt, in welcher der Luftfederbalg zur Reduzierung des Niveaus entlüftet wird.

Darüber hinaus sind elektronische Niveauregelungseinrichtungen bekannt, bei welchen über einen Sensor eine Niveauhöhe erfasst wird und durch eine Steuereinheit, welche die gemessene Niveauhöhe mit einem Sollwert einer Niveauhöhe vergleicht, Ventileinrichtungen elektronisch angesteuert werden, die dann eine Belüftung, Entlüftung oder ein Absperren der Luftfederbälge herbeiführen, um die vorbestimmte Niveauhöhe wiederherzustellen.

Bekannt ist auch der kumulative Einsatz einer mechanischen Niveauregelungseinrichtung und einer elektronischen Niveauregelungseinrichtung, welche dann in parallelen pneumatischen Leitungszweigen angeordnet sein können oder in einem pneumatischen Leitungszweig hintereinander angeordnet sein können.

Des Weiteren kann eine willkürlich manuell herbeigeführte Niveauänderung sinnvoll sein, bspw. um eine Anpassung des Fahrzeugsaufbaus zum Be- oder Entladen an einer Rampe vorzunehmen und/oder den Fahrzeugaufbau auf Gummipuffern abzusetzen, wenn sich das Nutzfahrzeug auf einem Schiff befindet. Hierzu werden manuell betätigte Hebe-Senk-Ventile verwendet, welche zusätzlich zu einem mechanischen Niveauregelventil oder einer elektronischen Niveauregelungseinrichtung in die Druckluftverbindung zu den Luftfederbälgen integriert werden.

Hinsichtlich des vorgenannten Stands der Technik wird insbesondere auf die Druckschriften EP 1 687 160 B1**,** GB 2 237 780 A**,** EP 1 382 469 A2**,** DE 41 20 824 C1**,** DE 42 02 729 C2**,** DE 199 16 040 A1**,** US 5,016,912 B**,** DE 101 29 143 C1**,** GB 2 280 877 A**,** DE 199 44 873 C1**,** DE 10 2005 017 591 B3**,** DE 10 2005 017 590 B3 und DE 10 2005 019 479 B3 verwiesen.

US 7,878,065 B2 offenbart eine Niveauregeleinheit, bei welcher ein verschwenkbarer Arm mit einer Fahrzeugachse gekoppelt ist. Die Verschwenkung des Arms wird über einen Drehsensor erfasst, dessen Ausgangssignal einer Steuereinheit zugeführt wird. Die Steuereinheit steuert einen Servomotor an, welcher über einen Kurbeltrieb einen Ventilschieber bewegt. Je nach Stellung des Ventilschiebers erfolgt eine Belüftung, Entlüftung oder Absperrung eines Luftfederbalgs. Vorzugsweise ist der Ventilschieber derart beaufschlagt, dass dieser ohne Bestromung des Servomotors eine Sperrstellung einnimmt.

US 2012/0146307 A1 offenbart ein mechanisches Niveauregelventil, bei dem die relative Lage des Gehäuses gegenüber dem Fahrzeugrahmen veränderbar ist. In einer ersten Variante besteht die Veränderung der relativen Lage des Gehäuses des mechanischen Niveauregelventils gegenüber dem Fahrzeugrahmen in einer Verschwenkung des Gehäuses, während in einer zweiten Variante das Gehäuse an dem Rahmen translatorisch verschoben wird. Die Lageänderungen des Gehäuses des mechanischen Niveauregelventils haben für beide Varianten eine Veränderung des Referenzniveaus des mechanischen Niveauregelventils zur Folge, für welches dann die mechanische Niveauregelung erfolgt. Die Veränderung des Referenzniveaus soll eingesetzt werden für eine Niveaureduzierung zur Erhöhung der Fahrstabilität bei hohen Fahrgeschwindigkeiten, zur Verringerung des Niveaus zwecks Vereinfachung eines Beladens und Entladens von Ladegut oder zur Vereinfachung des Zugangs zur Fahrerkabine. Andererseits kann die Veränderung des Referenzniveaus auch genutzt werden, um das Niveau zu vergrößern, wenn beispielsweise ein Fahren über eine unebene Fahrbahn oder geneigte Fahrbahn erfolgt.

JP H08 91034 A beschäftigt sich mit einer aktiven Reduzierung eines Rollwinkels bei einer Kurvenfahrt. Des Weiteren beschreibt JP H08 91034 A die Problematik, dass es bei einem verzögerten Ansprechen eines Niveauregelventils auf eine hin- und hergehende Rollbewegung zu einer Überhöhung des Rollwinkels und einem instabilen Fahrzustand kommen kann. Vorgeschlagen wird in JP H08 91034 A, dass ein Lenkwinkel und eine Lenkwinkelgeschwindigkeit über einen Sensor erfasst werden und auf Grundlage des erfassten Lenkwinkelsignals die Luftfederbälge auf beiden Seiten des Fahrzeugs gegenläufig be- und entlüftet werden. JP H08 91034 A schlägt vor, die Länge eines Hebels, dessen einer Endbereich mit einer Fahrzeugachse gekoppelt ist und dessen anderer Endbereich an einem das Niveauregelventil betätigenden Hebel angelenkt ist, über ein elektronisches Steuersignal zu verändern. Zu diesem Zweck ist der Hebel als Zahnstangentrieb ausgebildet. Die Steuerung eines elektrischen Motors zum Antrieb des Zahnstangentriebs erfolgt in Abhängigkeit von dem Signal eines Schalters, einem Lenkwinkel eines Lenkwinkelsensors und eines Geschwindigkeitssignals, um der Ausbildung eines etwaigen Rollwinkels entgegenzuwirken. Gleichzeitig steuert die Steuereinheit auch einen Stoßdämpfer an. Hierbei kann ein Steuersignal für die Ansteuerung des Schrittmotors für den Zahnstangentrieb aus einem Kennfeld ermittelt werden. Letzten Endes soll durch die Steuerung der Länge des Hebels über den Zahnstangentrieb der Eindruck erweckt werden, dass die Luftfederungen bei Auftreten einer Lenkbewegung eine höhere "Pseudosteifigkeit" aufweisen. Das Dokument JP H08 91034 A offenbart den Oberbegriff des unabhängigen Anspruchs 1.

KR 10-20 10-01 27395 A offenbart ein hybrides Luftfedersystem, bei welchem eine Niveauregelung einerseits durch mechanische Kopplungselemente und andererseits durch elektronische Steuerung mittels eines Signals von einer Sensoreinheit oder einem Passagier des Fahrzeugs erfolgen kann. Hierbei kann der Passagier über ein Nutzer-Interface einen Offroad-Modus aktivieren, um das Fahrzeugniveau anzuheben. Die Sensoreinheit, auf Grundlage welcher eine elektronische Niveauregelung erfolgen kann, kann ein Niveausensor, ein Fahrgeschwindigkeitssensor, ein Sensor zur Erfassung der Lenkwinkelgeschwindigkeit, ein Drosselklappensensor oder ein dreiachsiger Beschleunigungssensor sein. Die mechanische Niveauregelung wird ausgelöst über eine mechanische Bewegung eines Ventilkörpers über einen ersten Zahnstangentrieb, wobei der Ventilkörper fest mit einer Zahnstange verbunden ist und eine Verdrehung eines Ritzels über gelenkig miteinander verbundene Hebel erfolgt, welche mit der Fahrzeugachse gekoppelt sind. Hingegen erfolgt die elektronische Veränderung des Niveaus über einen zweiten Zahnstangentrieb, dessen Ritzel über einen elektrischen Motor angetrieben ist, während die Zahnstange fest mit einem Gehäuse des Niveauregelventils verbunden ist. Je nach Relativstellung zwischen dem Gehäuse und dem Ventilkörper nimmt das Niveauregelventil eine Sperrstellung, eine Entlüftungsstellung oder eine Belüftungsstellung für einen Luftfederbalg der Fahrzeugachse ein. Eine elektronische Niveauregelung soll hierbei zur Vermeidung eines Rollens des Fahrzeugs bei einer Lenkbewegung, zur Vermeidung eines Nickens bei einer plötzlichen Bremsbetätigung, zur Niveauänderung in Abhängigkeit von der Fahrgeschwindigkeit oder bei der Betätigung eines Offroad-Schalters u. ä. erfolgen.

JP 2002 293122 A betrifft ein Niveauregelsystem für einen Bus. Der Bus besitzt genau zwei Achsen. Den Achsen ist jeweils ein Niveauregelventil zugeordnet, mittels dessen gleichzeitig die Befüllung der beiden Luftfederbälge der Achsen gesteuert wird. Hierbei soll ein Sollniveau der jeweiligen Achsen und damit beider Luftfederbälge in Abhängigkeit von der Fahrgeschwindigkeit derart geregelt werden, dass bei hohen Geschwindigkeiten das Niveau niedriger ist als bei kleinen Geschwindigkeiten. Zu diesem Zweck ist das Gehäuse des Niveauregelventils über einen Schrittmotor in vertikaler Richtung gegenüber dem Fahrzeugaufbau verschieblich. Die Betätigung des Niveauregelventils erfolgt über zwei gelenkig miteinander verbundene Hebel, wobei der freie Endbereich eines Hebels mit dem Achskörper gekoppelt ist und der freie Endbereich des anderen Hebels je nach dem Schwenkwinkel desselben ein Ein- oder Auslassventil des Niveauregelventils betätigt.

DE 44 14 868 C1 offenbart ebenfalls eine Niveauregelventileinrichtung, bei welcher zur Verstellung eines Sollniveaus eine Bewegung eines Gehäuses eines Niveauregelventils herbeigeführt wird, wobei die Bewegung des Gehäuses eine Verschwenkung oder eine translatorische Verschiebung des Gehäuses sein kann. Die Bewegung wird verursacht durch einen pneumatischen Stellzylinder, dessen pneumatische Beaufschlagung durch ein manuell betätigtes Hebe-Senk-Schaltventil von dem Benutzer gesteuert werden kann.

### AUFGABE DER ERFINDUNG

Der Erfindung liegt die Aufgabe zugrunde, eine mechanisch betätigte Niveauregelventileinrichtung für ein Nutzfahrzeug vorzuschlagen, die im Rahmen einer Luftfederungsanlage eingesetzt werden kann, die eine ergänzende elektronische Beeinflussung des Niveaus ermöglicht. Insbesondere soll hierbei den Bauraumanforderungen, der Nachrüstbarkeit einer bestehenden Luftfederungsanlage, dem Einbauaufwand und den Steuerungsmöglichkeiten besondere Rechnung getragen sein.

### LÖSUNG

Die Aufgabe der Erfindung wird erfindungsgemäß mit den Merkmalen des unabhängigen Patentanspruchs gelöst. Weitere bevorzugte erfindungsgemäße Ausgestaltungen sind den abhängigen Patentansprüchen zu entnehmen.

### BESCHREIBUNG DER ERFINDUNG

Die Erfindung schlägt vor, abweichend zu dem Vorschlag gemäß der Druckschrift US 2012/0146307 A1 ein Gehäuse der Niveauregelventileinrichtung nicht relativ zu dem Fahrzeugrahmen zu bewegen, sondern dieses vielmehr am Fahrzeugrahmen zu fixieren. Erfindungsgemäß ist dann bei fixierter Lage und Orientierung eines Gehäuses der mechanisch betätigten Niveauregelventileinrichtung eine Referenzlage der Niveauregelventileinrichtung veränderbar. Eine Veränderung der Referenzlage kann bspw. durch manuelle Vorgabe durch den Bediener, bspw. für ein Heben oder Senken des Fahrzeugaufbaus an einer Rampe, veranlasst worden sein. Möglich ist aber auch, dass die Referenzlage bei einem Fahrbetrieb im Rahmen einer elektronischen Steuerung geändert wird. Hierbei korreliert die Referenzlage mit einer Sperrstellung der Niveauregelventileinrichtung, in welcher keine Niveauänderung erfolgt. Die Referenzlage ist hierbei vorgegeben durch eine Relativstellung der Komponenten der Niveauregelventileinrichtung, die an der Belüftung, Entlüftung und/oder dem Absperren des Anschlusses für den mindestens einen Luftfederbalg beteiligt sind.

Problematisch bei einer derartigen Veränderung der Referenzlage ist für einige aus dem Stand der Technik bekannte Lösungen, dass sich bei Wegfall der elektrischen Leistungsversorgung (im Fall eines Einbruchs derselben oder für die Deaktivierung der elektrischen Leistungsversorgung) in der Regel infolge der mechanischen Niveauregelung automatisch eine Rückstellung aus der veränderten Referenzlage in eine vorbestimmte Referenzlage ergibt. Dies ist erfindungsgemäß nicht der Fall. Vielmehr bleibt die veränderte Referenzlage auch ohne elektrische Leistungsversorgung erhalten, wobei dann sogar noch eine mechanische Niveauregelung erfolgen kann. Fällt bspw. die elektrische Leistungsversorgung nach der Einstellung einer Niveauhöhe an einer Rampe weg, wird die eingestellte Niveauhöhe auch bei einem weiteren Be- oder Entladen des Nutzfahrzeugs mit der mechanischen Niveauregelung beibehalten, ohne dass je nach Änderung des Beladungszustands eine manuelle Nachregelung erforderlich ist, um die Niveauhöhe beizubehalten. Um lediglich ein anderes nicht beschränkendes Beispiel zu nennen, kann auch in einem Fahrbetrieb eine veränderte Referenzlage beibehalten werden, welche dann auch in einem Notfall mit einer elektrischen Leistungsversorgung beibehalten wird mit einer dann möglichen mechanischen Niveauregelung, womit die Betriebssicherheit erhöht werden kann.

Erfindungsgemäß besitzt die Niveauregelventileinrichtung ein Antriebselement, welches mechanisch mit einem Fahrzeugrad oder einer Fahrzeugachse koppelbar ist und welches entsprechend dem aktuellen Niveau bewegt wird. Hierbei ist das Antriebselement mit dem Fahrzeugrad oder der Fahrzeugachse über einen mechanischen Kopplungsmechanismus gekoppelt sein. Das Antriebselement repräsentiert ein aktuelles Niveau des Fahrzeugrads oder der Fahrzeugachse bzw. eines zugeordneten Luftfederbalgs.

Erfindungsgemäß ist die Niveauregelventileinrichtung ein mechanisches Niveauregelventil, welches eine singuläre Baueinheit oder eine modulare Baueinheit mit einem Gehäuse und ohne zwischen einzelnen Komponenten frei verlaufenden Leitungsverbindungen sein kann. Hierbei kann das Niveauregelventil in beliebiger Bauart, insbesondere Schieberbauart, Sitzventil-Bauart oder Scheibenbauart, ausgebildet sein. Das Antriebselement ist eine verdrehbare Antriebswelle des Niveauregelventils, die dann bspw. von einem in diesem Fall externen Kopplungsmechanismus je nach Niveau verdreht wird. Erfindungsgemäß ist der Aktuator in das Niveauregelventil integriert, wobei auch die Bauelemente für die elektronische Steuerung in das Niveauregelventil integriert sein können oder (zumindest teilweise) außerhalb desselben angeordnet sein können.

Darüber hinaus verfügt die Niveauregelventileinrichtung über ein Ventilelement. Das Ventilelement ist mechanisch mit dem Antriebselement gekoppelt, so dass durch eine Bewegung des Antriebselements, also durch eine Niveauänderung, eine Bewegung des Ventilelements herbeiführbar ist. Hierbei kann je nach Über- oder Untersetzung auch die Bewegung des Ventilelements sowohl hinsichtlich der Art des Freiheitsgrads als auch hinsichtlich des Ausmaßes der Bewegung von der Bewegung des Antriebselements abweichen.

Das Ventilelement wirkt (unmittelbar oder mittelbar, insbesondere über einen Ventilteller) mit einem Gegen-Ventilelement zusammen. Mit dem Ventilelement und dem Gegen-Ventilelement kann ein Ventil mit beliebiger Anzahl von Wegen und/oder Anschlüssen gebildet sein. Ist bspw. ein derartiges Ventil als Schieberventil ausgebildet, kann das Ventilelement den Ventilschieber bilden, während das Gegen-Ventilelement von der Bohrung oder einer Hülse gebildet ist, in welcher der Ventilschieber für die unterschiedlichen Ventilstellungen verschiebbar ist. Ist hingegen das Ventil als Sitzventil ausgebildet, kann das Ventilelement von einem Ventilstößel gebildet sein, während das Gegen-Ventilelement von einem Ventilsitz ausgebildet ist. Um lediglich ein weiteres nicht beschränkendes Beispiel zu nennen, können für die Ausbildung eines Ventils in Scheibenbauweise (vgl. bspw. die Druckschriften DE 600 31 554 T2, DE 10 2014 103 842 A1 und DE 10 2006 006 439 B4) das Ventilelement und das Gegen-Ventilelement jeweils als Ventilscheibe ausgebildet sein.

Je nach Relativstellung des Ventilelements und des Gegen-Ventilelements wird durch die Wechselwirkung zwischen dem Ventilelement und dem Gegen-Ventilelement in einer ersten Relativstellung ein Anschluss für einen Luftfederbalg abgesperrt, in einer zweiten Relativstellung der Anschluss für einen Luftfederbalg mit einem Anschluss für eine Belüftung verbunden und/oder in einer dritten Relativstellung der Anschluss für den Luftfederbalg mit einem Anschluss für eine Entlüftung verbunden. Somit wird zwischen dem Ventilelement und dem Gegen-Ventilelement ein Ventil- oder Übertrittsquerschnitt des Ventils gebildet, welcher in der ersten Relativstellung abgesperrt ist und in der zweiten Relativstellung und/oder dritten Relativstellung geöffnet ist zur Herstellung der vorgenannten Verbindungen. Bei der ersten Relativstellung, der zweiten Relativstellung und der dritten Relativstellung kann es sich um diskrete Stellungen oder auch Stellungsbereiche handeln, wobei im letztgenannten Fall auch möglich ist, dass sich für einen Stellungsbereich je nach Stellung in dem Stellungsbereich die Größe eines Übertrittquerschnittes zum Belüften und/oder Entlüften ändert.

Erfindungsgemäß ist die Niveauregelventileinrichtung nicht ausschließlich mechanisch betätigbar, also entsprechend der Abweichung des aktuellen Niveaus von einem fest vorgegebenen Referenzniveau durch mechanische Veränderung der Relativstellung des Ventilelements und des Gegen-Ventilelements. Vielmehr ist in der Niveauregelventileinrichtung auch ein elektronisch steuerbarer Aktuator vorhanden. Hierbei kann es sich bspw. um einen elektronisch gesteuerten Antriebsmotor, unter Umständen auch mit einem zugeordneten Getriebe oder einem Kopplungsmechanismus, einen pneumatischen Stellzylinder, welcher über elektronisch gesteuerte Ventile betätigt werden kann, oder einen pneumatischen Motor, insbesondere einen pneumatischen Lamellenmotor, einen pneumatischen Drehkolbenmotor oder einen pneumatischen Radialkolbenmotor, handeln. Mittels des Aktuators kann zur Veränderung des Referenzniveaus die Relativstellung des Ventilelements und des Antriebselements verändert werden. Alternativ oder kumulativ möglich ist, dass über den Aktuator die relative Lage mindestens eines Gegen-Ventilelements gegenüber einem Gehäuse, welches das Ventilelement und das Gegen-Ventilelement aufnimmt, veränderbar ist. Beide Alternativen führen dazu, dass mit dem Betrieb des Aktuators die Relativstellung zwischen dem Ventilelement und dem Gegen-Ventilelement verändert werden kann. Während für ein klassisches mechanisches Niveauregelventil eine Veränderung dieser Relativstellung (und damit das Öffnen, Absperren und Schließen des Niveauregelventils) lediglich von der Stellung des Antriebselements, also dem vorgegebenen Niveau, abhängig ist, kann erfindungsgemäß darüber hinaus auch die Relativstellung zwischen Ventilelement und Gegen-Ventilelement über den Betrieb des Aktuators verändert werden, womit also auch ohne Bewegung des Antriebselements eine Veränderung der Relativstellung herbeiführbar ist und somit elektronisch das von dem Ventilelement und dem Gegen-Ventilelement gebildete Ventil in eine Belüftungsstellung, eine Entlüftungsstellung und eine Sperrstellung steuerbar ist. Möglich ist auch, dass über die Betätigung des Aktuators eine Verstellung eines Referenzniveaus erfolgt. Im Betrieb das Nutzfahrzeugs kann auch kumulativ einerseits eine Bewegung des Ventilelements infolge einer Bewegung des Antriebselements und andererseits eine Veränderung der relativen Lage zwischen dem Ventilelement und dem Gegen-Ventilelement oder zwischen dem Gegen-Ventilelement und dem Gehäuse herbeigeführt werden durch elektronische Ansteuerung des Aktuators (worunter auch eine Regelung verstanden wird). Mit dem elektronisch steuerbaren Aktuator kann somit eine alternative oder kumulative mechanische und elektronische Betätigung des Niveauregelventils gewährleistet werden, wobei vorzugsweise für beide Betätigungsarten für die Belüftung und/oder Entlüftung des Luftfederbalgs dieselben Ventilkomponenten und dieselben zwischen diesen Ventilkomponenten gebildeten Ventil- oder Öffnungsquerschnitte genutzt werden, wodurch der Bauaufwand signifikant verringert werden kann.

In weiterer Ausgestaltung der Erfindung verfügt das Niveauregelventil einerseits über die vorgenannten Antriebswelle und andererseits über ein Betätigungselement, welches das Ventilelement betätigt. Die Kopplung der Antriebswelle mit dem Betätigungselement erfolgt über den Aktuator, wobei ein Getriebe des Aktuators und/oder ein Antriebsmotor des Aktuators in den Kraftfluss zwischen der Antriebswelle und dem Betätigungselement in Reihenschaltung oder Parallelschaltung integriert sein können/kann.

Wie zuvor erwähnt, kann im Rahmen der Erfindung ein beliebiger Aktuator, insbesondere mit einem beliebigen Getriebe, Einsatz finden. Für einen besonderen Vorschlag weist der Aktuator ein Planetengetriebe auf. Ein derartiges Planetengetriebe verfügt vorzugsweise über drei Getriebeelemente, nämlich ein Hohlrad, einen Planetensteg und ein Sonnenrad. Die Erfindung schlägt vor, ein Getriebeelement des Planetengetriebes drehfest mit der Antriebswelle zu verbinden, ein anderes Getriebeelement des Planetengetriebes mit dem Betätigungselement drehfest zu verbinden und das dritte Getriebeelement über ein Antriebsaggregat zu verdrehen.

Um lediglich ein Beispiel zu nennen, kann über ein Antriebsaggregat das Hohlrad des Planetengetriebes verdreht werden, während in diesem Fall insbesondere das Sonnenrad und der Planetensteg mit der Antriebswelle und dem Betätigungselement drehfest verbunden sind. Unter Umständen kann das Antriebsaggregat über eine Spindel oder Schneckenwelle mit einer entsprechenden Außenverzahnung des Hohlrads kämmen, womit dann der Aktuator als Schneckentrieb oder Spindeltrieb ausgebildet ist.

Für einen weiteren Vorschlag der Erfindung wird die Verdrehung der Antriebswelle über eine Antriebsverbindung umgewandelt in eine translatorische Bewegung eines Betätigungselements. Um lediglich einige nicht beschränkende Beispiele zu nennen, kann die Antriebsverbindung als Nocken- oder Exzentertrieb ausgebildet sein. Die translatorische Bewegung des Betätigungselements wird dann auf das Ventilelement übertragen. In diesem Fall kann der Aktuator zwischen das Betätigungselement und das Ventilelement zwischengeschaltet sein. Verändert der Aktuator die relative Stellung zwischen dem Betätigungselement und dem Ventilelement, führt dies letztendlich (auch ohne Verdrehung der Antriebswelle) zu einer veränderten Relativstellung zwischen Ventilelement und Gegen-Ventilelement und damit zu einem veränderten Referenzniveau.

Möglich ist, dass der Aktuator geeignet elektronisch gesteuert und elektrisch beaufschlagt wird, dass dieser seine gewünschte Stellung einnimmt und beibehält, sofern keine Änderung der Betriebsstellung gewünscht ist. Von Vorteil ist, wenn der Aktuator selbsthemmend auf das Ventilelement wirkt. Hierunter wird verstanden, dass auch ohne elektronische Ansteuerung oder Bestromung des Aktuators eine einmal eingenommene Stellung des Aktuators beibehalten wird, womit sich eine Relativstellung zwischen Ventilelement und Gegen-Ventilelement nicht unerwünscht ändert, wenn es bspw. zu einem Einbruch einer elektrischen Leistungsversorgung kommt. Andererseits ist bei derartiger selbsthemmender Ausbildung nicht erforderlich, dass auch ohne Veränderung der Relativstellung durch den Aktuator eine elektrische Leistungsaufnahme erfolgt.

Für die Gewährleistung einer selbsthemmenden Ausbildung des Aktuators gibt es vielfältige Möglichkeiten. Um lediglich einige nicht beschränkende Beispiele zu nennen, kann bei Ausbildung des Aktuators mit elektronisch angesteuerten Magnetventilen eine Ventilstellung, in welcher keine Veränderung der Relativstellung zwischen Ventilelement und Gegen-Ventilelement erfolgt, über eine Feder gesichert sein, welche bei Bestromung des Magnetventils überwunden werden muss, oder das Magnetventil kann multistabile Stellungen aufweisen. Möglich ist aber auch, dass der Aktuator auf mechanische Weise selbsthemmend ausgebildet ist. So kann bspw. ein für die Veränderung der Relativlage zwischen Ventilelement und Gegen-Ventilelement bewegtes Bauelement gezielt mit erhöhter Reibung ausgebildet sein, wozu bspw. ein Reibelement an den Umfang einer Welle, eines Stößels, einer Gewindemutter, einer Spindel oder Schneckenwelle bzw. einer Spindelmutter oder eines Schneckenzahnrads angepresst werden. Vorteilhaft ist unter Umständen auch die Erzeugung der Verstellung des Aktuators über ein Gewinde oder einen Schnecken- oder Spindeltrieb, welches oder welcher unter Umständen unmittelbar eine Selbsthemmung gewährleistet.

In weiterer Ausgestaltung der erfindungsgemäßen Niveauregelventileinrichtung wird vorgeschlagen, dass mindestens ein Sensor vorhanden ist, der eine Relativstellung der Antriebswelle und des Betätigungselements erfasst. Möglich ist auch, dass der Sensor eine Stellung des Antriebselements, der Antriebswelle und/oder des Betätigungselements erfasst. Die vorgenannten Messsignale korrelieren mit der Relativstellung der Antriebswelle und des Antriebselements oder Betätigungselements und somit mit dem Niveau, oder aus den Messsignalen können dann das aktuelle Niveau bestimmt werden. Auf Grundlage der Messsignale kann dann die Ansteuerung des Aktuators zur Herbeiführung einer Veränderung eines Niveaus und/oder zum Konstanthalten des Niveaus erfolgen. Andererseits kann je nach Relativstellung der Antriebswelle und des Betätigungselements auf die Betriebsstellung des Aktuators und/oder auf das Referenzniveau geschlossen werden.

Grundsätzlich sind beliebige Sensoren, insbesondere berührungslose Weg- und/oder Winkelsensoren einsetzbar. In bevorzugter Ausgestaltung ist mindestens ein Sensor ein Hall-Sensor, wobei dieser in das Gehäuse des Niveauregelventils integriert sein kann. Um lediglich ein nicht beschränkendes Beispiel zu nennen, kann ein Permanentmagnet des Hall-Sensors an der Antriebswelle, dem Betätigungselement oder dem Antriebselement angeordnet sein und in geringem Abstand an einem das Magnetfeld des Permanentmagneten sensierenden Empfänger des Hall-Sensors, der an dem Gehäuse gehalten ist, mit der Bewegung vorbeibewegt werden.

Für den Fall, dass das Niveauregelventil mit Ventilscheiben gebildet ist, kann je nach Drehwinkel der Ventilscheiben in einer ersten Relativstellung ein Anschluss für einen Luftfederbalg abgesperrt sein, während in einer zweiten Relativstellung der Anschluss belüftet ist und/oder in einer dritten Relativstellung der Anschluss entlüftet ist. Hierbei wird eine der genannten Ventilscheiben oder eine andere Ventilscheibe von dem Aktuator verdreht. In diesem Fall bilden zwei Ventilscheiben das Ventilelement und das Gegen-Ventilelement aus.

Ein weiterer Aspekt der Erfindung widmet sich der Ausbildung einer elektronischen Steuereinrichtung der Niveauregelventileinrichtung für die Ansteuerung (wovon auch eine Regelung umfasst ist) des Aktuators.

Für einen ersten Vorschlag weist die Steuereinrichtung Steuerlogik auf. Die Steuerlogik erzeugt ein Steuersignal für den Aktuator, wenn von dem Bediener manuell eine Niveauänderung, bspw. ein Wunsch nach einem Heben oder Senken des Fahrzeugaufbaus an einer Rampe, also ein Wunsch nach einer Veränderung des Referenzniveaus, vorgegeben wird. Hierbei wird das Steuersignal von der Steuerlogik so ermittelt, dass auf Grundlage des Steuersignals der Aktuator die Relativstellung des Ventilelements und des Gegen-Ventilelements so verändert, wie dies vom Bediener gewünscht ist. Wünscht der Bediener somit durch manuelle Vorgabe ein Anheben (oder Absenken) des Fahrzeugaufbaus, wird das Steuersignal von der Steuerlogik so vorgegeben, dass sich die Relativstellung in Richtung der zweiten Relativstellung (oder der dritten Relativstellung) verändert. Damit kann erfindungsgemäß in die Niveauregelventileinrichtung ohne wesentlichen Zusatzaufwand auch die Funktion eines manuellen Hebe-Senk-Ventils integriert werden. In diesem Fall müssen aber nicht zusätzliche Ventilelemente zur Gewährleistung des manuellen Hebens und Senkens vorgesehen werden. Vielmehr ist es ausreichend, einen Schalter, Hebel u. ä. vorzusehen, über welchen der Bediener den Wunsch Heben oder Senken vorgeben kann, der dann der Steuereinrichtung zugeführt wird und von der Steuerlogik weiter verarbeitet wird.

Möglich ist auch, dass die elektronische Steuereinrichtung Steuerlogik aufweist, die für eine automatische Niveauänderung für eine Anpassung des Niveaus an das Niveau einer Rampe, an welcher insbesondere das Fahrzeug be- und/oder entladen werden soll, ein Steuersignal für den Aktuator erzeugt. Auf Grundlage dieses Steuersignals verändert der Aktuator die Relativstellung des Ventilelements und des Gegen-Ventilelements entsprechend der automatischen Niveauänderung. Hierbei kann das Ausmaß der automatischen Niveauänderung beispielsweise in der Steuereinheit für die geodätischen Orte unterschiedlicher Rampen abgespeichert sein, so dass über eine Erkennung einer angefahrenen Rampe, beispielsweise mit einer Erkennung durch ein GPS-System, mit der Annäherung an die Rampe oder mit einem Stopp im Bereich der Rampe die zuvor abgespeicherte automatische Niveauänderung herbeigeführt werden kann. Möglich ist aber auch, dass eine Niveauhöhe mit der Annäherung an die Rampe erkannt wird, insbesondere mittels einer Kamera, womit dann eine automatische Niveauänderung herbeigeführt wird, welche aus einem einmal aufgenommenen Bild bestimmt wird oder mit der Veränderung unter weiterer Überwachung des sich ergebenden Bildes mit einer Regelung herbeigeführt wird.

Für einen alternativen oder kumulativen Vorschlag weist die Steuereinrichtung eine Steuerlogik auf, die für eine dynamische Niveauregelung im Fahrbetrieb ein Steuersignal für den Aktuator erzeugt. Auf Grundlage des Steuersignals verändert der Aktuator die Relativstellung des Ventilelements und des Gegen-Ventilelements so, dass sich eine Veränderung der Relativstellung des Ventilelements und des Gegen-Ventilelements ergibt, deren Betrag größer ist als der Betrag der Veränderung der Relativstellung des Ventilelements und des Gegen-Ventilelements, die sich bei rein mechanischer Niveauregelung ergeben hätte. Um lediglich ein nicht beschränkendes Beispiel zu nennen, kann im Fahrbetrieb eine kleine Niveauänderung bei rein mechanischer Niveauregelung dazu führen, dass zwar ein Belüftungsquerschnitt geöffnet wird, der aber für die kleine Niveauänderung verhältnismäßig klein ist, so dass die Niveauanpassung relativ langsam und mit kleiner Dynamik erfolgen würde. In diesem Fall kann das Steuersignal den Aktuator so ansteuern, dass dieses die Relativstellung des Ventilelements und des Gegen-Ventilelements so verändert, dass sich ein größerer Öffnungsquerschnitt ergibt, womit vereinfacht gesagt, auch simuliert werden kann, dass eine größere Abweichung des Ist-Niveaus vom Referenzniveau vorliegt. Die Vergrößerung des Ventilquerschnitts hat zur Folge, dass eine schnellere, dynamischere Niveauänderung erfolgt. Ist dann das Referenzniveau wieder erreicht, kann eine Rückstellung des Aktuators durch ein entsprechend von der Steuerlogik ermitteltes Steuersignal erfolgen.

Grundsätzlich sind beliebige Überlagerungen der elektronischen Niveauregelung infolge des Zusammenwirkens der elektronischen Steuereinrichtung mit der Steuerlogik, dem Steuersignal und dem Aktuator einerseits und der rein mechanischen Niveauregelung andererseits denkbar, wobei auch mit der elektronischen Niveauregelung eine Korrektur der mechanischen Niveauregelung erfolgen kann. Für einen weiteren Vorschlag der Erfindung erzeugt die Steuerlogik der Steuereinrichtung für eine dynamische Niveauregelung im Fahrbetrieb ein Steuersignal, auf Grundlage dessen der Aktuator die Relativstellung des Ventilelements und des Gegen-Ventilelements so verändert, dass das Ventilelement und das Gegen-Ventilelement in der ersten Relativstellung bleiben oder in diese überführt werden, obwohl sich diese bei rein mechanischer Niveauregelung in der zweiten oder dritten Relativstellung befinden würden. Um auch hier ein nicht beschränkendes Beispiel für eine erfindungsgemäß ermöglichte Funktion zu nennen, tritt im Fahrbetrieb ein unerwünschtes so genanntes "Cycling" auf, bei welchem Oszillationen des Fahrzeugaufbaus um eine Fahrzeuglängs-oder -querachse zu einem sukzessiven Be- und Entlüften der Luftfederbälge bei rein mechanischer Niveauregelung führen, womit ein unerwünschter hoher Druckluftverbrauch verbunden ist. Ein derartiges Cycling tritt bspw. infolge von Oszillationen um die Roll-Achse bei dem Durchfahren einer Kurve oder Oszillationen um die Nick-Achse beim Abbremsen des Fahrzeugs an einer Ampel auf. Erfindungsgemäß kann die Steuerlogik in derartigen Betriebssituationen, welche auf Grundlage von ohnehin bspw. über ein Bussystem bekannten Informationen festgestellt werden können, den Aktuator zur Herbeiführung der ersten Relativstellung ansteuern, womit die Luftfederbälge abgesperrt sind und der unerwünschte Druckluftverbrauch nicht eintritt.

Für einen kumulativen oder alternativen Lösungsvorschlag weist die Steuereinrichtung Steuerlogik auf, die bei einer Erkennung eines Fahrbeginns ein Steuersignal für den Aktuator erzeugt. Auf Grundlage dieses Steuersignals verändert dann der Aktuator die Relativstellung des Ventilelements und des Gegen-Ventilelements so, dass sich eine vordefinierte Fahrhöhe ergibt (was auch als so genannte "Reset-to-Ride-Funktion" bezeichnet wird). Dies kann beispielsweise nach der manuellen oder automatischen Rampenanpassung mit Aufnahme des Fahrbetriebs der Fall sein. Die Erkennung des Fahrbeginns kann hierbei durch die elektronische Steuereinheit für die Niveauregelventileinrichtung selbst erfolgen, wenn dieser entsprechende Signale, auf Grundlage welcher der Fahrbeginn erkannt werden kann, zugeführt werden. Ebenfalls möglich ist die Erkennung eines Fahrbeginns durch eine andere elektronische Steuereinheit, wobei diese andere elektronische Steuereinheit dann ein Auslösesignal an die elektronische Steuereinrichtung der Niveauregelventileinrichtung sendet, auf Grundlage dessen dann das Steuersignal zur Aussteuerung der vordefinierten Fahrhöhe ermittelt wird. Eine Erkennung des Fahrbeginns kann beispielsweise durch Erfassung eines Bremslichtschalters oder -signals, einer Betätigung der Zündung, einer Betätigung des Gaspedals, einer Fahrersitzbelegungserkennung, eines Einlegens eines Ganges, eines Überschreitens einer Schwellgeschwindigkeit oder einer Veränderung des geodätischen Ortes des Fahrzeugs erfolgen.

Möglich für die Ausbildung des Fahrzeugs insbesondere als Bus oder Schienenfahrzeug ist auch, dass eine Absenkung des Niveaus erfolgt (was auch ein Verkippen des Fahrzeugaufbaus umfasst), um das Ein- und/oder Aussteigen der Passagiere zu vereinfachen. In diesem Zusammenhang schlägt die Erfindung vor, dass die Steuerlogik der elektronischen Steuereinrichtung für eine Erkennung eines bevorstehenden Einsteigens oder Aussteigens von Passagieren ein Steuersignal für den Aktuator erzeugt. Auf Grundlage des Steuersignals verändert der Aktuator die Relativstellung des Ventilelements und des Gegen-Ventilelements so, dass sich eine reduzierte Fahrhöhe ergibt, welche das Einsteigen oder Aussteigen vereinfacht. Eine Erkennung des (bevorstehenden) Einsteigens oder Aussteigens kann hierbei erfolgen auf Grundlage eines von dem Fahrer manuell vorgegebenen Signals oder einer Betätigung eines Schalters durch einen Passagier in dem Fahrzeug zur Indikation, dass dieser aussteigen möchte, oder durch eine Person außerhalb des Fahrzeugs, welche in das Fahrzeug einsteigen möchte. Alternativ oder kumulativ möglich ist, dass für eine Erkennung eines Endes eines Einsteigens oder Aussteigens von Passagieren die Steuerlogik ein Steuersignal für den Aktuator erzeugt. Auf Grundlage dieses Steuersignals verändert dann der Aktuator die Relativstellung des Ventilelements und des Gegen-Ventilelements so, dass sich eine vordefinierte Fahrhöhe ergibt. Hierbei erfolgt die Erkennung vorzugsweise durch Auswertung eines von dem Fahrer vorgegebenen Signals.

Wie zuvor erwähnt kann der Aktuator als elektrischer Aktuator, elektrischer Linearantrieb oder elektrischer Rotationsantrieb u. ä. ausgebildet sein. Für einen Vorschlag der Erfindung ist der Aktuator als pneumatisch betriebener Aktuator ausgebildet. Somit erfordert der Aktuator keine zusätzliche elektrische Energie, um eine Stellbewegung herbeizuführen. Vielmehr nutzt der Aktuator die ohnehin vorhandene pneumatische Energie zur Erzeugung der Stellbewegung. In diesem Fall erfolgt lediglich eine elektronische Steuerung der Aktivierung und Deaktivierung der pneumatischen Energie, womit insbesondere eine elektronisch gesteuerte pneumatische Beaufschlagung des pneumatisch betriebenen Aktuators mittels geeignet elektronisch gesteuerter Ventile erfolgt. Hierbei können binäre Betriebszustände (Druckbeaufschlagung oder keine Druckbeaufschlagung), beliebige gestufte Betriebszustände mit unterschiedlichen beaufschlagenden Drücken oder stufenlos veränderbare Betriebszustände des Aktuators Einsatz finden.

In bevorzugter Ausgestaltung ist ein derartiger pneumatisch betriebener Aktuator als Lamellenmotor (vgl. https://de.wikipedia.org/wiki/Lamellenmotor; Datum der Einsichtnahme: 16.02.2016) oder als Hubkolbenmotor (vgl. https://de.wikipedia.org/wiki/Hubkolbenmotor; Datum der Einsichtnahme: 16.02.2016) ausgebildet. Hierbei kann der pneumatische Antrieb durch entgegengesetzte Druckbeaufschlagung in unterschiedliche Richtungen bewegt werden. Möglich ist auch, dass mit einer Druckbeaufschlagung eine Bewegung in eine erste Richtung gegen eine Feder herbeigeführt wird, während eine Druckminderung infolge der Feder zu einer Rückstellbewegung führt.

Für eine andere Ausgestaltung der Niveauregelventileinrichtung ist der pneumatisch betriebene Aktuator ein pneumatisch beaufschlagbarer Stellkolben. In diesem Fall wirkt der den Aktuator bildende pneumatisch beaufschlagbare Stellkolben das Gegen-Ventilelement, dessen durch die Druckbeaufschlagung herbeigeführte Bewegung eine Veränderung der Referenzlage zur Folge hat.

Grundsätzlich möglich ist, dass je nach Druckverhältnissen der pneumatische Stellkolben stufenlos oder in einer beliebigen Anzahl von Stufen unterschiedliche Betriebsstellungen einnimmt, welche mit unterschiedlichen Referenzlagen korrelieren. Für einen Vorschlag der Erfindung gibt der pneumatisch beaufschlagbare Stellkolben in nicht pneumatisch beaufschlagter Betriebsstellung eine erste Referenzlage vor. Für eine erste pneumatisch beaufschlagte Betriebsstellung gibt der Stellkolben eine zweite Referenzlage vor. Mit einer zweiten pneumatisch beaufschlagten Betriebsstellung, die von der ersten pneumatisch beaufschlagten Betriebsstellung abweicht, gibt der Stellkolben eine dritte Referenzlage vor.

Um lediglich ein nicht beschränkendes Beispiel zu nennen, kann die erste Referenzlage eine mittige Referenzlage sein, während die zweite Referenzlage und die dritte Referenzlage einem gegenüber der ersten Referenzlage erhöhten und verringerten Niveau entsprechen. Die zweite und dritte pneumatisch beaufschlagte Betriebsstellung können sich hierbei durch eine Druckbeaufschlagung des Stellkolbens in unterschiedliche, entgegengesetzte Richtungen unterscheiden. Möglich ist aber auch, dass eine erste Referenzlage einem maximalen [oder minimalen] Niveau entspricht, während die zweite Referenzlage einem reduzierten [oder erhöhten] Niveau entspricht und die dritte Referenzlage einem weiter reduzierten [oder weiter erhöhten] Niveau entspricht und/oder in einer pneumatisch beaufschlagten Betriebsstellung derselbe Druck wirkt wie in einer anderen pneumatisch beaufschlagten Betriebsstellung, aber dieser Druck dann auf unterschiedliche Flächen wirkt. Hierbei können die unterschiedlichen Referenzlagen durch Anschläge des Stellkolbens vorgegeben sein oder sich aus einem Kräftegleichgewicht einerseits der durch den Druck auf den Stellkolben bewirkten Druckkraft und andererseits einer (unmittelbar oder mittelbar) auf den Stellkolben wirkenden Kraft mindestens einer Feder ergeben.

Für einen besonderen Vorschlag der Erfindung erfolgt die Veränderung der Referenzlage des mechanischen Niveauregelventils über eine Veränderung der Position eines das Gegen-Ventilelement bildenden Ventilsitzkörpers über den Aktuator. Während dies mittels beliebiger Antriebskinematiken zwischen Aktuator und Ventilsitzkörper zwischengeschalteten Getrieben erfolgen kann, wird in weiterer Ausgestaltung der Erfindung eine Drehbewegung des Aktuators über einen Spindeltrieb umgewandelt in eine translatorische Bewegung des Ventilsitzkörpers. Mittels eines derartigen Spindeltriebs kann unter Umständen eine (je nach Steigung des Gewindes des Spindeltriebs) feinfühlige Einstellung der Position des Ventilsitzkörpers und damit der Referenzlage erfolgen. Andererseits kann durch Einsatz des Spindeltriebs auch auf einfache Weise eine Selbsthemmung herbeigeführt werden, für welche auch bei nicht vorhandener elektrischer Leistungsversorgung mittels des Spindeltriebs eine von dem Ventilsitzkörper eingenommene Position gehalten wird.

Ein weiterer Vorschlag der Erfindung betrifft eine besondere Weise zur Umwandlung der Drehbewegung der Antriebswelle infolge der Veränderung des Niveaus der Fahrzeugachse oder des Fahrzeugrades. Für diesen Vorschlag der Erfindung wird eine Verdrehung der Antriebswelle über einen Spindeltrieb umgewandelt in eine translatorische Bewegung des Ventilelements, insbesondere eines Ventilstößels.

Vorteilhafte Weiterbildungen der Erfindung ergeben sich aus den Patentansprüchen, der Beschreibung und den Zeichnungen. Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Ohne dass hierdurch der Gegenstand der beigefügten Patentansprüche verändert wird, gilt hinsichtlich des Offenbarungsgehalts der ursprünglichen Anmeldungsunterlagen und des Patents Folgendes: weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Element die Rede ist, ist dies so zu verstehen, dass genau ein Element, zwei Elemente oder mehr Elemente vorhanden sind. Diese Merkmale können durch andere Merkmale ergänzt werden oder die einzigen Merkmale sein, aus denen das jeweilige Erzeugnis besteht.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1 und 2**: zeigen schematisch nicht vom Wortlaut der Patentansprüche umfasste Niveauregelventileinrichtungen, bei welchen ein elektronisch steuerbarer Aktuator in einem mechanischen Kopplungsmechanismus zwischen einem Fahrzeugrad oder einer Fahrzeugachse und einem Niveauregelventil angeordnet ist.
- **Fig. 3**: zeigt einen Längsschnitt durch eine als Niveauregelventil ausgebildete Niveauregelventileinrichtung mit einem Aktuator, welcher ein Planetengetriebe aufweist.
- **Fig. 4**: zeigt einen Schnitt IV durch das Niveauregelventil gemäß Fig. 3.
- **Fig. 5**: zeigt schematisiert das Planetengetriebe gemäß Fig. 3 und 4.
- **Fig. 6**: zeigt schematisch eine weitere Ausführungsform eines Niveauregelventils mit einem Aktuator, der ein Planetengetriebe aufweist.
- **Fig. 7**: zeigt einen Schnitt VII des Niveauregelventils gemäß Fig. 6.
- **Fig. 8**: zeigt schematisiert das **Planetengetriebe** gemäß Fig. 6 und 7.
- **Fig. 9**: zeigt schematisiert eine weitere Ausführungsform eines in einem Aktuator einsetzbaren Planetengetriebes.
- **Fig. 10 und 11**: zeigen weitere **Ausführungsformen** eines Niveauregelventils.
- **Fig. 12**: zeigt in einem Querschnitt XII-XII schematisch ein Niveauregelventil in Scheibenbauweise.
- **Fig. 13**: zeigt das Niveauregelventil gemäß Fig. 12 in einem Längsschnitt XIII-XIII.
- **Fig. 14 bis 21**: zeigen schematisch unterschiedliche Ausgestaltungen eines Steuerkreises für eine Luftfederungsanlage eines Nutzfahrzeugs mit einer Steuereinrichtung und einer hiervon angesteuerten Niveauregelventileinrichtung.
- **Fig. 22 bis 24**: zeigen weitere Ausführungsformen eines Niveauregelventils.
- **Fig. 25**: zeigt einen Schnitt XXV-XXV durch das Niveauregelventil gemäß Fig. 24.
- **Fig. 26**: zeigt schematisch eine Luftfederungsanlage mit einem mechanischen Niveau-regelventil mit einem integrierten Aktuator, über welchen eine mit einem Referenzniveau der Luftfederungsanlage korrelierende Referenzlage des mechanischen Niveauregelventils veränderbar ist.

### FIGURENBESCHREIBUNG

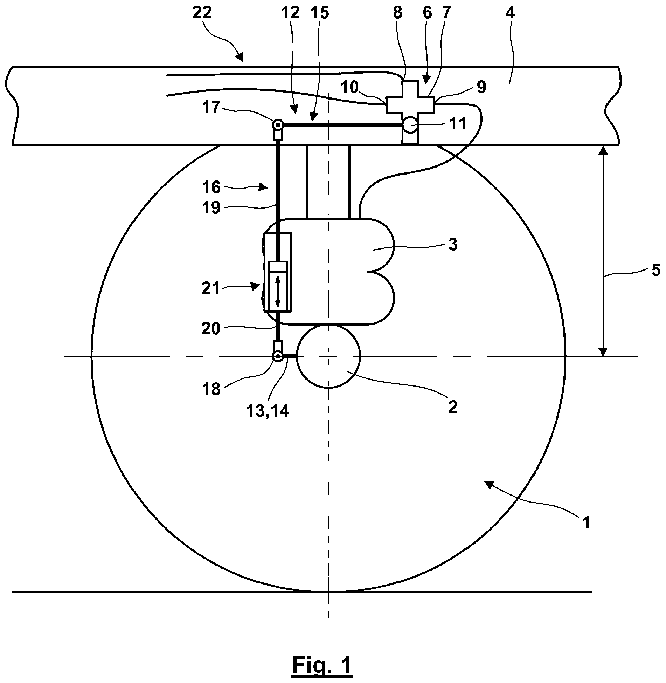

**Fig. 1****,** welche eine nicht vom Wortlaut der Patentansprüche umfasste Ausführungsform zeigt, zeigt stark schematisiert in einem Ausschnitt eines Nutzfahrzeugs die Abstützung eines Fahrzeugrads 1 oder einer Fahrzeugachse 2 über einen Luftfederbalg 3 an einem Fahrzeugrahmen 4 oder Fahrzeugaufbau. Über eine Be- und Entlüftung des Luftfederbalgs 3 kann die Veränderung eines Niveaus 5, welches den Abstand der Rotationsachse des Fahrzeugrads 1 oder der Fahrzeugachse 2 von dem Fahrzeugrahmen 4 beschreibt, verändert werden. Die Be- oder Entlüftung kann hierbei bspw. erfolgen, um dynamische Niveauänderungen infolge einer Beschleunigung, eines Abbremsens, bei Kurvenfahrt, bei unebener Fahrbahn auszugleichen oder gezielt eine Niveauänderung, bspw. manuell durch einen Benutzer für das Anheben des Fahrzeugrahmens 4 auf die Höhe einer Rampe oder zur Veränderung des Niveaus 5 bei der Fahrt auf einer Autobahn oder in Abhängigkeit der Unebenheiten der Fahrbahn, herbeizuführen. Hierbei erfolgt eine Veränderung eines Ist-Niveaus in Richtung eines fest vorgegebenen oder vom Benutzer oder über eine Steuereinheit veränderbaren Referenzniveaus.

Die Steuerung der Be- und Entlüftung des Luftfederbalgs 3 erfolgt über ein Niveauregelventil 6. Dieses ist als singuläre Baueinheit ausgebildet, welche unter Umständen auch modular ausgebildet sein kann, und verfügt über ein Gehäuse 7, mit dem das Niveauregelventil 6 an dem Fahrzeugrahmen 4 befestigt und fixiert ist. Das Niveauregelventil 6 besitzt pneumatische Anschlüsse, hier einen Anschluss 8 für eine Verbindung mit einer Druckluftquelle, einen Anschluss 9 für eine Verbindung mit dem Luftfederbalg 3 und einen Anschluss 10 für die Verbindung mit einem anderen, einer anderen Fahrzeugachse oder einem anderen Fahrzeugrad zugeordneten Luftfederbalg (hier nicht dargestellt). Des Weiteren weist das Niveauregelventil 6 eine verdrehbare Antriebswelle 11 auf, wobei über die Verdrehung der Antriebswelle 11 die Be- und Entlüftung sowie das Absperren des Luftfederbalgs 3 mechanisch gesteuert wird.

Die Antriebswelle 11 ist über einen mechanischen Kopplungsmechanismus 12 mit einem Antriebselement 13 mechanisch gekoppelt, welches von der Fahrzeugachse 2 oder dem Fahrzeugrad 1 getragen wird und mit der Niveauänderung vertikal bewegt wird, ohne sich mit der Drehung des Fahrzeugrads 1 mitzudrehen. Für das Ausführungsbeispiel gemäß Fig. 1 ist das Antriebselement 13 als Antriebsstrebe 14 ausgebildet, welche in einem Endbereich an der Fahrzeugachse 2 oder dem Fahrzeugrad 1 angelenkt ist.

Der Kopplungsmechanismus 12 weist zwei Koppelstangen 15, 16 auf, die über ein Gelenk 17 verschwenkbar miteinander verbunden sind. Die Koppelstange 15 ist in dem dem Gelenk 17 abgewandten Endbereich an der Antriebswelle 11 befestigt, so dass die Verschwenkung der Koppelstange 15 der Verschwenkung der Antriebswelle 11 entspricht. Die Koppelstange 16 ist in dem dem Gelenk 17 abgewandten Endbereich über ein Gelenk 18 an der Antriebsstrebe 14 angelenkt. Eine Veränderung des Niveaus 5 führt zu einer Veränderung der Winkel zwischen der Antriebsstrebe 14, der Koppelstange 15 und der Koppelstange 16 und damit zu einer Verdrehung der Antriebswelle 11.

Für das Ausführungsbeispiel gemäß Fig. 1 besitzt die Koppelstange 16 zwei Koppelstangenteile 19, 20. Die Koppelstangenteile 19, 20 sind über einen Aktuator 21 miteinander verbunden. Der Aktuator 21 ist elektronisch angesteuert zur Veränderung seiner Länge, womit sich der Abstand der Koppelstangenteile 19, 20 verändert und sich die Länge der Koppelstange 16 verändert. Somit kann auch durch Ansteuerung des Aktuators 21 (unabhängig von einer Veränderung des Niveaus 5) eine Verdrehung der Antriebswelle 11 herbeigeführt werden, womit elektronisch eine Be- oder Entlüftung oder ein Absperren des Luftfederbalgs 3 herbeigeführt werden kann und eine Veränderung eines Referenzniveaus erfolgen kann.

Als Aktuator 21 kann ein beliebiger Aktuator zur Erzeugung eines Längs-Stellwegs verwendet werden. Um lediglich ein Beispiel zu nennen, kann der Aktuator 21 als einfach gegen eine Feder wirkender Pneumatikzylinder oder als doppelt wirkender Pneumatikzylinder ausgebildet sein, dessen Stellweg durch die elektronische Ansteuerung mindestens eines Magnetventils gesteuert wird. Ebenfalls möglich ist, dass hier ein Spindeltrieb, ein Stellmotor mit Schraubengetriebe oder ein Schrittmotor zur Erzeugung eines Stellwegs in Längsrichtung Einsatz finden kann, um lediglich einige nicht beschränkende Beispiele zu nennen. Abweichend zu Fig. 1 kann alternativ oder kumulativ auch ein Aktuator 21 zur Herbeiführung einer Veränderung der Länge der Koppelstange 15 in die Koppelstange 15 integriert sein. Eine Übertragung eines pneumatischen und/oder elektrischen Signals zur Ansteuerung des Aktuators 21 kann über eine freie Leitung erfolgen oder durch eine in den Kopplungsmechanismus 12 integrierte oder an diesem angebrachte Leitung.

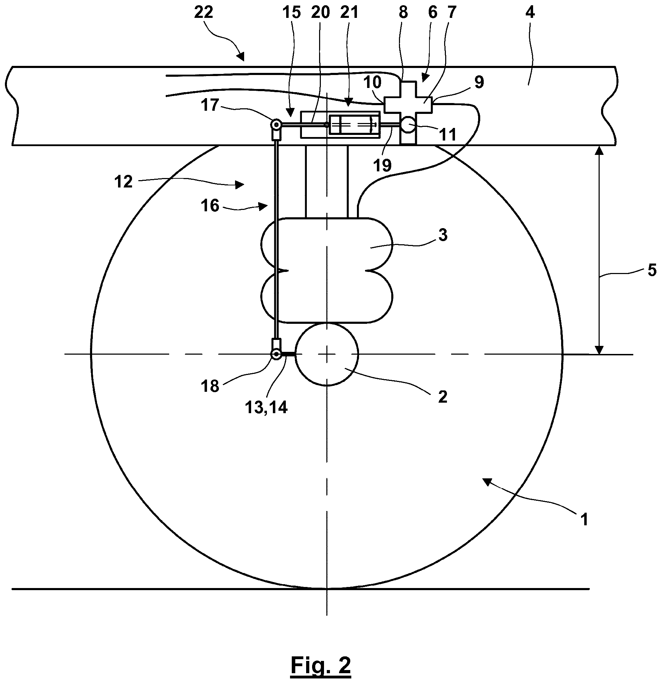

Während für das Ausführungsbeispiel gemäß **Fig. 2****,** welches nicht vom Wortlaut der Patentansprüche umfasst ist, grundsätzlich das zu Fig. 1 Gesagte gilt, findet hier in der Koppelstange 15 ein die Koppelstangenteile 19, 20 verbindender Aktuator 21 Einsatz, welcher nicht die Länge der Koppelstange 15 verändert, sondern vielmehr den Winkel zwischen den Koppelstangenteilen 19, 20, womit auch eine Verdrehung der Antriebswelle 11 unabhängig von einer Veränderung des Niveaus 5 herbeigeführt werden kann. Möglich ist auch, dass in mindestens einer Koppelstange 15, 16 mindestens ein Aktuator 21 Einsatz findet, über welchen sowohl eine Verstellung der Länge der Koppelstange als auch eine Veränderung der Winkelstellung der Koppelstangenteile dieser Koppelstange erfolgt.

Für Fig. 1 und 2 ist die erfindungsgemäße Niveauregelventileinrichtung 22 mit dem Niveauregelventil 6, dem mechanischen Kopplungsmechanismus 12 und dem darin integrierten Aktuator 21 gebildet. Hierbei kann das Niveauregelventil 6 grundsätzlich entsprechend einem herkömmlichen Niveauregelventil ausgebildet sein. Obwohl die Niveauregelventileinrichtung 22 sowohl die mechanische Steuerung über die mechanische Kopplung mit dem Fahrzeugrad 1 oder der Fahrzeugachse 2 ermöglicht, besitzt das Niveauregelventil 6 vorzugsweise keine elektronischen Komponenten, keinen elektronischen Steueranschluss und keine Steuereinheit. Vielmehr sind hier die elektronisch gesteuerten Komponenten in den mechanischen Kopplungsmechanismus 12 integriert.

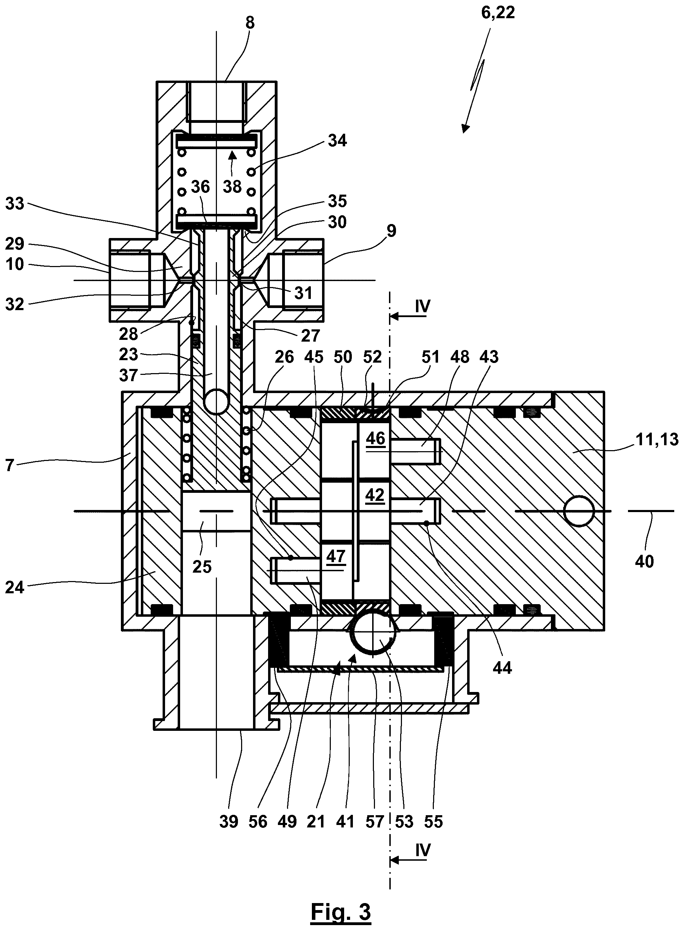

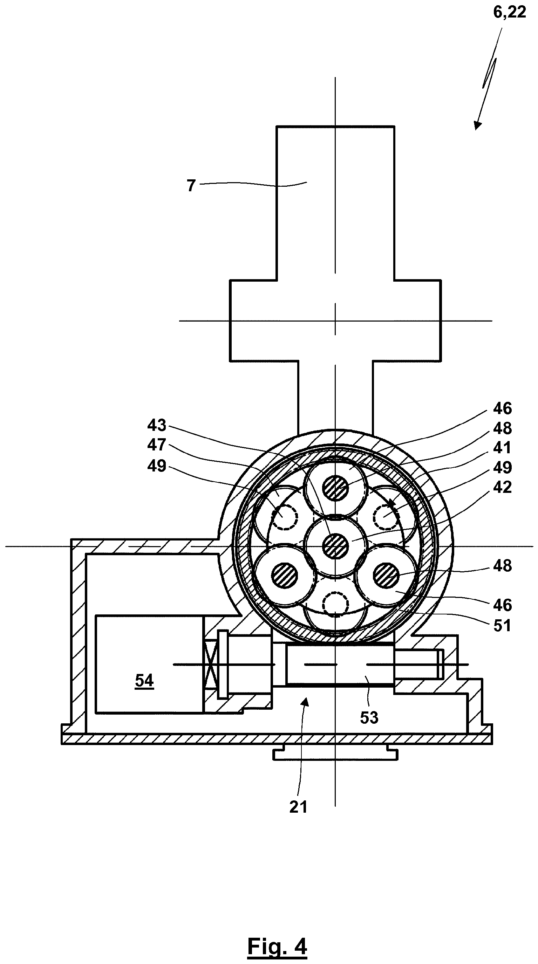

Die folgenden **Fig. 3 bis 13** zeigen hingegen Ausführungsformen, bei welchen die Niveauregelventileinrichtung 22, die sowohl die mechanische Niveauregelung je nach Niveau 5 als auch die elektronische Niveauregelung ermöglicht, von dem Niveauregelventil 6 gebildet ist. In diesem Fall bildet die Antriebswelle 11 des Niveauregelventils 6 das Antriebselement 13, dessen relative Lage gegenüber dem Ventilelement 23 auf elektronische Weise steuerbar sein soll.

Für das Ausführungsbeispiel gemäß Fig. 3 ist das Niveauregelventil 6 in Bauweise als Schieberventil ausgebildet. In dem Gehäuse 7 des Niveauregelventils 6 ist verdrehbar ein Betätigungselement 24 gelagert. Dieses verfügt über einen Exzenter oder Nocken 25, an den über eine Feder 26 das Ventilelement 23, hier ein Ventilschieber 27, angepresst wird. Je nach Drehwinkel des Betätigungselements 24 schiebt der Exzenter 25 das Ventilelement 23 in Längsrichtung einer Bohrung 28 des Gehäuses 7, welche ein Gegen-Ventilelement 29 bildet. Für die in Fig. 3 dargestellte Betriebsstellung verschließt eine Steuerkante 30 die Mündungen 31, 32 der Anschlüsse 9, 10 in die Bohrung 28, wobei hier zwischen der Mündung 31, 32 und den Anschlüssen 9, 10 jeweils eine Drossel vorhanden ist. Erfolgt eine Verschwenkung des Exzenters 25 derart, dass sich das Ventilelement 23 nach unten bewegen kann, gibt die Steuerkante 30 des Ventilelements 23 die Mündungen 31, 32 frei, womit die Anschlüsse 9, 10 mit einem zwischen dem Ventilelement 23 und dem Gegen-Ventilelement 29 ausgebildeten Ringraum 33 verbunden werden. Mit der Bewegung nach unten löst sich die Stirnseite des Ventilelements 23 von einem über eine Feder 34 gegen ein Ventilsitz 35 des Gehäuses 7 gepressten Ventilteller 36, womit eine Verbindung zwischen dem Ringraum 33 und einer entlüftenden Innenbohrung 37 des Ventilelements 23 geschaffen wird. Somit können die Anschlüsse 9, 10 (und damit die hiermit verbundenen Luftfederbälge 3) über die Drossel, die Mündungen 31 bzw. 32, den Ringraum 33 und die entlüftende Innenbohrung 37 entlüftet werden. Erfolgt hingegen ein Verdrehung des Exzenters 25 derart, dass sich aus der Stellung gemäß Fig. 3 das Ventilelement 23 nach oben bewegt, drückt das Ventilelement 23 den Ventilteller 36 von dem Ventilsitz 35 weg. Dies hat zur Folge, dass an dem Anschluss 8 anstehende Druckluft über ein Rückschlagventil 38, den Übertrittsquerschnitt zwischen dem Ventilteller 36 und dem Ventilsitz 35, den Ringraum 33 und die Mündungen 31, 32 zu den Anschlüssen 9, 10 gelangen kann, womit eine Belüftung der Luftfederbälge 3 erfolgt.

Die Relativstellung des Ventilelements 23, hier des Ventilschiebers 27, ggf. mit dem Ventilteller 36, und des Gegen-Ventilelements 29, welches hier von dem Gehäuse 7 ausgebildet ist, gibt somit vor, ob eine Belüftung, Entlüftung oder Absperrung der Luftfederbälge erfolgt:
In der ersten Relativstellung 84, die in Fig. 3 dargestellt ist, erfolgt über die Steuerkante 30 ein Absperren der Anschlüsse 9, 10, die zu den Luftfederbälgen 3 führen. Diese erste Relativstellung ist erreicht, wenn das Ventilelement mit der Steuerkante 30 des Ventilschiebers 27 in Höhe der Mündungen 31, 32 des Gegen-Ventilelements 29, hier des Gehäuses 7, angeordnet ist.

Wird das Ventilelement 23 aus der Stellung gemäß Fig. 3 nach oben bewegt, wird eine zweite Relativstellung erreicht, in welcher zur Belüftung der Luftfederbälge 3 die Anschlüsse 9, 10 mit dem Anschluss 8 verbunden sind. In der zweiten Relativstellung ist das Ventilelement 23 mit den gemeinsam bewegten Ventilschieber 27 und dem Ventilteller 36 gebildet. Der belüftende Übertrittsquerschnitt ist dann zwischen dem Ventilelement 23 mit dem Ventilteller 36 und dem Gegen-Ventilelement 29, hier dem Ventilsitz 35, gebildet. Für das dargestellte Ausführungsbeispiel vergrößert sich der Übertrittsquerschnitt mit zunehmender Bewegung des Ventilelements 23 nach oben.

Schließlich wird die dritte Relativstellung, in der die Anschlüsse 9, 10 für die Luftfederbälge 3 entlüftet werden, erreicht, wenn sich das Ventilelement 23 mit der Steuerkante 30 von den Mündungen 31, 32 nach unten weg bewegt hat und sich auch die Stirnseite des Ventilelements 23, hier des Ventilschiebers 27, von dem Ventilteller 36, welcher hier unbeweglicher Bestandteil des Gegen-Ventilelements 29 ist, weg bewegt hat. Die entlüftende Innenbohrung 37 ist auf nicht dargestellte Weise mit Anschluss 39 für eine Entlüftung verbunden. Für das dargestellte Ausführungsbeispiel vergrößert sich der entlüftende Querschnitt zwischen der Stirnseite des Ventilelements 23 und dem Ventilteller 36 mit zunehmender Bewegung des Ventilelements 23 nach unten.

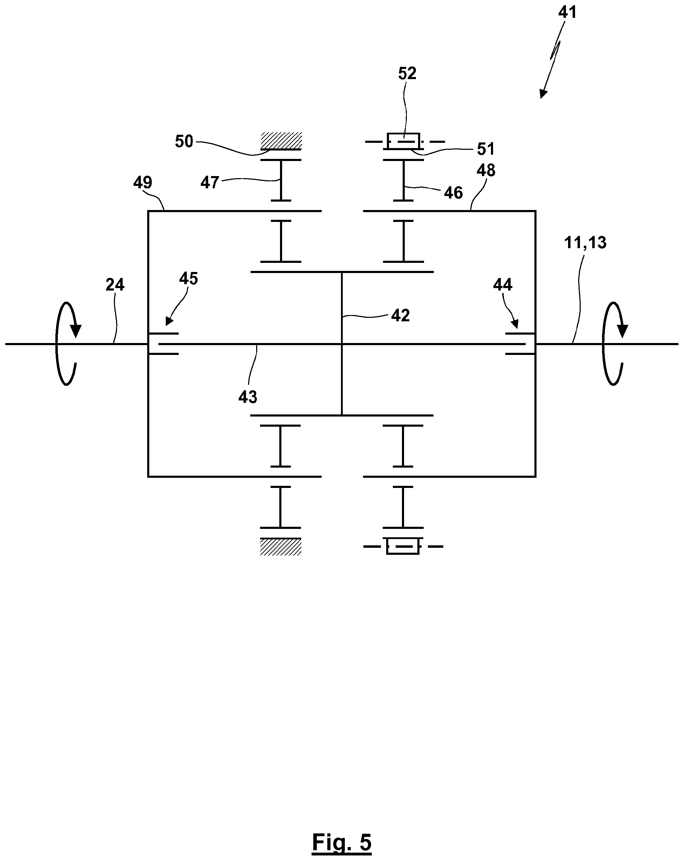

Erfolgt eine elektronische Steuerung des Niveaus außerhalb des Niveauregelventils 6, bspw. gemäß Fig. 1 und 2, kann das Betätigungselement 24 drehfest oder einstückig mit der Antriebswelle 11 ausgebildet sein. Hingegen erfolgt gemäß Fig. 3 die elektronische Niveauregelung durch Veränderung des relativen Drehwinkels zwischen der Antriebswelle 11, an welcher der Kopplungsmechanismus 12 angelenkt ist, und dem Betätigungselement 24. Zu diesem Zweck sind das Betätigungselement 24 und die Antriebswelle 11 um eine gemeinsame Rotationsachse 40 verdrehbar. Zwischen der Antriebswelle 11 und das Betätigungselement 24 ist ein Planetengetriebe 41 zwischengeordnet, dessen Aufbau in Fig. 5 schematisch dargestellt ist. Das Planetengetriebe 41 weist ein Sonnenrad 42 auf, welches mit einer Sonnenradwelle 43 in Lagern 44, 45 drehbar in der Antriebswelle 11 und dem Betätigungselement 24 gelagert ist. Hierbei ist das Sonnenrad 42 als doppeltes Sonnenrad mit zwei Sonnenradverzahnungen mit gleichen Durchmessern ausgestattet, die mit in parallelen Ebenen angeordneten Planetenrädern 46, 47 kämmen. Ein das Planetenrad 46 lagernder Steg 48 wird mit der Antriebswelle 11 verdreht. Entsprechend wird ein das Planetenrad 47 lagernder Steg 49 mit dem Betätigungselement 24 verdreht. Das Planetenrad 47 kämmt radial außenliegend mit einem gehäusefesten Hohlrad 50, während das Planetenrad 46 mit einem Hohlrad 51 kämmt, welches über ein Antriebsaggregat 54 verdrehbar ist. Hierzu besitzt das Hohlrad 51 eine Außenverzahnung 52, bspw. eine Schneckenverzahnung, über welche das Hohlrad 51 von einer Antriebswelle 53, hier eine Schneckenwelle, von dem Antriebsaggregat 54, hier ein Elektromotor, in beide Drehrichtungen angetrieben werden kann.

Die Funktionsweise des Niveauregelventils 6 ist wie folgt:
Ohne Verdrehung des Hohlrads 51 durch das Antriebsaggregat 54 erfolgt durch das Planetengetriebe 41 eine starre Kopplung der Antriebswelle 11 mit dem Betätigungselement 24, so dass eine herkömmliche mechanische Niveauregelung erfolgt. Hingegen kann durch Verdrehung des Hohlrads 51 eine Veränderung des relativen Drehwinkels der Antriebswelle 11 gegenüber dem Betätigungselement 24 herbeigeführt werden, so dass je nach elektronischer Ansteuerung des Antriebsaggregats 54 und je nach hierdurch herbeigeführte Verdrehung des Hohlrads 51 eine Verstellung des Referenzniveaus erfolgen kann und/oder gezielt eine erste, zweite oder dritte Relativstellung zwischen dem Ventilelement 23 und dem Gegen-Ventilelement 29 herbeigeführt werden kann. Für diese Ausführungsform bildet die Antriebswelle 11 das Antriebselement 13.

Gemäß Fig. 3 sind in das Niveauregelventil 6 Sensoren 55, 56 integriert, die hier als Hall-Sensoren ausgebildet sind. Der Sensor 55 erfasst hierbei den Drehwinkel des Antriebselements 13, während der Sensor 56 den Drehwinkel des Betätigungselements 24 erfasst. Für die Ausbildung der Sensoren 55, 56 als Hall-Sensoren besitzen das Antriebselement 13 und das Betätigungselement 24 im Bereich ihrer Mantelfläche einen Permanentmagneten, welcher wie dargestellt eng benachbart an dem Empfänger des Sensors 55, 56 vorbeigeführt ist.

Für das dargestellte Ausführungsbeispiel sind die Sensoren 55, 56 mit einer Platine 57 verbunden oder sogar von dieser getragen, welche vorzugsweise auch für die Ansteuerung des Antriebsaggregats 54 und die Auswertung der Signale der Sensoren 55, 56 verantwortlich ist. Das Niveauregelventil 6 weist in diesem Fall auch einen elektrischen Anschluss, insbesondere für eine Verbindung mit einem Datenbus, der Verbindung mit weiteren Steuereinheiten und/oder eine elektrische Leistungsversorgung, auf.

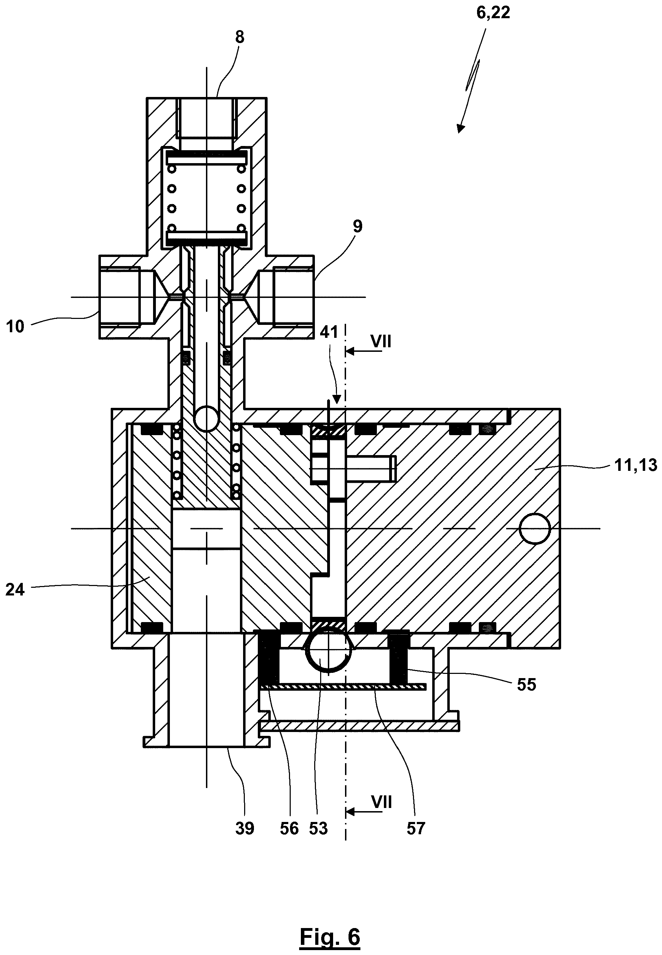

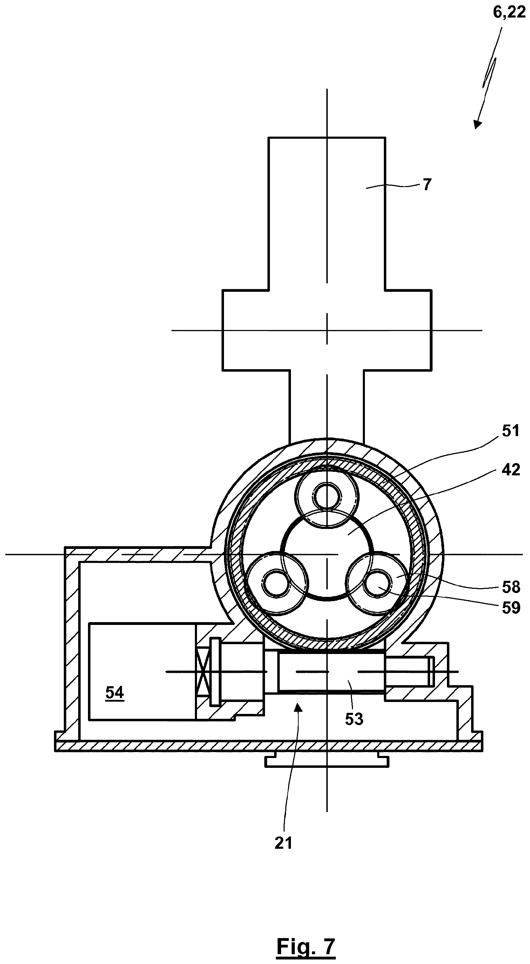

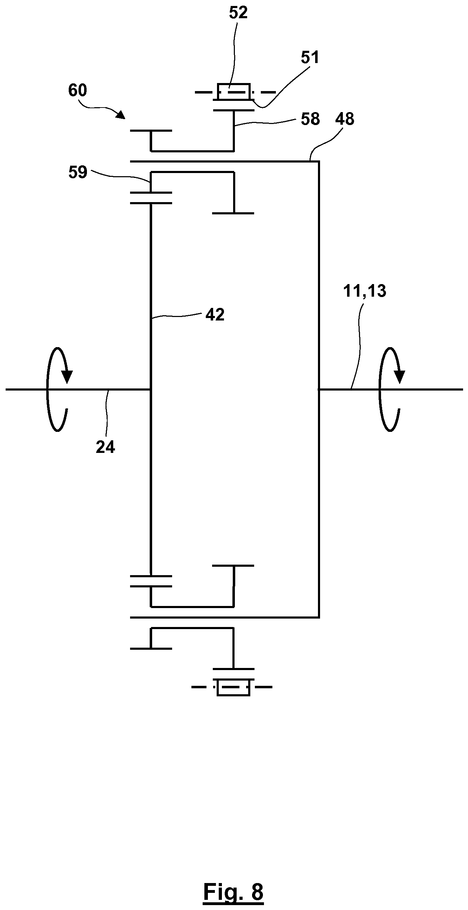

Fig. 6 und 7 zeigen ein Niveauregelventil 6, bei welchem (bei ansonsten Fig. 3 bis 6 entsprechender Ausgestaltung) zwischen das Antriebselement 13 und das Betätigungselement 24 ein anderes Planetengetriebe 41 zwischengeschaltet ist, welches in Fig. 8 schematisch dargestellt ist: Hier ist gegenüber dem mit dem Antriebselement 13 verdrehten Steg 48 ein mit zwei Planetenrädern 58, 59 ausgebildeter Doppelplanet 60 drehbar gelagert. Das Planetenrad 58 kämmt hierbei ausschließlich radial außenliegend mit dem Hohlrad 51, welches die Verzahnung 52 aufweist und von dem Antriebsaggregat 54 angetrieben ist. Hingegen kämmt das Planetenrad 59 ausschließlich radial innenliegend mit dem Sonnenrad 42, welches in diesem Fall drehfest mit dem Betätigungselement 24 verbunden ist. Durch geeignete Wahl des Radius des Stegs 48 und der Planetenräder 58, 59 kann die Übersetzung zwischen dem Antriebselement 13 und dem Betätigungselement 24 gewählt werden, wobei auch möglich ist, dass sich das Antriebselement 13 und das Betätigungselement 24 um denselben Winkel verdrehen. Auch hier kann durch Betätigung des Aktuators 21 eine Verstellung des Referenzniveaus erfolgen.

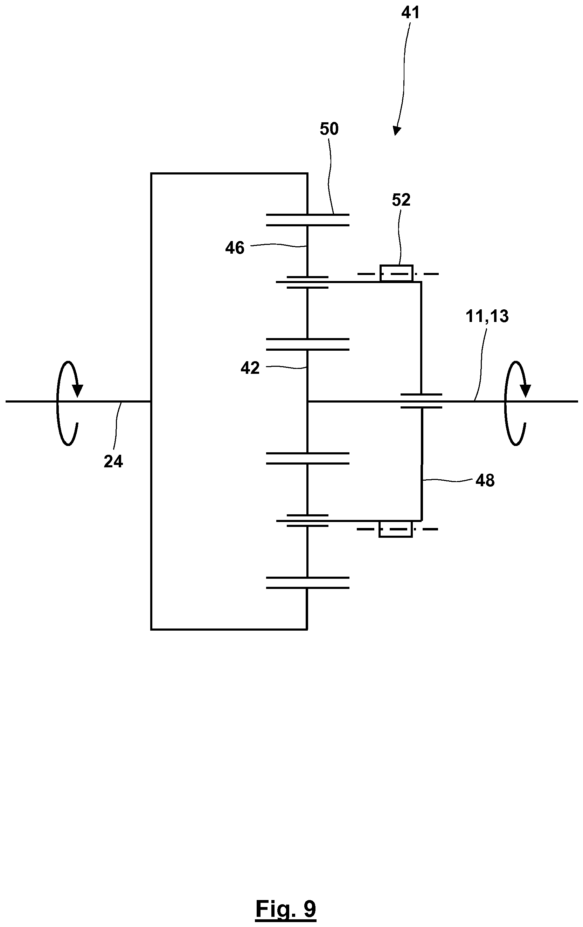

Fig. 9 zeigt schematisch ein weiteres in einem Niveauregelventil 6 zwischen einem Antriebselement 13 und einem Betätigungselement 24 einsetzbares Planetengetriebe 41. Hier treibt das Antriebselement 13 unmittelbar das Sonnenrad 42 an. Das Betätigungselement 24 ist fest mit dem Hohlrad 50 verbunden. Das einzige Planetenrad 46 (bzw. ein entsprechender Planetenradsatz) kämmt hier radial außenliegend mit dem Hohlrad 50 und radial innenliegend mit dem Sonnenrad 42. Der das Planetenrad 46 lagernde Steg 48 wird ohne elektronische Steuerung von dem Antriebsaggregat 54 festgehalten, während dieses mit elektronischer Steuerung und Antrieb des Antriebsaggregats 54 verdreht werden kann.

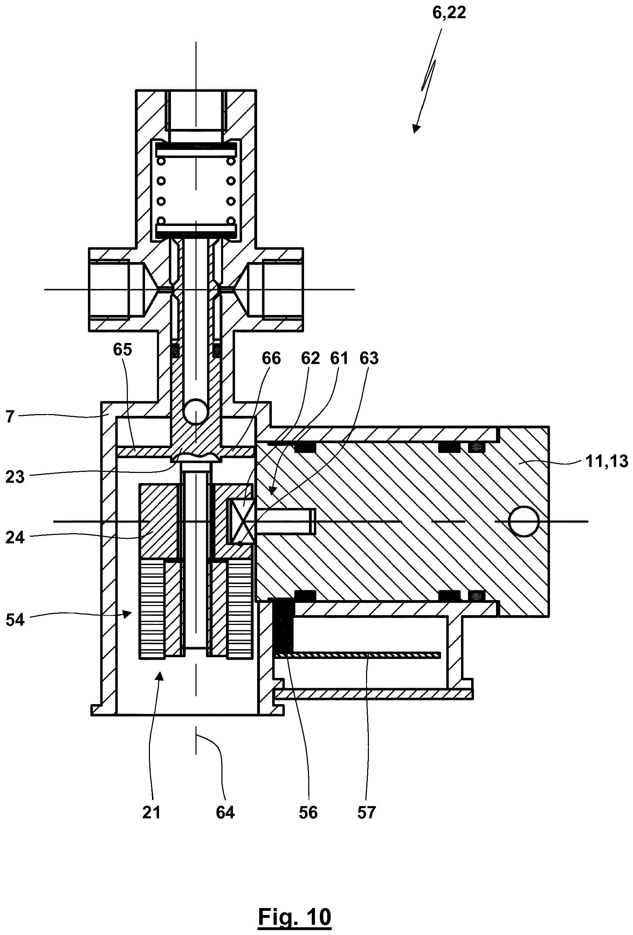

Fig. 10 zeigt eine abgewandelte Ausführungsform des Niveauregelventils 6, bei welcher die Verdrehung der Antriebswelle 11 über eine Antriebsverbindung 61 umgewandelt wird in eine translatorische Bewegung eines Betätigungselements 24. Die Antriebsverbindung 61 verfügt über einen Exzenter 62, der mit der Antriebswelle 11 verdreht wird. Der Exzenter 62 greift ein in eine Ausnehmung oder Nut 63 des Betätigungselements 24, womit die Verdrehung des Exzenters 62 die translatorische Bewegung des Betätigungselements 24 hervorrufen kann. In diesem Fall wirkt der Aktuator 21 zwischen dem Betätigungselement 24 und dem Ventilelement 23. Der Aktuator 21 erzeugt hierbei eine Längsverschiebung oder ein "Aus- und Einfahren" des Ventilelements 23 aus dem Betätigungselement 24. Beispielsweise ist der Aktuator hier als mittels eines Antriebsaggregats 54 angetriebener Spindeltrieb, Axialschrittmotor o. ä. ausgebildet. Eine Vermeidung einer Verdrehung des Betätigungselements 24 in dem Gehäuse 7 des Niveauregelventils 6 erfolgt hier durch exzentrische Anordnung der Betätigungsachse 64 für die translatorische Bewegung des Betätigungselements 24 und das Ein- und Ausfahren des Ventilelements 23 aus dem Betätigungselement 24 durch den Aktuator 21 sowie durch die Abstützung des Ventilelements 23 exzentrisch über Abstützflügel 65, 66.

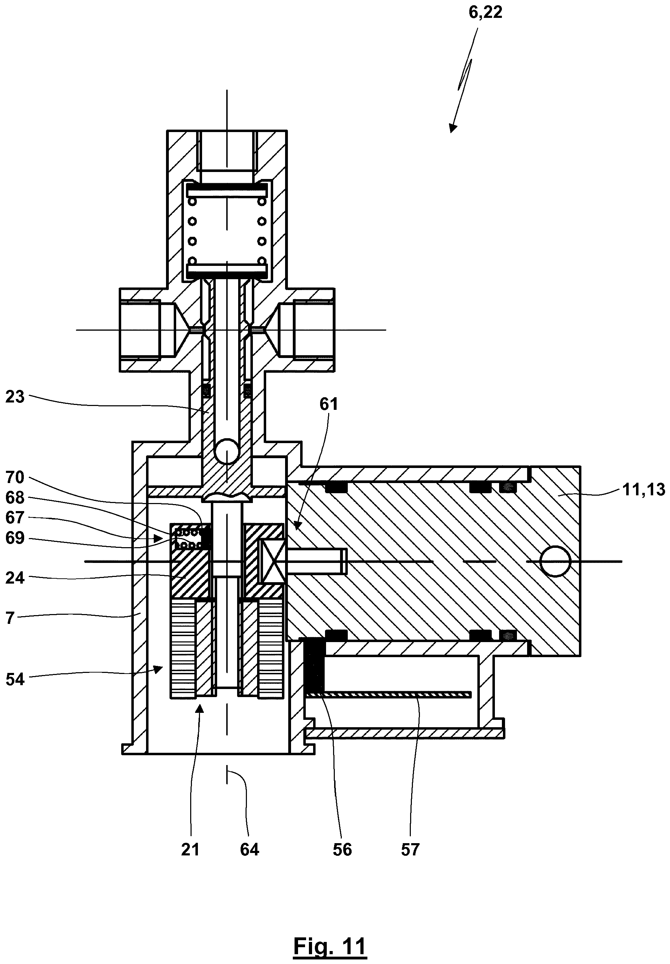

Gemäß Fig. 11 ist (bei ansonsten Fig. 10 entsprechender Ausgestaltung) in das Betätigungselement 24 ein Reibelement 67 integriert, welches die Reibung in dem Kraftfluss zwischen Antriebselement 13, Aktuator 21 und Ventilelement 23 derart erhöht, dass eine unerwünschte Verstellung des Ventilelements 23 für eine einmal herbeigeführte Position desselben auch ohne Bestromung des Antriebsaggregates 54 infolge einer Selbsthemmung nicht erfolgt. Für das dargestellte Ausführungsbeispiel verfügt das Betätigungselement 24 über eine von der Längsbohrung zur Aufnahme des Ventilelements 23 ausgehende Sacklochbohrung 68, an deren Boden sich ein Federfußpunkt einer Feder 69 abstützt. Die Feder 69 ist vorgespannt und drückt mit ihrem anderen Federfußpunkt einen Reibkörper 70, bspw. aus Gummi, gegen die Mantelfläche des Ventilelements 23 zwecks Erhöhung der Reibung.

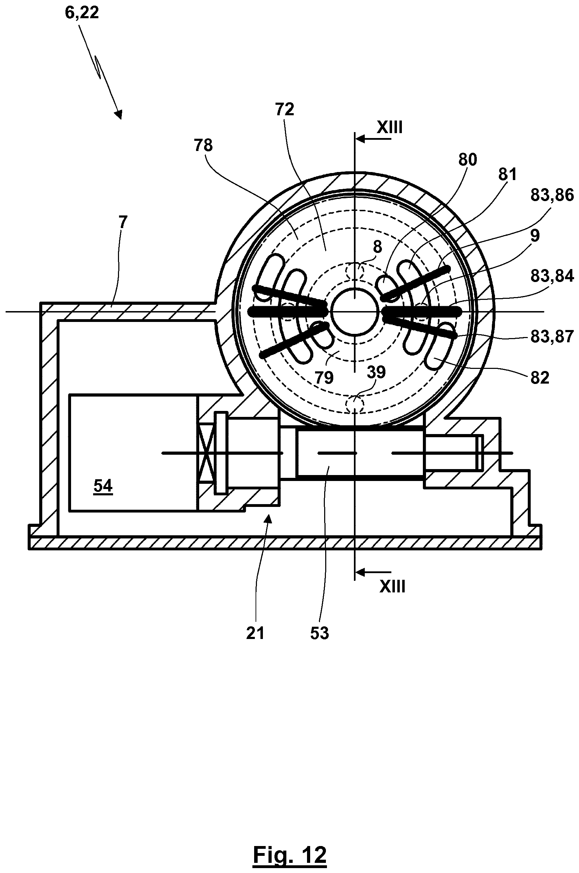

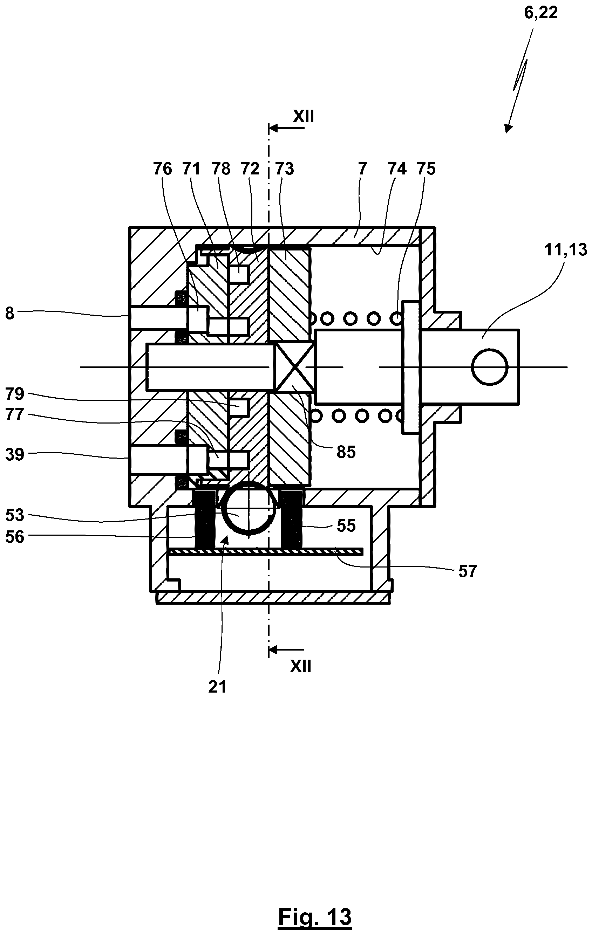

Fig. 12 und 13 zeigen ein Niveauregelventil 6 in Scheibenbauweise. Hinsichtlich der grundsätzlichen Ausbildung eines Niveauregelventils in Scheibenbauweise wird auf den diesbezüglichen Stand der Technik hingewiesen. Hier verfügt das Niveauregelventil 6 über drei Ventilscheiben 71, 72, 73. Die Ventilscheiben 71, 72, 73 sind in dieser Reihenfolge in eine Bohrung 74 des Gehäuses 7 eingesetzt. Die Ventilscheiben 71, 72, 73 werden über eine Feder 75 unter Abdichtung gegeneinander (bis auf die gewünschten Übertrittsquerschnitte und Kanäle) gegen den Boden der Bohrung 74 gedrückt, wozu ergänzend hier nicht dargestellte Dichtelemente zwischen den Ventilscheiben 71, 72, 73 wirken können. Die Ventilscheibe 71 ist stationär und nicht verdrehbar in dem Gehäuse 7 angeordnet, stellt Übertragungskanäle 76, 77, hier in Form von abgestuften versetzten Durchgangsbohrungen der Ventilscheiben 71, für die Verbindung mit den Anschlüssen 8, 39, zur Verfügung. Die mittlere Ventilscheibe 72 kann über den Aktuator 21 verdreht werden. Für das dargestellte Ausführungsbeispiel ist der Aktuator 21, wie bei den vorangegangenen Ausführungsformen, mit einer Antriebswelle 53, insbesondere einer Schneckenwelle, und einem Antriebsaggregat 54 ausgebildet, wobei die Antriebswelle 53 mit einer Außenverzahnung der Ventilscheibe 72 kämmt. Auf der der Ventilscheibe 71 zugewandten Seite verfügt die Ventilscheibe 72 über in Umfangsrichtung durchgehende Umfangskanäle 78, 79, welche als Umfangsnuten ausgebildet sind und in welche die Übertragungskanäle 76, 77 wie dargestellt einmünden. Gemäß Fig. 12 verfügt die Ventilscheibe 72 über durchgehende Langlöcher 80, 81, 82, welche sich mit unterschiedlicher Erstreckung in einem Teilumfang erstrecken und konzentrisch zueinander angeordnet sind. Hierbei erstreckt sich das Langloch 80 ca. von einer 01:30 Uhr-Stellung bis zu einer 02:45 Uhr-Stellung. Das Langloch 81 erstreckt sich von einer 01:30 Uhr-Stellung bis zu einer 04:15 Uhr-Stellung. Das Langloch 82 erstreckt sich von einer 03:15 Uhr-Stellung bis zu einer 04:15 Uhr-Stellung. Das Langloch 81 steht unabhängig vom Drehwinkel der Ventilscheiben 71, 72, 73 permanent mit dem Anschluss 9 für den Luftfederbalg 3 in pneumatischer Verbindung, was durch geeignete Kanäle und Nuten der Ventilscheibe 71 hindurch erfolgen kann. Das Langloch 80 steht über den Umfangskanal 79 in permanenter Verbindung mit dem Anschluss 8, während das Langloch 82 über den Umfangskanal 78 permanent in pneumatischer Verbindung mit dem Anschluss 39 steht. Die Ventilscheibe 73 verfügt auf der der Ventilscheibe 72 zugewandten Seite über einen als radiale Nut ausgebildeten Übertragungskanal 83. Mit den schwarzen Linien in Fig. 12 ist in Fig. 12 der Übertragungskanal 83 schematisch für unterschiedliche Drehwinkel der Ventilscheibe 73 dargestellt. In dieser ersten Relativstellung 84 zwischen den Ventilscheiben 72, 73 ist der Übertragungskanal 83 pneumatisch verbunden mit dem Langloch 81, nicht jedoch mit den Länglöchern 80, 82. Auf diese Weise ist der Anschluss 9 für den Luftfederbalg 3 über den Kontakt zwischen den Ventilscheiben 72, 73 abgesperrt. Die Ventilscheibe 73 ist drehfest, hier über einen Vierkant 85, aber axial verschieblich mit dem Antriebselement 13 oder der Antriebswelle 11 verbunden. Eine Verringerung des Niveaus 5 führt zu der Verschwenkung der Ventilscheibe 73 über das Antriebselement 13 entgegen dem Uhrzeigersinn in Richtung der zweiten Relativstellung 86 (vgl. Fig. 12). In dieser verbindet der Übertragungskanal 83 die Langlöcher 80, 81 miteinander, während keine Verbindung zu dem Langoch 82 besteht. In dieser zweiten Relativstellung 86 erfolgt somit eine Verbindung des Anschlusses 9 mit dem Anschluss 8, so dass eine Belüftung des Luftfederbalgs 3 erfolgen kann. Hingegen führt eine Erhöhung des Niveaus 5 zu einer Verschwenkung der Ventilscheibe 73 im Uhrzeigersinn in Richtung der dritten Relativstellung 87. In der dritten Relativstellung 87 verbindet der Übertragungskanal 83 die Langlöcher 81, 82 miteinander, während keine Verbindung zu dem Langloch 80 besteht. Somit erfolgt in der dritten Relativstellung 87 eine Verbindung des Anschlusses 39 mit dem Anschluss 9, womit eine Entlüftung des Luftfederbalgs 3 erfolgt. Wie zuvor beschrieben kann somit mittels des Niveauregelventils 6 eine herkömmliche mechanische Niveauregelung, insbesondere über einen mechanischen Kopplungsmechanismus 12 erfolgen. Darüber hinaus kann ergänzend durch Verdrehung der Ventilscheibe 72 mittels des Aktuators 21 ein Referenzniveau verstellt werden und/oder auch eine dynamische Niveauregelung durch eine elektronische Steuerung erfolgen. Möglich ist, dass, wie in Fig. 12 dargestellt, weitere Langlöcher entsprechend den Langlöchern 80, 81, 82 an der Ventilscheibe 72 sowie ein weiterer Übertragungskanal 83 an der Ventilscheibe 73 vorgesehen sind, um auch eine Niveauregelung für eine zweikreisige Luftfederungsanlage zu ermöglichen.

Für dieses Ausführungsbeispiel erfolgt bei der elektronischen Niveauregelung kein Eingriff in den mechanischen Übertragungsweg von dem Fahrzeugrad 1 oder der Fahrzeugachse 2 zu dem Ventilelement 23, welches hier von der Ventilscheibe 73 ausgebildet ist. Vielmehr ist hier ein nicht elektronisch verstellbarer mechanischer Kopplungsmechanismus 12 verwendet. Vielmehr erfolgt für diese Ausgestaltung eine elektronische Verstellung des Gegen-Ventilelements 29, welches hier von der Ventilscheibe 72 gebildet ist.

Entsprechend könnte bei einem Ausführungsbeispiel, bei welchem das Niveauregelventil 6 als Schieberventil ausgebildet ist (vgl. Fig. 3), die mechanische Niveauregelung über die Bewegung des Ventilelements 23 herbeigeführt werden, während das Gegen-Ventilelement 29 in diesem Fall nicht von dem Gehäuse 7 ausgebildet ist, sondern vielmehr von einer gegenüber dem Gehäuse verschieblich gelagerten Hülse, welche dann Steuerkanten ausbilden kann oder Übertrittsquerschnitte begrenzt und welche über den Aktuator 21 zur elektronischen Niveauregelung verschoben werden kann.

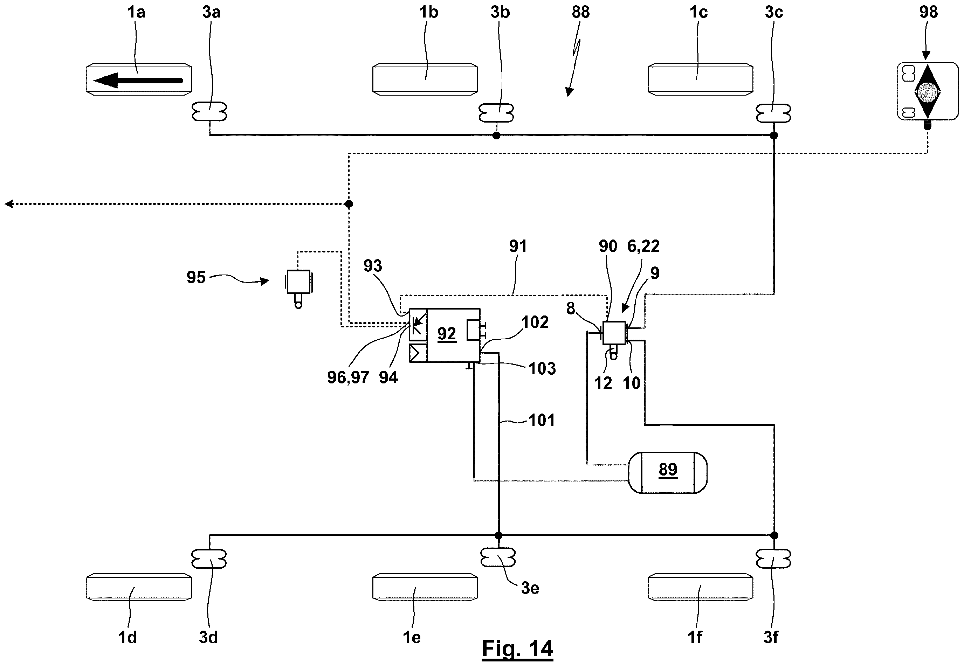

**Fig. 14** zeigt die Integration einer Niveauregelventileinrichtung 22, insbesondere eines Niveauregelventils 6, in einen elektropneumatischen Steuerkreis 88 für eine Luftfederungsanlage eines Nutzfahrzeugs. Hier ist der Kopplungsmechanismus 12 lediglich schematisch dargestellt. Der Anschluss 9 ist hier mit Luftfederbälgen 3a, 3b, 3c der rechten Fahrzeugseite verbunden mit Reihenschaltung der genannten Luftfederbälge 3a, 3b, 3c, während der Anschluss 10 entsprechend mit Luftfederbälgen 3d, 3e, 3f der linken Fahrzeugseite verbunden ist. Der Anschluss 8 wird aus einem Vorratsbehälter 89 mit Druckluft versorgt. Die Luftfederbälge 3a-3f sind jeweils einem Fahrzeugrad 1a-1f oder den Fahrzeugrädern 1a-1f zugeordneten Fahrzeugachsen zugeordnet. Die Niveauregelventileinrichtung 22 oder das Niveauregelventil 6 verfügt über einen elektrischen Anschluss 90. An den Anschluss 90 ist hier eine Steuerleitung 91 angeschlossen, über welche der Niveauregelventileinrichtung 22 ein Steuersignal zur Ansteuerung des Aktuators 21 übermittelt wird. Das Steuersignal wird über eine elektronische Steuereinrichtung 92 erzeugt, die einen Steuerausgang 93 aufweist, an welchen die Steuerleitung 91 angeschlossen ist und über den das Steuersignal an die Niveauregelventileinrichtung 22 übertragen wird. Bei der elektronischen Steuereinrichtung 92 kann es sich um eine ABS- oder EBS-Steuereinheit handeln, ohne dass dieses zwingend der Fall ist. Die elektronische Steuereinrichtung 92 kann als integrale singuläre Baueinheit, als modulare Baueinheit oder auch als verteilte Baueinheit mit mehreren Teil-Steuereinheiten ausgebildet sein. Die Steuereinrichtung 92 verfügt des Weiteren über einen Eingangsanschluss 94, über welchen der Steuereinrichtung 92 ein Niveausignal zugeführt wird. Für das Ausführungsbeispiel gemäß Fig. 14 entstammt dieses Niveausignal einem herkömmlich ausgebildeten Niveauregelventil 95, welches bspw. einer der drei Achsen zugeordnet ist und in welches ein Niveausensor integriert sein kann. Alternativ kann der Eingangsanschluss 94 mit einem beliebigen anderen Niveausensor verbunden sein, welche an einer beliebigen Fahrzeugachse das Niveau der Fahrzeugachse und/oder des Fahrzeugrads erfasst. Über einen weiteren Steuereingang 96 oder eine Schnittstelle 97 ist die Steuereinrichtung 92 mit einem Bedienelement 98 verbunden ist. Über das Bedienelement 98 kann ein Bediener manuell und willkürlich eine Niveauänderung herbeiführen oder ein Referenzniveau vorgeben, ein vorgegebenes Rampenniveau herbeiführen oder ein Heben oder Senken herbeiführen. Das Bedienelement 98 kann beliebig ausgebildet sein, sofern hier ein elektrisches Signal erzeugt werden kann, welches den jeweiligen Wunsch des Bedieners an die Steuereinrichtung 92 übermittelt. Um lediglich einige nicht beschränkende Beispiele zu nennen, kann das Bedienelement 98 mindestens einen Schalter, mindestens einen verschwenkbaren Hebel, mindestens ein translatorisch bewegbares Bedienelement o. ä. aufweisen, dessen Betätigung mit dem Wunsch des Bedieners korreliert und ein entsprechendes Eingangssignal für die Steuereinrichtung 92 erzeugt. Möglich ist bspw. auch, dass das Bedienelement 98 entsprechend der Druckschrift WO 2014/124944 A1 ausgebildet ist und betätigt wird, wobei diese Druckschrift zum Gegenstand der vorliegenden Patentanmeldung gemacht wird. Ist eine elektrische Leistungsversorgung vorhanden, kann über das Bedienelement 98 von dem Bediener eine Beeinflussung des Niveaus 5 oder eine Veränderung eines Referenzniveaus erfolgen. Die Steuereinrichtung 92 wandelt die vom Bediener an dem Bedienelement 98 vorgegebenen Signale um in eine geeignete Ansteuerung des Aktuators 21. Ist bspw. über das Bedienelement 98 an einer Rampe ein gewünschtes Referenzniveau entsprechend der Höhe der Rampe vorgegeben, kann auch bei Entfall der elektrischen Leistungsversorgung bei einem Be- oder Entladen über den mechanischen Kopplungsmechanismus 12 eine mechanische Niveauregelung erfolgen, bei welcher das über das Bedienelement 98 vorgegebene geänderte Referenzniveau gehalten wird.

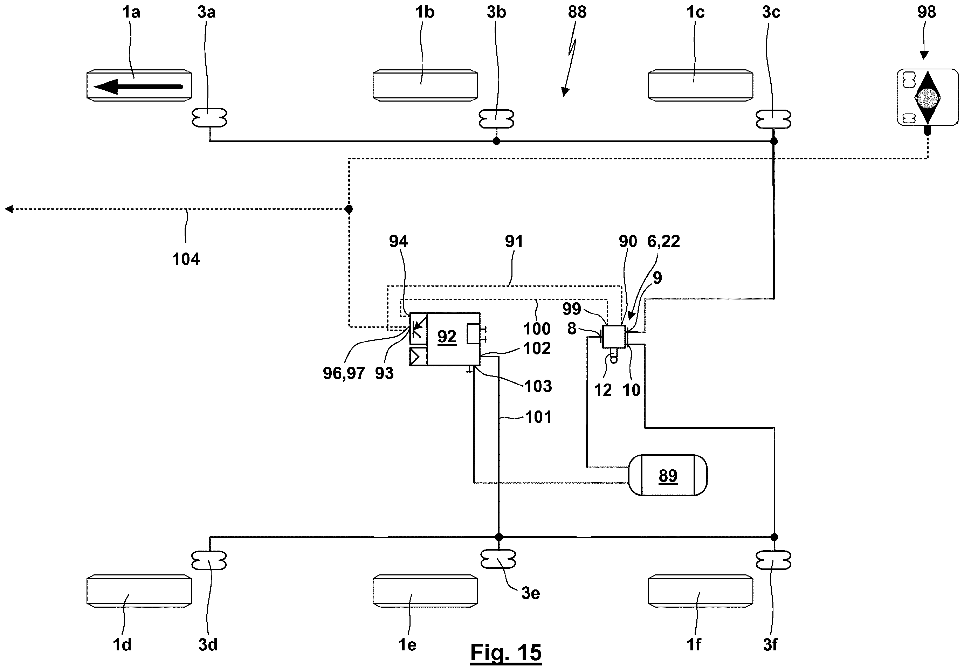

Bei ansonsten im Wesentlichen der Ausgestaltung gemäß Fig. 14 entsprechendem Aufbau und entsprechender Funktion wird gemäß **Fig. 15** anstelle eines externen Niveausensors das Signal eines in die Niveauregelventileinrichtung 22 integrierten Sensors, insbesondere eines Sensors 55, 56, von der Steuereinrichtung 92 genutzt. Die Niveauregelventileinrichtung 22 verfügt in diesem Fall über einen Ausgang 99 für das Signal des Sensors, welches dann über eine Signalleitung 100 dem Eingangsanschluss 94 der Steuereinrichtung 92 zugeführt wird.

Für das Ausführungsbeispiel gemäß Fig. 14 und 15 sind die Luftfederbälge 3d, 3e, 3f einer Fahrzeugseite über eine Drucksignalleitung 101 mit einem pneumatischen Anschluss 102 der Steuereinrichtung 92 verbunden. In der Steuereinrichtung 92 kann dann ein Drucksensor vorhanden sein, welcher den Druck an dem Anschluss 102 erfasst, womit dann in der Steuereinrichtung 92 auch der Druck in den Luftfederbälgen 3d, 3e, 3f bekannt ist und für eine Steuerung oder Regelung verwendet werden kann. Darüber hinaus kann die Steuereinrichtung 92 über einen Anschluss 103 verfügen, an welchen der Vorratsbehälter 89 angeschlossen ist. Über einen in die Steuereinrichtung 92 integrierten Drucksensor kann dann auch der Druck in dem Vorratsbehälter 89 erfasst werden und von der Steuerung oder Regelung der Steuereinrichtung 92 berücksichtigt werden. Möglich ist, dass das Bedienelement 98 über ein Bussystem 104 mit der Schnittstelle 97 der Steuereinrichtung 92 kommuniziert, wobei über das Bussystem 104 dann auch andere Betriebsgrößen wie bspw. ein Lenkwinkel, eine Fahrzeuggeschwindigkeit, eine Gangstufe, ein geodätischer Ort usw. an die Steuereinrichtung 92 übertragen werden können. Ebenfalls möglich ist, dass die Steuereinrichtung 92 Betriebsgrößen, bspw. einen Druck in einem Luftfederbalg und/oder dem Vorratsbehälter, ein Niveau 5 u. ä., über das Bussystem 104 an andere Steuereinrichtungen überträgt.

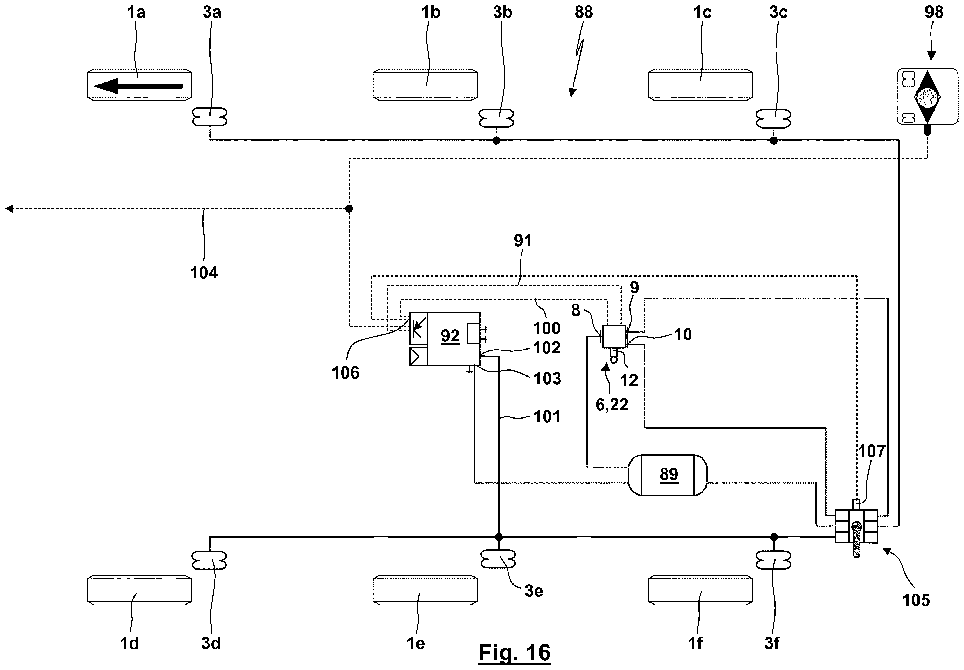

**Fig. 16** zeigt eine Ausführungsform, bei welcher die Niveauregelventileinrichtung 22 über ein herkömmliches Hebe-Senk-Schaltventil 105, wie dieses bspw. von dem Unternehmen Haldex Brake Products GmbH unter der Kennzeichnung "COLAS" oder von der Wettbewerberin WABCO GmbH unter der Kennzeichnung "TASC" vertrieben wird, mit den Luftfederbälgen 3a-3f der beiden Seiten des Fahrzeugs verbunden ist. Während grundsätzlich möglich ist, dass ein derartiges Hebe-Senk-Schaltventil 105 auch stromaufwärts der Niveauregelventileinrichtung 22 zwischen Vorratsbehälter 89 und Niveauregelventileinrichtung 22 angeordnet ist, ist hier das Hebe-Senk-Schaltventil 105 stromabwärts der Niveauregelventileinrichtung 22 angeordnet. Zusätzlich zu der Möglichkeit, das Niveau 5 gemäß Fig. 14 und 15 auf Grundlage einer unter Umständen auch dynamischen Niveauregelung mittels der Steuereinrichtung 92, auf Grundlage eines von dem Benutzer über das Bedienelement 98 vorgegebenen Wunsches sowie rein mechanisch über den Kopplungsmechanismus 12 zu verändern, kann demgemäß auch mit dem Hebe-Senk-Schaltventil 105 eine Niveauänderung, insbesondere an einer Rampe, herbeigeführt werden. Nachteilig ist in diesem Fall aber unter Umständen, dass ein einmal von dem Fahrer über das Hebe-Senk-Schaltventil 105 vorgegebenes Niveau weder bei vorhandener elektrischer Leistungsversorgung noch bei nicht vorhandener elektrischer Leistungsversorgung nachgeregelt wird, wenn eine Be- oder Entladung des Fahrzeugs erfolgt. Möglich ist in diesem Fall, dass die Steuereinrichtung 92 über einen weiteren Steuerausgang 106 verfügt, der mit einem Steuereingang 107 des Hebe-Senk-Schaltventils 105 verbunden ist. Die Steuereinrichtung 92 erzeugt in diesem Fall auch ein so genanntes Reset-to-Ride-Signal für den Fall, dass aus einem Fahrgeschwindigkeitssensor, dem Einlegen einer Gangstufe, der Betätigung eines Bremspedals, der Betätigung eines Bremslichtschalters u. ä. erkannt wird, dass ein Fahrbetrieb aufgenommen wird. Dieses Reset-to-Ride-Signal wird über den Steuerausgang 106 der Ventileinrichtung 92 an den Steuereingang 107 des Hebe-Senk-Schaltventils 105 übertragen, womit dann das Hebe-Senk-Schaltventil 105 von einer Stellung Heben, Senken und/oder Stopp überführt wird in eine Stellung Fahrt, in welcher die Niveauregelung über die Niveauregelventileinrichtung 22 erfolgt, auch wenn der Benutzer vergessen hat, das Hebe-Senk-Schaltventil 105 durch manuelle Betätigung desselben wieder in die Stellung Fahrt zu überführen. Hinsichtlich Stand der Technik zu dem Hebe-Senk-Schaltventil 105 und der Reset-to-Ride-Funktion wird beispielhaft auf die Druckschriften EP 1 712 380 B1, EP 2 067 638 B1, EP 0 520 147 B1 und EP 0 520 148 B1 verwiesen, wobei auch eine Verrastung oder Verriegelung einer Stellung Heben und/oder Senken des Hebe-Senk-Schaltventil 105 mit dem Lösen mit einem Lösesignal oder Reset-to-Ride-Signal der Steuereinrichtung 92 möglich ist. Das zusätzliche Hebe-Senk-Schaltventil 105 ermöglicht aber andererseits eine manuelle Änderung des Niveaus, wenn keine elektrische Leistungsversorgung vorhanden sein sollte.

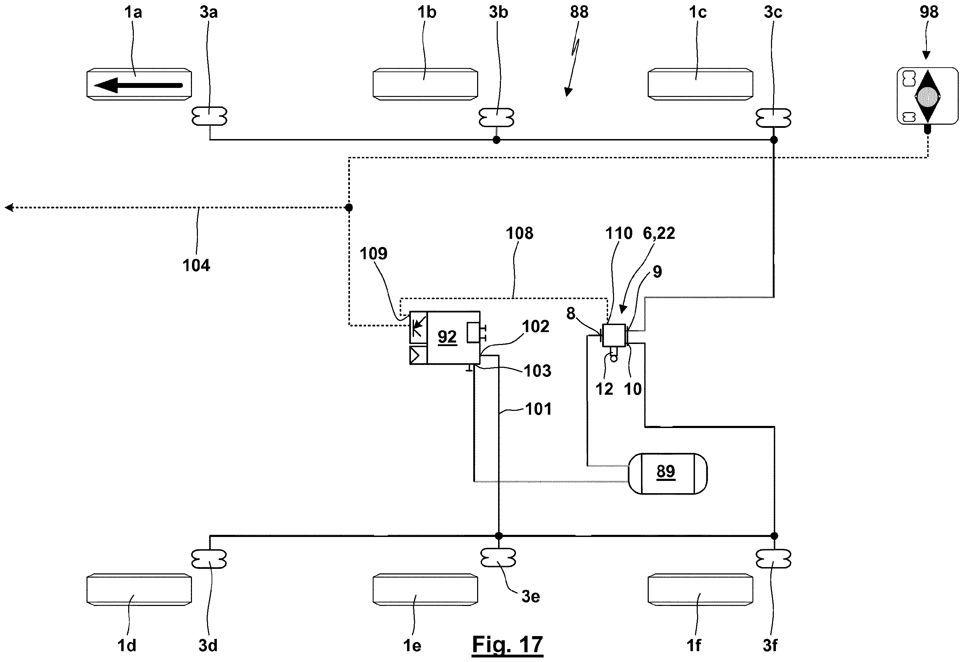

Für das Ausführungsbeispiel gemäß **Fig. 17** findet eine bidirektionale Leitung 108 Einsatz, welche über bidirektionale Anschlüsse 109, 110 in einem Endbereich mit der Steuereinrichtung 92 und dem anderen Endbereich mit der Niveauregelventileinrichtung 22 verbunden ist. Über die bidirektionale Leitung 108 kann einerseits ein Niveausignal von der Niveauregelventileinrichtung 22 an die Steuereinrichtung 92 der Niveauregelventileinrichtung 22 an die Steuereinrichtung 92 übertragen werden und andererseits kann über die bidirektionale Leitung 108 das Steuersignal von der Steuereinrichtung 92 an die Niveauregelventileinrichtung 22 zur Ansteuerung des Aktuators 21 übertragen werden.

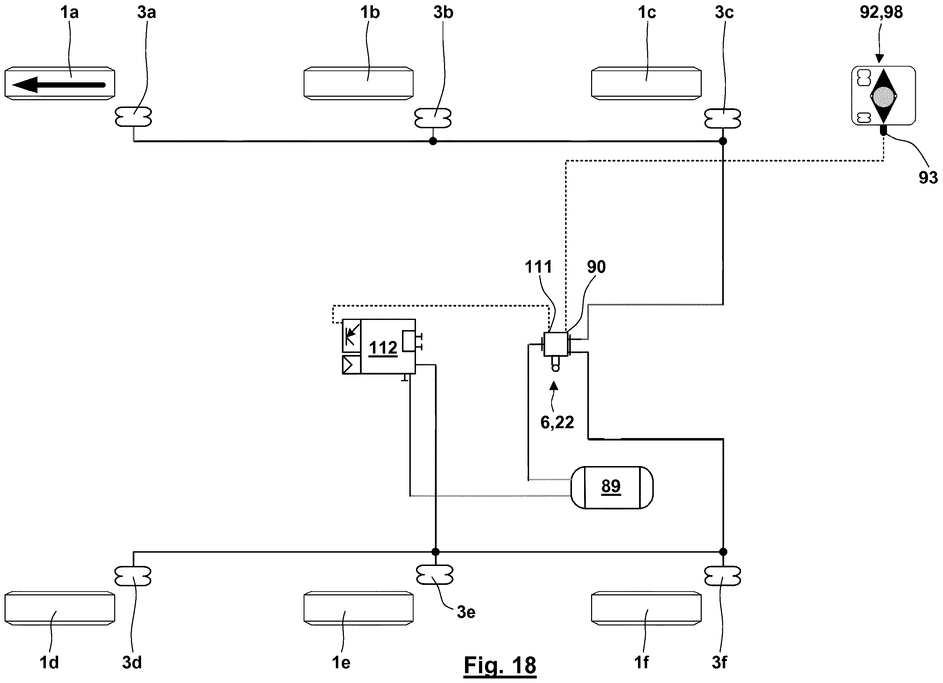

**Fig. 18** zeigt eine Ausführungsform, bei welcher das Bedienelement 92 selber als elektronische Steuereinrichtung 92 ausgebildet ist und einen Steuerausgang 93 aufweist, über welchen die Übertragung eines Steuersignals an den Anschluss 90 der Niveauregelventileinrichtung 22 erfolgt. Auch hier ist möglich, dass in umgekehrter Richtung, bspw. über eine bidirektionale Leitung, ein Signal hinsichtlich eines Niveaus 5 der Niveauregelventileinrichtung 22 von dieser an die Steuereinrichtung 92 bzw. das Bedienelement 98 übertragen wird zur weiteren Verarbeitung in der Steuereinrichtung 92. Andererseits wird ein Signal des Niveaus 5 über einen Ausgang 111 der Niveauregelventileinrichtung 22 an eine andere Steuereinheit, hier eine EBS-Steuereinheit 112, zur weiteren Verarbeitung übertragen. In diesem Fall ist die EBS-Steuereinheit 112 nicht für die elektronische Steuerung der Niveauregelventileinrichtung 22 verantwortlich, sondern vielmehr ausschließlich für die Steuerung der Bremsen. Möglich ist hier, ebenfalls eine Übertragung von Signalen zwischen einzelnen Komponenten über ein Bussystem, so bspw. zwischen dem Bedienelement 98 und der Niveauregelventileinrichtung 22 und/oder der Niveauregelventileinrichtung 22 und der EBS-Steuereinheit 112. Auch in dieser Ausführungsform kann ein herkömmliches Hebe-Senk-Schaltventil 105 optional zusätzlich in den Steuerkreis 88 integriert sein.

Möglich ist auch, dass das Bedienelement 98 lediglich ein Schaltsignal an eine Steuereinheit oder Platine der Niveauregelventileinrichtung 22 übermittelt, wobei dann die Signale des Bedienelementes 98 direkt der Steuereinheit der Niveauregelventileinrichtung 22 zugeführt werden könnten. Die Bearbeitung der Signale findet dann auf der Steuereinheit oder Platine der Niveauregelventileinrichtung 22 statt (das Entsprechende gilt auch für die vorangegangenen anderen Figuren).

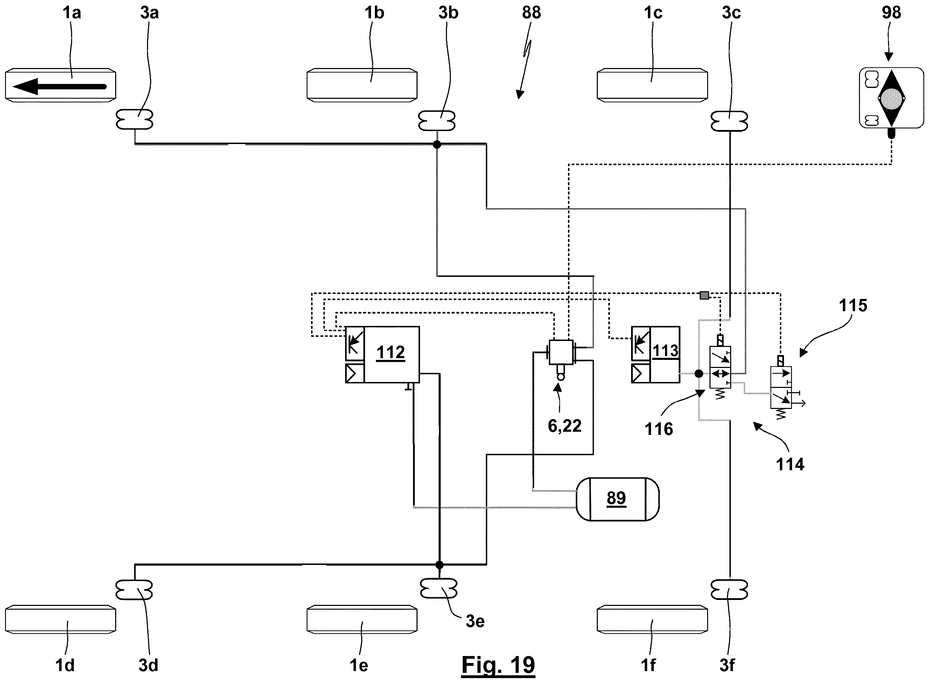

**Fig. 19** zeigt eine Ausführungsform, bei welcher eine zusätzliche elektronische Steuereinheit 113 vorhanden ist, die einen pneumatischen Druck für eine so genannte Load-Transfer-Ventileinrichtung 114 vorgibt. Die Load-Transfer-Ventileinrichtung 114 verfügt über Magnetventile 115, 116, welche ebenfalls von der EBS-Steuereinheit 112 gesteuert werden. Die Steuerung über die EBS-Steuereinheit 112 sowie die der Steuereinheit 113 erfolgt hier mit dem Ziel, dass die unterschiedlichen Achsen des Fahrzeugs mit derselben Last beaufschlagt sind.

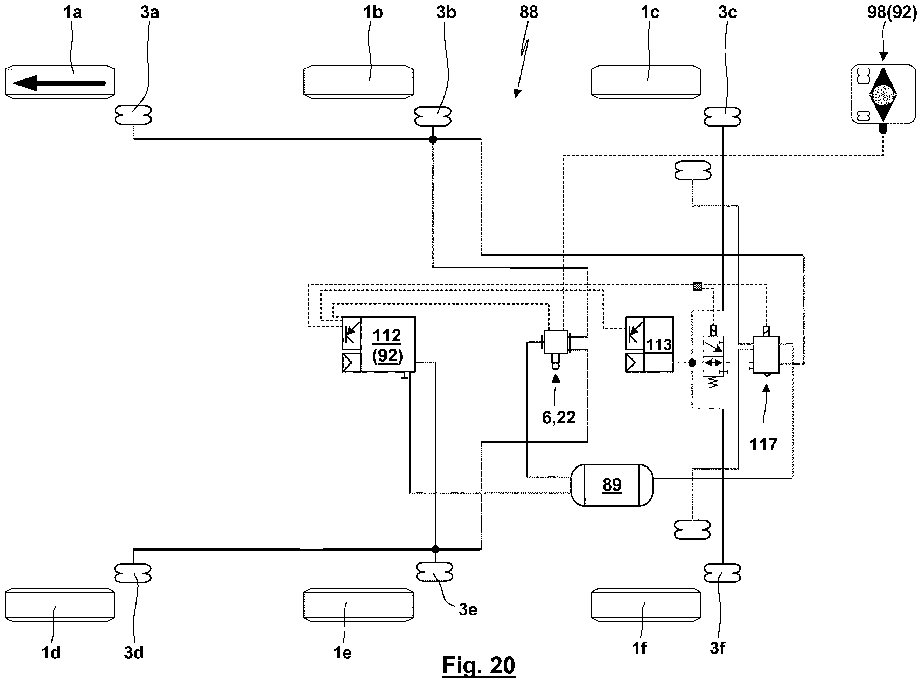

Für die Ausgestaltung gemäß **Fig. 20** ist die EBS-Steuereinheit 112 auch für die Steuerung eines Liftachssystems 117 zuständig.

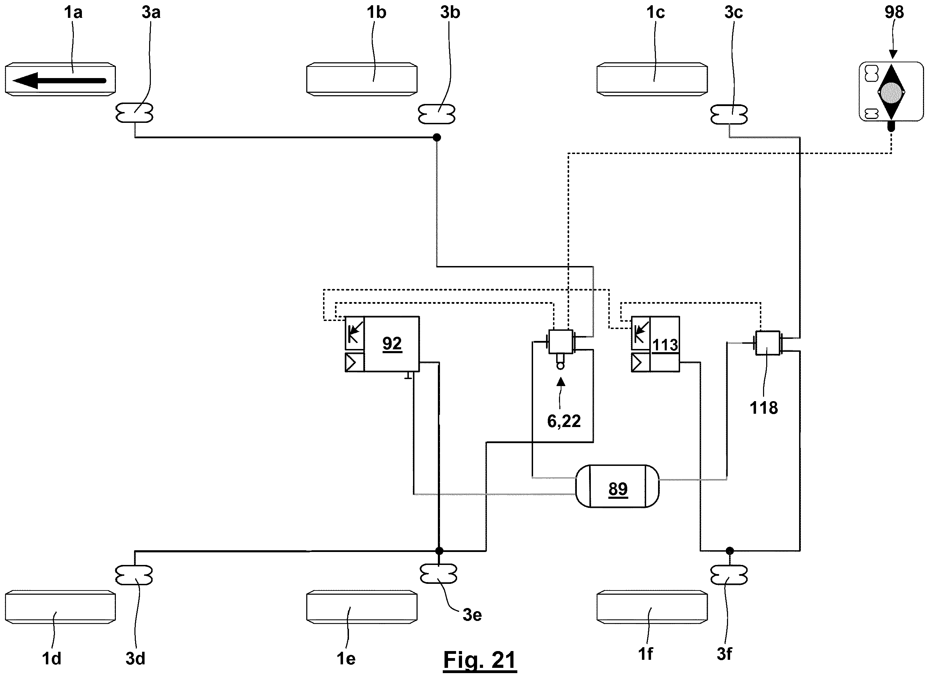

**Fig. 21** zeigt eine Ausführungsform des Steuerkreises 88, bei welcher eine erste Steuereinrichtung 92 eine Niveauregelventileinrichtung 6, 22 ansteuert, bei welcher sowohl eine elektronische Niveauregelung als auch eine mechanische Niveauregelung möglich ist. Die Niveauregelventileinrichtung 22 ist in diesem Fall für eine zweikreisige Niveauregelung der Luftfederbälge 3a, 3b sowie 3d, 3e von zwei Fahrzeugachsen zuständig. Eine weitere Steuereinrichtung 113 steuert rein elektronisch ein weiteres Niveauregelventil 118 an, über welches die Niveauregelung der Luftfederbälge 3c, 3f erfolgt. Hierbei kommunizieren die Steuereinrichtungen 92, 113 miteinander, womit auch eine Anpassung oder Abstimmung der Niveaus einerseits der Luftfederbälge 3a, 3b sowie 3d, 3e und andererseits der Luftfederbälge 3c, 3f erfolgen kann.

Möglich ist für die dargestellten Ausführungsbeispiele auch, dass einerseits der manuelle Wunsch von dem Benutzer über das Bedienelement 98 vorgegeben werden kann, womit dann das Bedienelement 98 mit einer Steuereinrichtung desselben das Steuersignal zur Ansteuerung des Aktuators 21 der Niveauregelventileinrichtung 22 erzeugt. Andererseits kann in anderen Betriebssituationen eine Ansteuerung des Aktuators 21 der Niveauregelventileinrichtung 22 über die EBS-Steuereinheit 112 erfolgen.

Im Folgenden werden weitere optionale Ausgestaltungen der Niveauregelventileinrichtung 22, des Niveauregelventils 6 und/oder des Steuerkreises 88 genannt, welche alternativ oder kumulativ und/oder in Verbindung mit einem der vorher erläuterten Ausführungsbeispiele Einsatz finden können:
Für eine Ausgestaltung der Erfindung besitzt eine elektronische Steuereinrichtung 92 einen Steuerausgang 93 für eine mechanisch gesteuerte Niveauregelventileinrichtung 22, wie diese zuvor beschrieben worden ist und auch Gegenstand der Patentansprüche ist. Für diese Ausgestaltung besitzt die Steuereinrichtung 92 Steuerlogik, welche an dem Steuerausgang 93 ein Steuersignal für eine Veränderung einer Relativstellung eines Ventilelements 23 und Antriebselements 13 der Niveauregelventileinrichtung 22 und/oder einer Relativstellung eines Gegen-Ventilelements 29 gegenüber einem das Ventilelement 23 und das Gegen-Ventilelement 29 aufnehmenden Gehäuses 7 erzeugt.

Optional möglich ist auch, dass die Steuereinrichtung über Steuerlogik verfügt, welche für eine dynamische Niveauregelung im Fahrbetrieb ein Steuersignal für den Aktuator 21 erzeugt, auf Grundlage dessen der Aktuator 21 die Relativstellung des Ventilelements 23 und des Gegen-Ventilelements 29 so verändert, dass sich eine Veränderung der Relativstellung des Ventilelements 23 und des Gegen-Ventilelements 29 ergibt, deren Betrag abweicht von dem Betrag der Veränderung der Relativstellung des Ventilelements 23 und des Gegen-Ventilelements 29, welche sich bei rein mechanischer Niveauregelung ergeben hätte.

Optional möglich ist auch, dass die Steuereinrichtung 29 über Steuerlogik verfügt, welche für eine dynamische Niveauregelung ein Steuersignal für den Aktuator 21 erzeugt, auf Grundlage dessen der Aktuator 21 die Relativstellung des Ventilelements 23 und des Gegen-Ventilelements 29 so verändert, dass das Ventilelement 23 und das Gegen-Ventilelement 29 in der ersten Relativstellung 84 bleiben oder in diese überführt werden, obwohl sich auf Grundlage einer rein mechanischen Niveauregelung die zweite oder dritte Relativstellung 86, 87 ergeben würde.

Optional möglich ist, dass die Steuereinrichtung über Steuerlogik verfügt, welche an einem Steuerausgang 93 ein Reset-to-Ride-Steuersignal für ein Hebe-Senk-Schaltventil 105 erzeugt.

In einer Ausgestaltung kann die Steuereinrichtung 92 einen bidirektionalen Anschluss 109 aufweisen und/oder eine Schnittstelle 97 für ein Bussystem 104 aufweisen.

Möglich ist, dass die Steuereinrichtung 92 ein mechanisch-elektrisches Bedienelement 98 aufweist, über welches von einem Bediener eine Beeinflussung des Niveaus vorgenommen werden kann.

Möglich ist, dass die Steuereinrichtung 92 integral mit einer ABS- oder EBS-Steuereinheit 113 oder einer anderen Steuereinheit ausgebildet ist.

Möglich ist, dass die Steuereinrichtung 92 einen elektrischen Steuerausgang aufweist, welcher mit einem Magnetventil 115, 116 oder einer Steuereinheit 113 einer Load-Transfer-Ventileinrichtung 114 verbindbar ist.

Möglich ist des Weiteren, dass eine elektronische Steuereinrichtung 92, wie diese zuvor erläutert worden ist, gemeinsam mit einem an dem Steuerausgang 93 der elektronischen Steuereinrichtung 92 angeschlossenen Niveauregelventileinrichtung 22 Bestandteil eines elektropneumatischen Steuerkreises 88 sind.

Optional kann dieser Steuerkreis 88 auch ein manuell betätigbares mechanisch-pneumatisches Hebe-Senk-Schaltventil 105 aufweisen, über welches ein Bediener eine Änderung des Niveaus 5 herbeiführen kann.

Möglich ist, dass der Steuerkreis 88 ein manuell betätigbares Bedienelement 98 aufweist, dessen von einem Bediener vorgegebenes elektrisches Steuersignal einem Steuereingang 96 der elektronischen Steuereinrichtung 92 zugeführt wird, was erfolgen kann, um einen Wunsch des Bedieners hinsichtlich eines Hebens oder Senkens zu übermitteln.

Ebenfalls möglich ist, dass in dem Steuerkreis mindestens ein Sensor 55, 56 vorhanden ist, der eine Relativstellung des Antriebselements 13 oder der Antriebswelle 11 und des Betätigungselements 24 oder eine Stellung des Antriebselements 13, der Antriebswelle 11 und/oder des Betätigungselements 24 erfasst. In diesem Fall ermittelt die Steuerlogik der elektronischen Steuereinrichtung 92 auf Grundlage eines Signals mindestens eines Sensors 55, 56 das Steuersignal für den Aktuator 21 der Niveauregelventileinrichtung.

Möglich ist auch, dass das Nutzfahrzeug als Kipper ausgestattet ist. In diesem Fall kann die Steuereinrichtung 92 auch in Abhängigkeit von einem Kippsignal den Aktuator 21 so ansteuern, dass einer Verlagerung des Schwerpunkts des Kippers infolge des Kippens einer Mulde oder anderweitigen Fahrzeugaufbaus durch eine Niveauänderung entgegengewirkt werden kann.

Möglich ist auch, dass die Steuereinrichtung 92 eine Anpassung des Niveaus 5 im Fahrbetrieb des Nutzfahrzeugs in Abhängigkeit von der Fahrgeschwindigkeit vornimmt.

Des Weiteren kann die Steuereinrichtung 92 eine Sperrstellung des Niveauregelventils aussteuern, in welcher eine mechanische Niveauregelung deaktiviert ist, was insbesondere zwecks Vermeidung eines so genannten "Cyclings" beim Durchfahren einer Kurve und/oder bei dem Abbremsen oder Beschleunigen bspw. im Bereich einer Ampel auftreten kann.

Möglich ist auch, dass in einer Steuereinrichtung 92 vorbestimmte Referenzniveaus abgespeichert sind, welche dann von dem Benutzer an dem Bedienelement 98 aktiviert werden können und/oder von der Steuereinrichtung je nach Betriebsbedingungen automatisch ausgewählt werden und dann von dem Aktuator 92 eingestellt werden.

Ebenfalls möglich ist, dass bei dem Erkennen bspw. über einen GPS-Sensor eines vorbekannten Zielorts, insbesondere einer Rampe, eine automatisierte Herbeiführung einer geeigneten Niveauhöhe erfolgt.

Möglich ist auch, dass die Steuereinrichtung 92 oder unmittelbar das Niveauregelventil 6 mit einem Smartphone kommuniziert, so dass über das Smartphone auch eine Niveauänderung vorgegeben werden kann, womit dann das Smartphone zumindest Teilfunktionen des Bedienelements 98 übernehmen kann. Vorzugsweise findet als Aktuator 21 ein Schrittmotor Einsatz.

Im Rahmen der Erfindung nutzen die mechanische Niveauregelung und die elektronische Niveauregelung dieselben Ventilkomponenten für die Bereitstellung eines Absperrens, einer Belüftung und eines Entlüftens von Luftfederbälgen. Für die Ausführungsbeispiele gemäß Fig. 3 bis 13 sind diese Ventilkomponenten in das Gehäuse 7 des Niveauregelventils integriert.

Möglich ist auch, dass der Aktuator 21 unmittelbar zwischen Fahrzeugrad 1 oder Fahrzeugachse 2 und dem Kopplungsmechanismus 12 wirkt, bspw. mit einer durch den Aktuator 21 herbeigeführten Verdrehung der Antriebsstrebe 14.

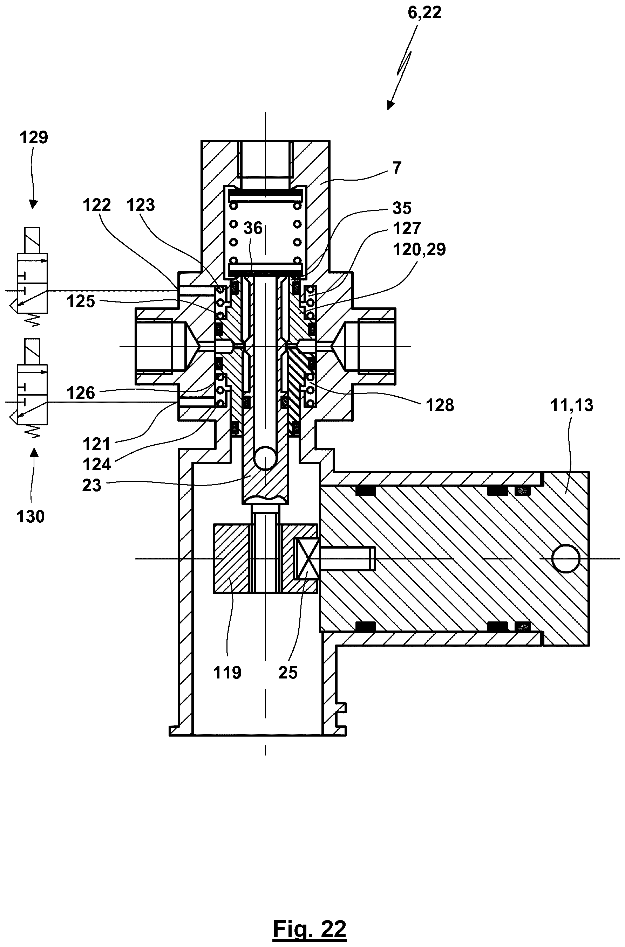

**Fig. 22** zeigt eine weitere Ausführungsform eines Niveauregelventils 6 in einem Längsschnitt. Hier treibt das von der Antriebswelle 11 gebildete Antriebselement 13 ohne Zwischenschaltung eines weiteren Getriebes (wie eines Planetengetriebes 41) über einen Exzenter 25 das Ventilelement 23 an. Zur Vereinfachung einer Montage und/oder der Gewährleistung einer manuellen Einstellbarkeit der Referenzlage des Niveauregelventils 6 kann das Ventilelement 23 wie dargestellt über eine Schraubverbindung mit einem Kontaktkörper 119, welcher von dem Exzenter 25 betätigt wird, verbunden sein. Der Ventilsitz 35 ist für diese Ausführungsform nicht von dem Gehäuse 7 des Niveauregelventils 6 ausgebildet, sondern vielmehr von einem Stellkolben 120. Bei Annahme eines fixierten Stellkolbens erfolgt in Abhängigkeit von der Verdrehung der Antriebswelle 11 und der damit korrelierenden Stellung des Ventilelements 23 in einer unteren Stellung des Ventilkörpers 23 eine Entlüftung, in der Ventilstellung gemäß Fig. 22 ein Absperren der Luftfederbälge und in einer gegenüber der Ventilstellung gemäß Fig. 22 angehobenen Ventilstellung eine Belüftung der Luftfederbälge. Die Referenzlage, hier die Sperrstellung gemäß Fig. 22, kann verändert werden durch die Verschiebung des Stellkolbens 120, welcher somit das für die Vorgabe der Referenzlage verantwortliche Gegen-Ventilelement 29 bildet.

Eine Bewegung des Stellkolbens 120 kann wie folgt veranlasst werden:
Das Gehäuse 7 weist zwei pneumatische Steueranschlüsse 121, 122 auf. Der Stellkolben 120 ist axial verschieblich in einer Ausnehmung des Gehäuses 7 geführt. Die in Fig. 22 dargestellte mittige Betriebsstellung des Stellkolbens 120 ist gesichert durch Federn 123, 124, die den Stellkolben 120 in entgegengesetzte Richtungen beaufschlagen. Der Stellkolben 120 begrenzt jeweils mit einer Kolbenfläche 125, 126 und der Ausnehmung des Gehäuses 7 einen Druckraum 127, 128, in welchen jeweils ein zugeordneter Steueranschluss 121, 122 mündet. Die Kolbenflächen 125, 126 des Stellkolbens 120 sind entgegengesetzt zueinander orientiert. Die Beaufschlagung der Steueranschlüsse 121, 122 erfolgt über Magnetventile 129, 130, hier 3/2-Wege-Magnetventile. Die Magnetventile 129, 130 entlüften in der in Fig. 22 wirksamen Betriebsstellung die zugeordneten Druckräume 127, 128, während eine Umschaltung eines der Magnetventile 129, 130 zu einer selektiven Belüftung des zugeordneten Druckraums 127, 128 führt. Die bei Druckbeaufschlagung des Druckraums 127 an der Kolbenfläche 125 herbeigeführte Druckkraft hat zur Folge, dass der Stellkolben 120 entgegen der Beaufschlagung durch die Feder 126 nach unten verschoben wird, bis der Stellkolben 120 gegen einen Anschlag des Gehäuses 7 gepresst wird. Entsprechend kann über die Druckbeaufschlagung des Druckraums 128 bei drucklosem Druckraum 127 der Stellkolben 120 aus der Stellung gemäß Fig. 22 entgegen der Beaufschlagung durch die Feder 123 nach oben bewegt werden. Gemäß Fig. 22 ergibt sich ohne Druckbeaufschlagung der Druckräume 127, 128 (oder für eine gleichzeitige Druckbeaufschlagung beider Druckräume 127, 128) eine mittige erste Referenzlage, während die Druckbeaufschlagung des Druckraums 127 ohne Druckbeaufschlagung des Druckraums 128 zu einer zweiten, unteren Referenzlage führt und die Druckbeaufschlagung des Druckraums 128 ohne Druckbeaufschlagung des Druckraums 127 zu einer dritten, angehobenen Referenzlage führt. Die Magnetventile 129, 130 können von einer beliebigen Steuereinheit, beispielsweise auch einer EBS-Steuereinheit über elektrische Steuerleitungen angesteuert werden. Die Magnetventile 129, 130 werden über eine Druckluftquelle mit Druckluft versorgt, wobei es sich vorzugsweise um dieselbe Druckluftquelle handelt, aus welcher auch die Befüllung der Luftfederbälge erfolgt. Möglich ist auch, dass die Magnetventile 129, 130 in eine Steuereinheit, insbesondere eine EBS-Steuereinheit integriert sind, so dass dann lediglich zwei pneumatische Leitungsverbindungen zwischen der Steuereinheit und dem Niveauregelventil 6 erforderlich sind. Für das Ausführungsbeispiel gemäß Fig. 22 ist der Stellkolben 120 als Hülse ausgebildet, welche auf der dem Ventilteller 36 zugewandten Seite den Ventilsitz 35 ausbildet, in beiden Endbereichen gegenüber dem Gehäuse 7 über Dichtelemente abgedichtet ist, zwischen diesen Dichtstellen eine Art Ringkolben mit den beiden Kolbenflächen 125, 126 ausbildet, auf beiden Seiten von Querbohrungen zwecks Bildung der Mündungen 31 ebenfalls gegenüber dem Gehäuse abgedichtet ist und durch dessen Innenbohrung sich das Ventilelement 23 hindurch erstreckt.

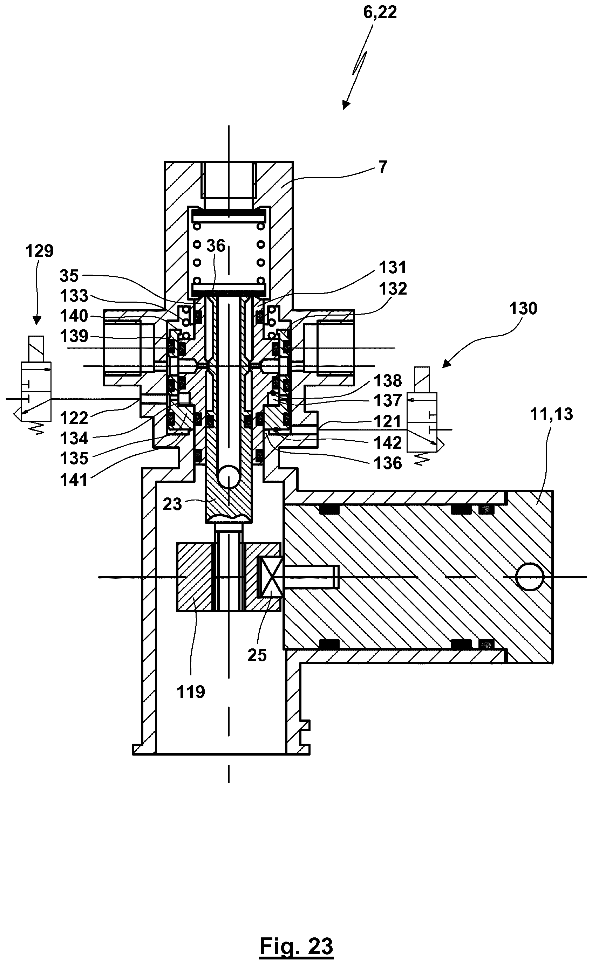

Für das Ausführungsbeispiel gemäß **Fig. 23** ist der Stellkolben 120 mit zwei teleskopierbaren und hülsenartigen Stellkolbenteilen 131, 132 gebildet. Der radial innenliegend angeordnete, Stellkolbenteil 131 bildet in dem dem Ventilteller 36 zugewandten Endbereich den Ventilsitz 35 aus. Eine Feder 133 presst einen Absatz 134 des Stellkolbenteils 131 gegen einen Innenbund 135 des Stellkolbenteils 132, womit auch das Stellkolbenteil 132 gegen einen Absatz 136 des Gehäuses 7 gepresst wird. Auf diese Weise ist eine erste, unterste Referenzlage des Stellkolbenteils 131 vorgegeben. Über eine Umschaltung des Magnetventils 129 kann ein Druckraum 137 mit Druck beaufschlagt werden. Der Druckraum 137 ist begrenzt durch eine Kolbenfläche 138 des Stellkolbenteils 131. Über die Beaufschlagung des Druckraums 137 und die an der Kolbenfläche 138 hervorgerufene Druckkraft kann entgegen der Beaufschlagung durch die Feder 133 der Stellkolbenteil 131 relativ zu dem Stellkolbenteil 132 nach oben bewegt werden, bis ein Absatz 139 des Stellkolbenteils 131 zur Anlage kommt an einen Innenbund 140 des Stellkolbenteils 132. Hiermit ist eine zweite, angehobene Referenzlage vorgegeben. Soll eine dritte, weiter angehobene Referenzlage herbeigeführt werden, erfolgt über das Magnetventil 130 eine Druckbeaufschlagung eines Druckraums 141, welcher von einer von der unteren Stirnseite des Stellkolbenteils 132 ausgebildeten Kolbenfläche 142 begrenzt ist. Die hier erzeugte Druckkraft kann entgegen der Beaufschlagung durch die Feder 133 zu einer gemeinsamen Bewegung der beiden Stellkolbenteile 131, 132 führen, bei welcher weiterhin der Absatz 139 an dem Innenbund 140 anliegt.

Sind die mittels der Beaufschlagung der Druckräume 137, 141 verursachten Stellwege unterschiedlich, kann eine weitere Referenzlage herbeigeführt werden durch Druckbeaufschlagung des Druckraums 141 ohne Druckbeaufschlagung des Druckraums 137. Sollen weitere Referenzlagen herbeiführbar sein, können weitere entsprechend ineinander geschachtelte hülsenartige Stellkolbenteile mit zugeordneten Druckräumen und zugeordneten Magnetventilen eingesetzt werden.

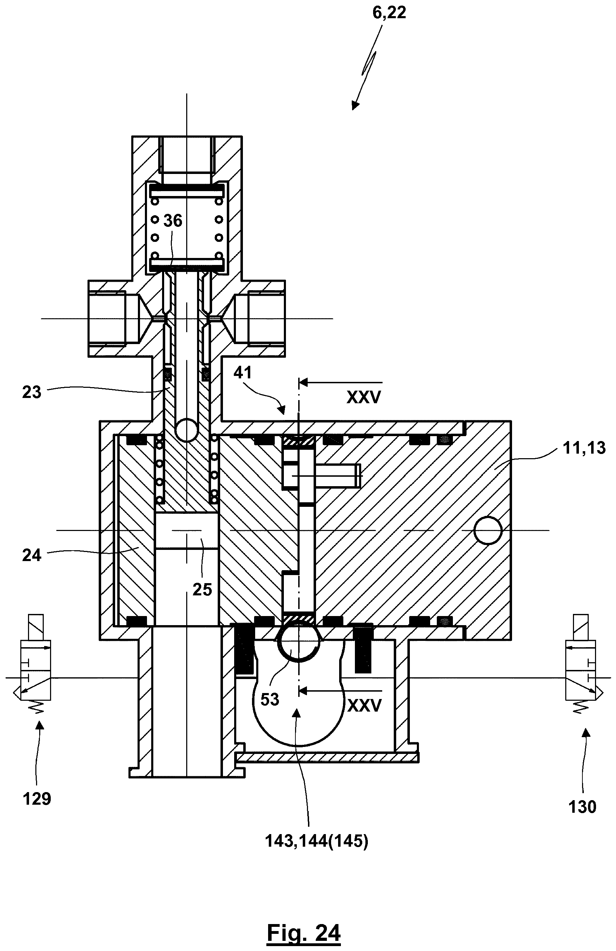

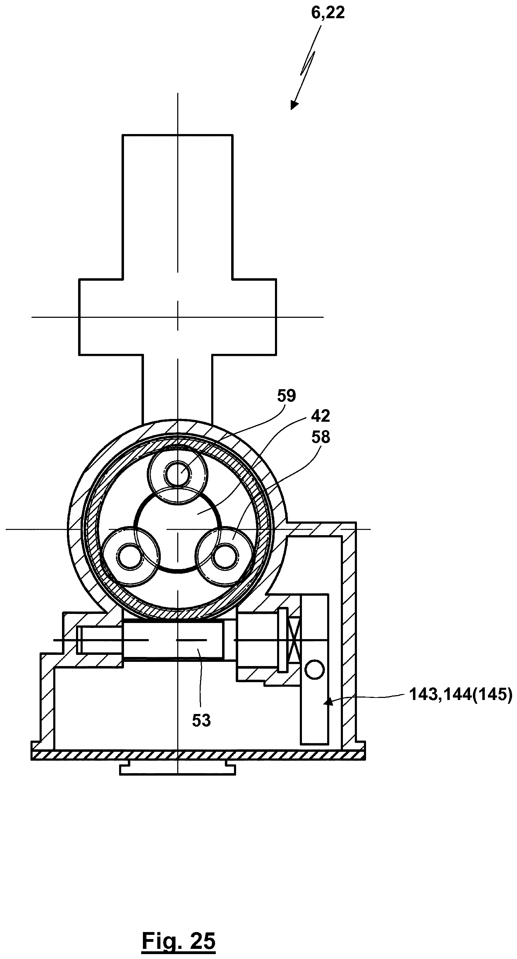

Das Ausführungsbeispiel gemäß **Fig. 24** **und** **25** entspricht grundsätzlich dem Ausführungsbeispiel gemäß Fig. 6. Allerdings wird hier eine Verdrehung der Antriebswelle 53 nicht mittels eines elektrischen Antriebsaggregates 54 herbeigeführt. Vielmehr erfolgt hier der Antrieb der Antriebswelle 53 über einen pneumatisch betriebenen Aktuator 143. Vorzugsweise handelt es sich bei den pneumatisch betriebenen Aktuator 143 um einen Lamellenmotor 144 oder einen Drehkolbenmotor 145. Ein Stellmoment und/oder ein Stellwinkel können/kann hierbei pneumatisch beeinflusst werden, was über die Magnetventile 129, 130 erfolgen kann.

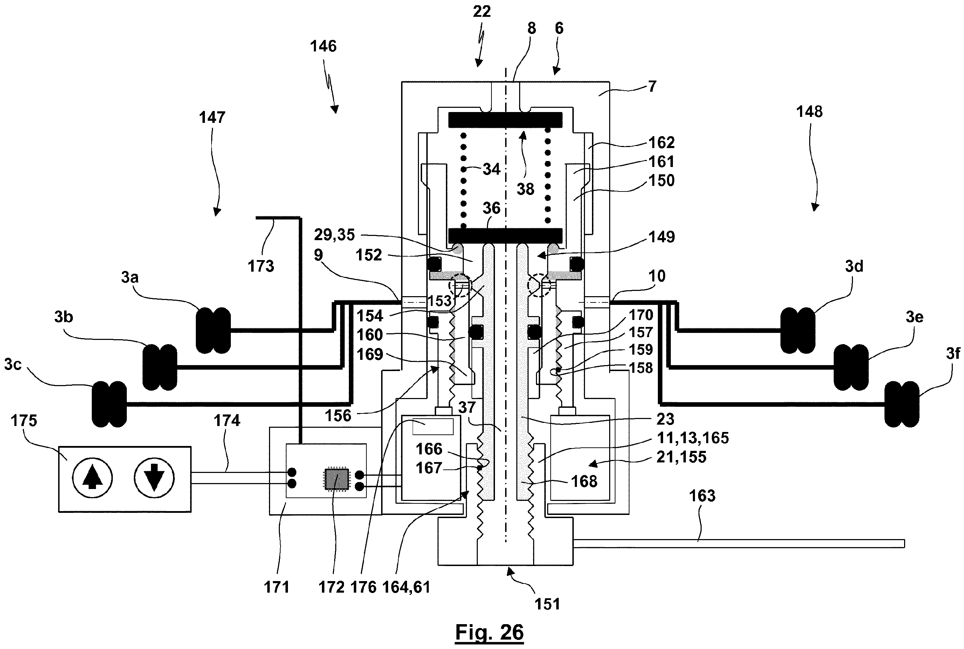

**Fig. 26** zeigt schematisiert eine Luftfederungsanlage 146, welche hier zweikreisig mit Kreisen 147, 148 mit Luftfederbälgen 3a bis 3f ausgebildet ist.

Ein Niveauregelventil 6 verfügt über Ausgänge 9, 10 für die beiden Kreise 147, 148. Das Niveauregelventil 6 verfügt des Weiteren über einen Anschluss 8, welcher zwecks Versorgung des Niveauregelventils 6 mit einer Druckluftquelle, insbesondere einem Behälter, verbunden ist. In dem Niveauregelventil 6 ist ein Rückschlagventil 38 angeordnet, welches eine Zufuhr von Druckluft in den Innenraum des Gehäuses 7 von dem Anschluss 8 ermöglicht, aber ein Entweichen von Druckluft über den Anschluss 8 verhindert.

Das Ventil, welches je nach Niveau der Luftfederbälge 3 und nach Betätigung eines Aktuators 21 eine Belüftung, eine Entlüftung und ein Absperren der Luftfederbälge 3 herbeiführt, ist hier als Doppelsitzventil 149 ausgebildet. Das Doppelsitzventil 149 verfügt über einen Ventilsitzkörper 150, der einen Ventilsitz 35 ausbildet, über ein Ventilelement 23, welches hier als mit einer Entlüftung 151 verbundener Hohlkörper und als Ventilstößel ausgebildet ist, sowie über einen Ventilteller 36. Der Ventilteller 36 wird über eine Feder 34 in Richtung des Ventilsitzes 35 beaufschlagt. Liegt infolge dieser Beaufschlagung der Ventilteller 36 an dem Ventilsitz 35 an, sperrt das Doppelsitzventil 149 den Übertritt von Druckluft von dem Anschluss 8 zu den Anschlüssen 9, 10 ab, womit keine Belüftung der Luftfederbälge 3 möglich ist. Das Ventilelement 23 ist mechanisch derart mit einer zugeordneten Achse des Fahrzeugs oder einem Fahrzeugrad des Fahrzeugs gekoppelt, dass je nach Niveau der Achse oder des Fahrzeugrads eine Relativstellung des Ventilelements 23 zu dem Ventilteller 36 und/oder dem Ventilsitz 35 verändert wird. Hierbei kann das Ventilelement 23 vorzugsweise die folgenden Relativstellungen einnehmen:
a) In der in Fig. 26 wirksamen Relativstellung liegt das Ventilelement 23 stirnseitig an dem Ventilteller 36 an, womit eine Verbindung der Anschlüsse 9, 10 über eine Innenbohrung 37 des Ventilelements 23 mit der Entlüftung 151 abgesperrt ist, so dass keine Entlüftung der Luftfederbälge 3 möglich ist. Gleichzeitig ist, wie zuvor erläutert, über den an dem Ventilsitz 35 anliegenden Ventilteller 36 die Verbindung des Anschlusses 8 mit den Anschlüssen 9, 10 abgesperrt, so dass auch keine Belüftung der Luftfederbälge 3 erfolgen kann. Es liegt somit eine Sperrstellung des Doppelsitzventils 149 vor.
b) Wird infolge einer unerwünschten Verringerung des Niveaus das Ventilelement 23 in Fig. 26 nach oben bewegt, wird der Ventilteller 36 (unter weiterem Absperren des Übertritts von Druckluft über die Innenbohrung 37 zur Entlüftung 151) nach oben und von dem Ventilsitz 35 weg bewegt, so dass der Anschluss 8 mit den Anschlüssen 9, 10 verbunden wird und eine Belüftung der Luftfederbälge 3 erfolgt. Es liegt somit eine Belüftungsstellung des Doppelsitzventils 149 vor.
c) Wird hingegen für ein zu großes Niveau das Ventilelement 23 aus der Ausgangsstellung gemäß Fig. 26 nach unten bewegt, kann der Ventilteller 36 dem Ventilelement 23 nicht folgen, sondern der Ventilteller 36 wird durch die Feder 34 an den Ventilsitz 35 angepresst. Somit ist eine Verbindung der Anschlüsse 8, 9, 10 unterbunden und es kann keine Belüftung der Luftfederbälge 3 erfolgen. Infolge der Bewegung des Ventilelements 23 in Fig. 26 nach unten wird ein Übertrittsquerschnitt zwischen der Stirnseite des Ventilelements 23 und dem Ventilteller 36 geschaffen, womit dann aber ein Übertritt von Druckluft von den Anschlüssen 9, 10 über den genannten Übertrittsquerschnitt und die Innenbohrung 37 zu der Entlüftung 151 erfolgen kann. Somit erfolgt für derartige Relativstellung eine Entlüftung der Luftfederbälge 3. Es liegt somit eine Entlüftungsstellung des Doppelsitzventils 149 vor.

Für das dargestellte Ausführungsbeispiel ist (ohne dass dies zwingend der Fall ist) das Doppelsitzventil 149 über einen Ringraum 152, der zwischen der äußeren Mantelfläche des Ventilelements 23 und der Innenfläche des Ventilsitzkörpers 150 benachbart dem Ventilsitz 35 gebildet ist, und mindestens eine Drosselbohrung 153, welche den Ventilsitzkörper 150 in radialer Richtung durchsetzt, mit den Anschlüssen 9, 10 verbunden. Ebenfalls optional möglich ist, dass das Ventilelement 23 - wie in Fig. 26 dargestellt - einen Bund oder eine Steuerkante 154 aufweist, welche in der in Fig. 26 wirksamen Sperrstellung des Doppelsitzventils 149 die Drosselbohrungen 153 zumindest teilweise abdeckt, während der Bund oder die Steuerkante 154 in der Be- und Entlüftungsstellung des Ventilelements 23 die Drosselbohrungen 153 freigeben kann. Die mindestens eine Drosselbohrung 153 verfügt beispielsweise über einen maximalen Durchmesser im Bereich von 2,50 bis 3,00 mm, insbesondere 2,70 bis 2,90 mm.

Die Lage der Sperrstellung und damit eine Referenzlage des Niveauregelventils 6, welche mit einem Referenzniveau der Achse oder des Fahrzeugrads korreliert, kann verändert werden durch eine Bewegung des Ventilsitzkörpers 150. Während gemäß dem in den Fig. 22 und 23 dargestellten Ausführungsbeispiel eine Bewegung des Ventilsitzkörpers 150 über einen elektrischen Aktuator gesteuert wird, der als elektronisch gesteuerter pneumatisch betätigter Stellkolben ausgebildet ist, erfolgt für das Ausführungsbeispiel gemäß Fig. 26 die Verstellung der Position des Ventilsitzkörpers 150 über einen Aktuator 21, der als elektrischer Antrieb 155 ausgebildet ist. Hierbei kann der elektrische Antrieb 155 als Linearantrieb oder auch als rotatorischer Antrieb ausgebildet sein, der dann unmittelbar oder unter Zwischenschaltung eines beliebigen Getriebes oder einer anderen mechanischen Übertragungseinrichtung die gewünschte translatorische Bewegung des Ventilsitzkörpers 150 herbeiführen kann. Für das in Fig. 26 dargestellte Ausführungsbeispiel treibt der elektrische Antrieb 155 den Ventilsitzkörper 150 über einen Gewinde- oder Spindeltrieb 156 an. Der Spindeltrieb 156 verfügt über eine Spindelmutter 157, die drehbar, aber axial nicht verschiebbar gegenüber dem Gehäuse 7 geführt ist. Die Spindelmutter 157 ist über ein Getriebe oder wie hier dargestellt unmittelbar von dem elektrischen Antrieb 155 angetrieben, d. h. in Rotation versetzt. Die Spindelmutter 157 kämmt mit ihrem Innengewinde 158 mit einem Außengewinde 159 des Ventilsitzkörpers 150. Der Ventilsitzkörper 150 ist in dem Gehäuse 7 so geführt, dass dieser translatorisch zum Öffnen und Schließen des Doppelsitzventils 149 bewegt werden kann, aber keine Rotation des Ventilsitzkörpers 150 möglich ist. Der Endbereich des Ventilsitzkörpers 150, der das Außengewinde 159 bildet, bildet eine Spindel 160 des Spindeltriebs 156. Für das dargestellte Ausführungsbeispiel erfolgt die Verdrehsicherung des Ventilsitzkörpers 150 über einen Fortsatz 161 des Ventilsitzkörpers 150, welcher in einer Längsnut 162 des Gehäuses 7 spielfrei oder lediglich mit einem kleinen Spiel in Umfangsrichtung geführt ist.

Für das Ausführungsbeispiel gemäß Fig. 26 ist eine besondere Kopplung einer Niveauänderung mit der translatorischen Bewegung des Ventilkörpers 23 eingesetzt, ohne dass dieses zwingend der Fall ist: Hier findet zwischen einer mit dem Fahrzeugrad oder der Fahrzeugachse bewegten, nämlich verschwenkten Anlenkung 163 und dem Ventilelement 23 ein weiterer Spindeltrieb 164 Einsatz. Hier ist eine Spindelmutter 165, die verdrehbar, aber nicht axial verschiebbar an dem Gehäuse 7 gelagert ist, mit der Anlenkung 163 verbunden, so dass gemeinsam mit der Anlenkung 163 eine Verdrehung der Spindelmutter 165 erfolgt. Die Spindelmutter 165 weist ein Innengewinde 166 auf, welches mit einem Außengewinde 167 eines Endbereichs des Ventilelements 23, der somit eine Spindel 168 des Spindeltriebs 164 bildet, kämmt. Das Ventilelement 23 ist axial verschieblich, aber nicht um die Längsachse verdrehbar. Dies erfolgt für das dargestellte Ausführungsbeispiel dadurch, dass der Ventilsitzkörper 150 in der Ausnehmung für den Hindurchtritt des Ventilelements 23 mindestens einen Fortsatz 169 aufweist, welcher spielfrei in Umfangsrichtung oder mit einem kleinen Spiel in einer Längsnut 170 geführt ist. Somit ist das Ventilelement 23 drehfest mit dem Ventilsitzkörper 150 gekoppelt, während der Ventilsitzkörper 150 wiederum drehfest mit dem Gehäuse 7 gekoppelt ist.

Möglich ist, dass die Position des Ventilsitzkörpers 150 und/oder eine Veränderung der Position über einen Sensor unmittelbar oder mittelbar erfasst wird. Dabei kann der Sensor die Position direkt erfassen. Möglich ist, dass ein berührungsloser Sensor hierzu eingesetzt ist, beispielsweise ein Sensor, der auf dem Hall-Effekt basiert. Hierbei kann der Sensor die absolute Position des Ventilsitzkörpers 150 relativ zum Gehäuse 7 erfassen. Möglichst aber auch, dass, wie in Fig. 26 schematisch dargestellt ist, ein Sensor 176 in den Antrieb 155 integriert ist. Hierbei kann der Sensor 176 bspw. als Drehwinkelsensor ausgebildet sein, welcher mit einer Steuereinheit 171 verbunden sein kann. Ein mittels des Sensors 176 erfasster Drehwinkel kann auf einfache Weise unter Berücksichtigung der Antriebscharakteristik des Spindeltriebs 156 umgerechnet werden in eine Veränderung der Position des Ventilsitzkörpers 150.

Eine Ansteuerung des Aktuators 21 bzw. elektrischen Antriebs 155 erfolgt über eine elektronische Steuereinheit 171, welche eine ECU 172 aufweist. Über eine Leitung oder einen Datenbus 173 ist die Steuereinheit 171 beispielsweise mit einer elektrischen Leistungsversorgung oder einer seriellen Datenschnittstelle, z. B. einem CAN-Bus, verbunden. Des Weiteren ist die Steuereinheit 171 über einen Datenbus oder eine Leitung 174 mit einer manuellen Bedieneinheit 175 verbunden, über welche der Benutzer eine manuelle Veränderung des Sollniveaus, beispielsweise zum Anheben oder Absenken des Niveaus an einer Rampe zum Be- und Entladen, vorgeben kann. Möglich ist auch, dass über die oder eine manuelle Bedieneinheit und/oder automatisch mittels einer Steuereinheit eine automatische Anpassung der Niveauhöhe erfolgt, was beispielsweise auch zur Gewährleistung unterschiedlicher Fahrhöhen insbesondere während der Fahrt in der Stadt, auf der Landstraße und auf der Autobahn der Fall sein kann. Möglich ist auch, dass über die Steuereinheit 171 bei der Erkennung eines Losfahrens des Fahrzeugs beispielsweise von einer Rampe eine so genannte "Reset-to-Ride-Funktion" ausgeführt wird, bei der über den Aktuator 21 von einem manuell vorgegebenen Rampenniveau das Sollniveau für die Fahrt wiederhergestellt wird. Ebenfalls möglich ist, dass eine automatische Anpassung an das Niveau einer Fahrzeugrampe über eine automatische elektronische Ansteuerung des elektrischen Antriebs 155 erfolgt, wenn beispielsweise über mechanische oder optische Mittel eine Rampenhöhe ermittelt wird oder beispielsweise beim Erkennen des Anfahrens einer Rampe mit einer vorgegebenen Rampenhöhe eine Anpassung an diese Rampenhöhe mit Annäherung an die Rampe erfolgt. Für das Ausführungsbeispiel gemäß Fig. 26 bildet die Spindelmutter 165, die drehfest mit der Anlenkung 163 verbunden ist und drehbar gegenüber dem Gehäuse 7 gelagert ist, das Antriebselement 13, welches wiederum die verdrehbare Antriebswelle 11 des Niveauregelventils 6 bildet.

Ist einmal über die elektronische Ansteuerung des Aktuators 21 ein Sollniveau oder ein beliebiges Rampenniveau vorgegeben worden, kann über die mechanische Niveauregelung auch ohne elektrische Leistungsversorgung eine Niveauregelung, also ein Halten eines elektronisch vorgegebenen Sollniveaus oder Rampenniveaus, erfolgen. Dies kann sowohl im Stillstand als auch bei Fahrt des Fahrzeugs der Fall sein. Möglich ist, dass eine elektronische Verstellung des Sollniveaus auch mittels einer elektrischen kabelgebundenen oder kabellosen Fernbedienung erfolgt.

Vorzugsweise weist die Niveauregelventileinrichtung 22 eine Speichereinrichtung auf, über welche auch ohne Vorliegen einer elektrischen Leistungsversorgung Daten wie beispielsweise ein aktuelles Sollniveau oder Rampenniveau gespeichert werden können. Möglich ist, dass als elektrischer Antrieb 155 eine Antriebseinheit Einsatz findet, welche einerseits über einen elektrischen Motor und andererseits bereits über ein integriertes Getriebe verfügt.

### BEZUGSZEICHENLISTE

- 1: Fahrzeugrad
- 2: Fahrzeugachse
- 3: Luftfederbalg
- 4: Fahrzeugrahmen
- 5: Niveau
- 6: Niveauregelventil
- 7: Gehäuse
- 8: Anschluss
- 9: Anschluss
- 10: Anschluss
- 11: Antriebswelle
- 12: mechanischer Kopplungsmechanismus
- 13: Antriebselement
- 14: Antriebsstrebe
- 15: Koppelstange
- 16: Koppelstange
- 17: Gelenk
- 18: Gelenk
- 19: Koppelstangenteil
- 20: Koppelstangenteil
- 21: Aktuator
- 22: Niveauregelventileinrichtung
- 23: Ventilelement
- 24: Betätigungselement
- 25: Exzenter
- 26: Feder
- 27: Ventilschieber
- 28: Bohrung
- 29: Gegen-Ventilelement
- 30: Steuerkante
- 31: Mündung
- 32: Mündung
- 33: Ringraum
- 34: Feder
- 35: Ventilsitz
- 36: Ventilteller
- 37: Innenbohrung
- 38: Rückschlagventil
- 39: Anschluss
- 40: Rotationsachse
- 41: Planetengetriebe
- 42: Sonnenrad
- 43: Sonnenradwelle
- 44: Lager
- 45: Lager
- 46: Planetenrad
- 47: Planetenrad
- 48: Steg
- 49: Steg
- 50: Hohlrad
- 51: Hohlrad
- 52: Außenverzahnung
- 53: Antriebswelle
- 54: Antriebsaggregat
- 55: Sensor
- 56: Sensor
- 57: Platine
- 58: Planetenrad
- 59: Planetenrad
- 60: Doppelplanet
- 61: Antriebsverbindung
- 62: Exzenter
- 63: Ausnehmung
- 64: Betätigungsachse
- 65: Abstützflügel
- 66: Abstützflügel
- 67: Reibelement
- 68: Sacklochbohrung
- 69: Feder
- 70: Reibkörper
- 71: Ventilscheibe
- 72: Ventilscheibe
- 73: Ventilscheibe
- 74: Bohrung
- 75: Feder
- 76: Übertragungskanal
- 77: Übertragungskanal
- 78: Umfangskanal
- 79: Umfangskanal
- 80: Langloch
- 81: Langloch
- 82: Langloch
- 83: Übertragungskanal
- 84: erste Relativstellung
- 85: Vierkant
- 86: zweite Relativstellung
- 87: dritte Relativstellung
- 88: Steuerkreis
- 89: Vorratsbehälter
- 90: Anschluss
- 91: Steuerleitung
- 92: elektronische Steuereinrichtung
- 93: Steuerausgang
- 94: Eingangsanschluss
- 95: Niveauregelventil
- 96: Steuereingang
- 97: Schnittstelle
- 98: Bedienelement
- 99: Ausgang
- 100: Signalleitung
- 101: Drucksignalleitung
- 102: Anschluss
- 103: Anschluss
- 104: Bussystem
- 105: Hebe-Senk-Ventileinheit
- 106: Steuerausgang
- 107: Steuereingang
- 108: bidirektionale Leitung
- 109: Anschluss
- 110: Anschluss
- 111: Ausgang
- 112: EBS-Steuereinheit
- 113: Steuereinheit
- 114: Load-Transfer-Ventileinrichtung
- 115: Magnetventil
- 116: Magnetventil
- 117: Liftachssystem
- 118: Niveauregelventil
- 119: Kontaktkörper
- 120: Stellkolben
- 121: Steueranschluss
- 122: Steueranschluss
- 123: Feder
- 124: Feder
- 125: Kolbenfläche
- 126: Kolbenfläche
- 127: Druckraum
- 128: Druckraum
- 129: Magnetventil
- 130: Magnetventil
- 131: Stellkolbenteil
- 132: Stellkolbenteil
- 133: Feder
- 134: Absatz
- 135: Innenbund
- 136: Absatz
- 137: Druckraum
- 138: Kolbenfläche
- 139: Absatz
- 140: Innenbund
- 141: Druckraum
- 142: Kolbenfläche
- 143: pneumatisch betriebener Aktuator
- 144: Lamellenmotor
- 145: Drehkolbenmotor
- 146: Luftfederungsanlage
- 147: Kreis
- 148: Kreis
- 149: Doppelsitzventil
- 150: Ventilsitzkörper
- 151: Entlüftung
- 152: Ringraum
- 153: Drosselbohrung
- 154: Bund, Steuerkante
- 155: elektrischer Antrieb
- 156: Spindeltrieb
- 157: Spindelmutter
- 158: Innengewinde
- 159: Außengewinde
- 160: Spindel
- 161: Fortsatz
- 162: Längsnut
- 163: Anlenkung
- 164: Spindeltrieb
- 165: Spindelmutter
- 166: Innengewinde
- 167: Außengewinde
- 168: Spindel
- 169: Fortsatz
- 170: Längsnut
- 171: elektronische Steuereinheit
- 172: ECU
- 173: Datenbus, Leitung
- 174: Datenbus, Leitung
- 175: manuelle Bedieneinheit
- 176: Sensor

## Patentansprüche

1. Mechanisch betätigte Niveauregelventileinrichtung (22) für ein Nutzfahrzeug mit einer Luftfederungsanlage, mit
a) einem Antriebselement (13), welches mechanisch mit einem Fahrzeugrad (1) oder einer Fahrzeugachse (2) koppelbar ist,
b) einem Ventilelement (23), welches
ba) derart mechanisch mit dem Antriebselement (13) gekoppelt ist, dass durch eine Bewegung des Antriebselements (13) eine Bewegung des Ventilelements (23) herbeiführbar ist,
bb) mit einem Gegen-Ventilelement (29) derart zusammenwirkt, dass in Abhängigkeit von der Relativstellung des Ventilelements (23) und des Gegen-Ventilelements (29) durch die Wechselwirkung zwischen dem Ventilelement (23) und dem Gegen-Ventilelement (29)
- in einer ersten Relativstellung ein Anschluss (9) für einen Luftfederbalg (3) abgesperrt ist,
- in einer zweiten Relativstellung der Anschluss (9) für den Luftfederbalg (3) mit einem Anschluss (8) für eine Belüftung verbunden ist und/oder
- in einer dritten Relativstellung der Anschluss (9) für den Luftfederbalg (3) mit einer Entlüftung verbunden ist,
c) wobei ein elektronisch steuerbarer Aktuator (21) vorhanden ist, mittels dessen
ca) die Relativstellung des Ventilelements (23) und Antriebselements (13) und/oder
cb) die relative Lage des mindestens einen Gegen-Ventilelements (29) gegenüber einem das Ventilelement (23) und das Gegen-Ventilelement (29) aufnehmenden Gehäuse (7) veränderbar ist, wobei
d) die Niveauregelventileinrichtung ein Niveauregelventil (6) ist, und das Antriebselement (13) eine verdrehbare Antriebswelle (11) des Niveauregelventils (6) ist,
**dadurch gekennzeichnet, dass**
e) der Aktuator (21) in das Niveauregelventil (6) integriert ist.

2. Niveauregelventileinrichtung (22) nach Anspruch 1, **dadurch gekennzeichnet, dass** bei fixierter Lage und Orientierung eines Gehäuses (7) der Niveauregelventileinrichtung (22) an einem Fahrzeugrahmen eine mit einem Referenzniveau der Luftfederungsanlage korrelierende Referenzlage der Niveauregelventileinrichtung (22) veränderbar ist und für eine veränderte Referenzlage der Niveauregelventileinrichtung (22) auch ohne elektrische Leistungsversorgung eine mechanische Niveauregelung möglich ist.

3. Niveauregelventileinrichtung (22) nach Anspruch 1 oder 2, **dadurch gekennzeichnet, dass** die Antriebswelle (11) über den Aktuator (21) mit einem Betätigungselement (24) für das Ventilelement (23) gekoppelt ist.

4. Niveauregelventileinrichtung (22) nach Anspruch 3, **dadurch gekennzeichnet, dass** der Aktuator (21) ein Planetengetriebe (41) aufweist, von dem
a) ein Getriebeelement mit dem Antriebselement (13) drehfest verbunden ist,
b) ein Getriebeelement mit dem Betätigungselement (24) drehfest verbunden ist und
c) ein Getriebeelement über ein Antriebsaggregat (54) verdrehbar ist.

5. Niveauregelventileinrichtung (22) nach Anspruch 4, **dadurch gekennzeichnet, dass** das Antriebsaggregat (54) ein Hohlrad (51) des Planetengetriebes (41) verdreht.

6. Niveauregelventileinrichtung (22) nach Anspruch 5, **dadurch gekennzeichnet, dass** das Antriebsaggregat (54) eine Antriebswelle (53), insbesondere eine Schneckenwelle, antreibt und das Hohlrad (51) im Bereich seiner Mantelfläche eine Außenverzahnung (52), insbesondere ein Schneckenrad, bildet, welches mit der Antriebswelle (53) kämmt.

7. Niveauregelventileinrichtung (22) nach einem der vorhergehenden Ansprüche, **dadurch gekennzeichnet, dass**
a) die Verdrehung des Antriebselements (13) über eine Antriebsverbindung (61) umgewandelt wird in eine translatorische Bewegung eines Betätigungselements (24),
b) wobei die translatorische Bewegung des Betätigungselements (24) auf das Ventilelement (23) übertragen wird,
c) der Aktuator (21) zwischen das Betätigungselement (24) und das Ventilelement (23) zwischengeschaltet ist und
d) der Aktuator (21) die relative Stellung zwischen dem Betätigungselement (24) und dem Ventilelement (23) verändert.

8. Niveauregelventileinrichtung (22) nach einem der vorhergehenden Ansprüche, **dadurch gekennzeichnet, dass** der Aktuator (21) selbsthemmend auf das Ventilelement (23) wirkt.

9. Niveauregelventileinrichtung (22) nach einem der vorhergehenden Ansprüche, **dadurch gekennzeichnet, dass** mindestens ein Sensor (55; 56) vorhanden ist, der
a) eine Relativstellung des Antriebselements (13) oder der Antriebswelle (11) und des Betätigungselements (24) oder
b) eine Stellung des Antriebselements (13), der Antriebswelle (11) und/oder des Betätigungselements (24)
erfasst.

10. Niveauregelventileinrichtung (22) nach Anspruch 9, **dadurch gekennzeichnet, dass** der Sensor (55; 56) ein Hall-Sensor ist und/oder in ein oder das Gehäuse (7) des Niveauregelventils (6) integriert ist.

11. Niveauregelventileinrichtung (22) nach einem der vorhergehenden Ansprüche, **dadurch gekennzeichnet, dass** das Niveauregelventil (6) Ventilscheiben (71, 72, 73) aufweist, zwischen welchen je nach Drehwinkel der Ventilscheiben (71, 72, 73)
- in einer ersten Relativstellung (84) ein Anschluss (9) für einen Luftfederbalg (3) abgesperrt ist,
- in einer zweiten Relativstellung (86) der Anschluss (9) für den Luftfederbalg (3) mit einem Anschluss (8) für eine Belüftung verbunden ist und/oder
- in einer dritten Relativstellung (87) der Anschluss (9) für den Luftfederbalg (3) mit einer Entlüftung verbunden ist,
wobei eine Ventilscheibe (72) von dem Aktuator (21) verdreht wird und eine Ventilscheibe (73) das Ventilelement (23) bildet und eine Ventilscheibe (72) das Gegen-Ventilelement (29) bildet.

12. Niveauregelventileinrichtung (22) nach einem der vorhergehenden Ansprüche, **dadurch gekennzeichnet, dass** eine elektronische Steuereinrichtung vorhanden ist, welche Steuerlogik aufweist, die
a) für eine manuell von einem Bediener vorgegebene Niveauänderung ein Steuersignal für den Aktuator (21) erzeugt, auf Grundlage dessen der Aktuator (21) die Relativstellung des Ventilelements (23) und des Gegen-Ventilelements (29) entsprechend der vom Bediener vorgegebenen Niveauänderung verändert,
b) für eine automatische Niveauänderung für eine Anpassung des Niveaus an das Niveau einer Rampe ein Steuersignal für den Aktuator (21) erzeugt, auf Grundlage dessen der Aktuator (21) die Relativstellung des Ventilelements (23) und des Gegen-Ventilelements (29) entsprechend der automatischen Niveauänderung verändert,
c) für eine dynamische Niveauregelung im Fahrbetrieb ein Steuersignal für den Aktuator (21) erzeugt, auf Grundlage dessen der Aktuator (21) die Relativstellung des Ventilelements (23) und des Gegen-Ventilelements (29) so verändert, dass sich eine Veränderung der Relativstellung des Ventilelements (23) und des Gegen-Ventilelements (29) ergibt, deren Betrag größer ist als der Betrag der Veränderung der Relativstellung des Ventilelements (23) und des Gegen-Ventilelements (29), welche sich bei rein mechanischer Niveauregelung ergeben hätte,
d) für eine dynamische Niveauregelung zur Vermeidung eines Cycling des Fahrzeugaufbaus ein Steuersignal für den Aktuator (21) erzeugt, auf Grundlage dessen der Aktuator (21) die Relativstellung des Ventilelements (23) und des Gegen-Ventilelements (29) so verändert, dass das Ventilelement (23) und das Gegen-Ventilelement (29) in der ersten Relativstellung (84) bleiben oder in diese überführt werden, obwohl sich auf Grundlage einer rein mechanischer Niveauregelung die zweite oder dritte Relativstellung (86; 87) ergeben würde,
e) für eine Erkennung eines Fahrbeginns ein Steuersignal für den Aktuator (21) erzeugt, auf Grundlage dessen der Aktuator (21) die Relativstellung des Ventilelements (23) und 0des Gegen-Ventilelements (29) so verändert, dass sich eine vordefinierte Fahrhöhe ergibt und/oder
f) für eine Erkennung eines Einsteigens oder Aussteigens von Passagieren ein Steuersignal für den Aktuator (21) erzeugt, auf Grundlage dessen der Aktuator (21) die Relativstellung des Ventilelements (23) und des Gegen-Ventilelements (29) so verändert, dass sich eine reduzierte Fahrhöhe ergibt, welche das Einsteigen oder Aussteigen vereinfacht, und/oder für eine Erkennung eines Endes eines Einsteigens oder Aussteigens von Passagieren ein Steuersignal für den Aktuator (21) erzeugt, auf Grundlage dessen der Aktuator (21) die Relativstellung des Ventilelements (23) und des Gegen-Ventilelements (29) so verändert, dass sich eine vordefinierte Fahrhöhe ergibt.

13. Niveauregelventileinrichtung (22) nach einem der vorhergehenden Ansprüche, **dadurch gekennzeichnet, dass** der Aktuator als pneumatisch betriebener Aktuator (143) ausgebildet ist.

14. Niveauregelventileinrichtung (22) nach Anspruch 13, **dadurch gekennzeichnet, dass** der pneumatisch betriebene Aktuator (143) ein Lamellenmotor (144) oder Drehkolbenmotor (145) ist.

15. Niveauregelventileinrichtung (22) nach Anspruch 13, **dadurch gekennzeichnet, dass** der pneumatisch betriebene Aktuator (143) ein pneumatisch beaufschlagbarer Stellkolben (120) ist, welcher das Gegen-Ventilelement (29) bildet.

16. Niveauregelventileinrichtung (22) nach Anspruch 15, **dadurch gekennzeichnet, dass** der pneumatisch beaufschlagbare Stellkolben (120)
a) in nicht pneumatisch beaufschlagter Betriebsstellung eine erste Referenzlage vorgibt,
b) in einer ersten pneumatisch beaufschlagten Betriebsstellung eine zweite Referenzlage vorgibt und
c) in einer zweiten pneumatisch beaufschlagten Betriebsstellung, welche von der ersten pneumatisch beaufschlagten Betriebsstellung abweicht, eine dritte Referenzlage vorgibt.

17. Niveauregelventileinrichtung (22) nach einem der Ansprüche 1, 2, 8, 9, 10, 12 und 14, **dadurch gekennzeichnet, dass** das Gegen-Ventilelement ein Ventilsitzkörper (150) ist und eine Drehbewegung des Aktuators (21) über einen Spindeltrieb (156) umgewandelt wird in eine translatorische Bewegung des Ventilsitzkörpers (150).

18. Niveauregelventileinrichtung (22) nach einem der vorhergehenden Ansprüche, **dadurch gekennzeichnet, dass** eine Verdrehung der Antriebswelle (13) über einen Spindeltrieb (164) umgewandelt wird in eine translatorische Bewegung des Ventilelements (23).

## Claims

1. Mechanically actuated level control valve device (22) for a commercial vehicle with an air suspension system comprising
a) a drive element (13) which can be coupled mechanically to a vehicle wheel (1) or a vehicle axle (2),
b) a valve element (23) which
ba) is mechanically coupled to the drive element (13) in such a way that it is possible to induce a movement of the valve element (23) by a movement of the drive element (13),
bb) cooperates with a counter valve element (29) in such a way that dependent on the position of the valve element (23) relative to the counter valve element (29) by the interaction between the valve element (23) and the counter valve element (29)
- in a first relative position a port (9) for an air suspension bellow (3) is closed,
- in a second relative position the port (9) for the air suspension bellow (3) is connected to a port (8) for an aeration and/or
- in a third relative position the port (9) for the air suspension bellow (3) is connected to a deaeration,
c) an electronically controllable actuator (21) being provided by which it is possible to change
ca) the position of the valve element (23) relative to the drive element (13) and/or
cb) the position and/or orientation of the at least one counter valve element (29) relative to the valve element (23) and the housing (7) accommodating the counter valve element (29),
d) the level control valve device being a level control valve (6) and the drive element (13) being a rotatable drive shaft (11) of the level control valve (6),
**characterised in that**
e) the actuator (21) is integrated into the level control valve (6).

2. Level control valve device (22) of claim 1, **characterised in that** for a fixed position and orientation of a housing (7) of the level control valve device (22) at a vehicle frame a reference position and/or orientation of the level control valve device (22) correlating with a reference level of the air suspension system can be changed and for a change reference position and/or orientation of the level control valve device (22) a mechanical level control is also possible without an electric power supply.

3. Level control valve device (22) of claim 1 or 2, **characterised in that** the drive shaft (11) is coupled by the actuator (21) to an actuation element (24) for the valve element (23).

4. Level control valve device (22) of claim 3, **characterised in that** the actuator (21) comprises a planetary gear set (41) comprising
a) one gear element which is connected fixedly against rotation to the drive element (13),
b) one gear element which is connected fixedly against rotation to the actuation element (24) and
c) one gear element which is rotatable by a drive aggregate (54).

5. Level control valve device (22) of claim 4, **characterised in that** the drive aggregate (54) rotates an internal gear (51) of the planetary gear set (41).

6. Level control valve device (22) of claim 5, **characterised in that** the drive aggregate (54) drives a driving shaft (53), in particular a worm gear shaft, and in the region of its outer surface the internal gear (51) comprises an outer toothing (52), in particular a worm wheel, the outer toothing (52) or worm wheel meshing with the driving shaft (53).

7. Level control valve device (22) of one of the preceding claims, **characterised in that**
a) the rotation of the drive element (13) is converted by a drive connection (61) into a translatory movement of an actuation element (24),
b) the translatory movement of the actuation element (24) being transmitted to the valve element (23),
c) the actuator (21) being interposed between the actuation element (24) and the valve element (23) and
d) the actuator (21) changing the relative position between the actuation element (24) and the valve element (23).

8. Level control valve device (22) according to one of the preceding claims, **characterised in that** the actuator (21) interacts with the valve element (23) in a self-locking or self-impeding way.

9. Level control valve device (22) of one of the preceding claims, **characterised in that** at least one sensor (55; 56) is provided which senses
a) a relative position between the drive element (13) or the driving shaft (11) and the actuation element (24) or
b) a position of the drive element (13), the driving shaft (11) and/or the actuation element (24).

10. Level control valve device (22) of claim 9, **characterised in that** the sensor (55; 56) is embodied as a hall-sensor and/or integrated into a or the housing (7) of the level control valve (6).

11. Level control valve device (22) of one of the preceding claims, **characterised in that** the level control valve (6) comprises valve disks (71, 72, 73) between which dependent on the angle of rotation of the valve disks (71, 72, 73)
- in a first relative position (84) a port (9) for an air suspension bellow (3) is closed,
- in a second relative position (86) the port (9) for the air suspension bellow (3) is connected to a port (8) for an aeration and/or
- in a third relative position (87) the port (9) for the air suspension bellow (3) is connected to a vent,
one valve disk (72) being rotated by the actuator (21) and one valve disk (73) forming the valve element (23) and one valve disk (72) forming the counter valve element (29).

12. Level control valve device (22) of one of the preceding claims, **characterised in that** an electronic control unit is provided which comprises control logic which
a) generates a control signal for the actuator (21) upon a level change demanded manually by the user, the actuator (21) changing the position of the valve element (23) relative to the counter valve element (29) on the basis of the control signal corresponding to the level change demanded by the user,
b) for an automatic level change for adapting the level to the level of a ramp generates a control signal for the actuator (21), the actuator (21) changing the position of the valve element (23) relative to the counter valve element (29) on the basis of the control signal corresponding to the automatic level change,
c) for a dynamic level control during driving generates a control signal for the actuator (21), the actuator (21) on the basis of the control signal changing the position of the valve element (23) relative to the counter valve element (29) in such a way that a change of the position of the valve element (23) relative to the counter valve element (29) results, the absolute value of the change of the relative position being larger than the absolute value of the change of the position of the valve element (23) relative to the counter valve element (29) which would result for a pure mechanical level control,
d) for a dynamic level control for avoiding a cycling of the vehicle body generates a control signal for the actuator (21), the actuator (21) changing the position of the valve element (23) relative to the counter valve element (29) on the basis of the control signal in such a way that the valve element (23) and the counter valve element (29) maintain the first relative position (84) or are transferred into the first relative position (84), although the second or third relative position (86; 87) would result on the basis of a purely mechanical level control,
e) for a detection of a start of driving generates a control signal for the actuator (21), the actuator (21) changing the position of the valve element (23) relative to the counter valve element (29) on the basis of the control signal in such a way that a predefined driving height results and/or
f) for a detection of a boarding or unboarding of passengers generates a control signal for the actuator (21), the actuator changing the position of the valve element (23) relative to the counter valve element (29) on the basis of the control signal in such a way that a reduced driving height results which simplifies the boarding or unboarding, and/or for a detection of an end of a boarding or unboarding of passengers generates a control signal for the actuator (21), the actuator (21) changing the position of the valve element (23) relative to the counter valve element (29) on the basis of the control signal in such a way that a predefined driving height results.

13. Level control valve device (22) of one of the preceding claims, **characterised in that** the actuator is embodied as pneumatically operated actuator (143).

14. Level control valve device (22) of claim 13, **characterised in that** the actuator (143) being pneumatically operated is a rotating piston air engine (144) or vein motor.

15. Level control valve device (22) of claim 13, **characterised in that** the actuator (143) being pneumatically operated is embodied as a pneumatically biased piston (120) which forms the counter valve element (29).

16. Level control valve device (22) of claim 15, **characterised in that** the pneumatically biased piston (120)
a) in an operating position without pneumatical bias defines a first reference position and/or orientation,
b) in an operating position with a first pneumatic bias defines a second reference position and/or orientation and
c) in an operating position with a second pneumatic bias which differs from the first pneumatically biased operating position defines a third reference position and/or orientation.

17. Level control valve device (22) of one of claims 1, 2, 8, 9, 10, 12 and 14, **characterised in that** the counter valve element is a valve seat body (150) and a rotating movement of the actuator (21) is converted by a spindle drive (156) into a translatory movement of the valve seat body (150).

18. Level control valve device (22) of one of the preceding claims, **characterised in that** a rotation of the driving shaft (13) is converted by a spindle drive (164) into a translatory movement of the valve element (23).

## Revendications

1. Dispositif à soupape de régulation de niveau (22) actionnée mécaniquement pour un véhicule utilitaire avec une installation d'amortissement pneumatique avec
a) un élément d'entraînement (13) qui peut être couplé mécaniquement avec une roue du véhicule (1) ou un essieu du véhicule (2),
b) un élément de soupape (23) qui
ba) est couplé mécaniquement avec l'élément d'entraînement (13) de façon à ce qu'un mouvement de l'élément d'entraînement (13) provoque un mouvement de l'élément de soupape (23),
bb) interagit avec un contre-élément de soupape (29) de façon à ce que, en fonction de la position relative de l'élément de soupape (23) et du contre-élément de soupape (29), du fait que l'interaction entre l'élément de soupape (23) et le contre-élément de soupape (29)
- dans une première position relative, un raccord (9) pour un soufflet d'amortissement pneumatique (3) soit bloqué
- dans une deuxième position relative, le raccord (9) pour le soufflet d'amortissement pneumatique (3) soit relié avec un raccord (8) pour une ventilation et/ou
- dans une troisième position relative, le raccord (9) pour le soufflet d'amortissement pneumatique (3) soit relié avec une purge,
c) un actionneur (21) contrôlable électroniquement est présent, au moyen duquel
ca) la position relative de l'élément de soupape (23) et de l'élément d'entraînement (13) et/ou
cb) la position relative de l'au moins un contre-élément de soupape (29) par rapport à un boîtier (7) logeant l'élément de soupape (23) et le contre-élément de soupape (29)
peuvent être modifiées, moyennant quoi,
d) le dispositif à soupape de régulation de niveau est une soupape de régulation de niveau (6) et l'élément d'entraînement (13) est un arbre d'entraînement rotatif (11) de la soupape de régulation de niveau (6),
**caractérisé en ce que**
e) l'actionneur (21) est intégré dans la soupape de régulation de niveau (6).

2. Dispositif à soupape de régulation de niveau (22) selon la revendication 1, **caractérisé en ce que**, dans le cas d'une position et d'une orientation fixes d'un boîtier (7) du dispositif à soupape de régulation de niveau (22) sur un châssis de véhicule, une position de référence du dispositif à soupape de régulation de niveau (22), corrélée avec un niveau de référence de l'installation d'amortissement pneumatique, peut être modifiée et, pour une position de référence modifiée du dispositif à soupape de régulation de niveau (22) une régulation de niveau mécanique est possible même sans alimentation électrique.

3. Dispositif à soupape de régulation de niveau (22) selon la revendication 1 ou 2, **caractérisé en ce que** l'arbre d'entraînement (11) est couplé par l'intermédiaire de l'actionneur (21), avec un élément d'actionnement (24) pour l'élément de soupape (23).

4. Dispositif à soupape de régulation de niveau (22) selon la revendication 3, **caractérisé en ce que** l'actionneur (21) comprend un engrenage épicycloïdal (41) dont
a) un élément d'engrenage est relié de manière solidaire en rotation avec l'élément d'entraînement (13),
b) un élément d'engrenage est relié de manière solidaire en rotation avec l'élément d'actionnement (24) et
c) un élément d'engrenage peut être mis en rotation par un groupe d'entraînement (54).

5. Dispositif à soupape de régulation de niveau (22) selon la revendication 4, **caractérisé en ce que** le groupe d'entraînement (54) fait tourner une couronne à denture intérieure (51) de l'engrenage épicycloïdal (41).

6. Dispositif à soupape de régulation de niveau (22) selon la revendication 5, **caractérisé en ce que** le groupe d'entraînement (54) entraîne un arbre d'entraînement (53), plus particulièrement un arbre à vis sans fin, et la couronne à denture intérieure (51) présente, au niveau de sa surface extérieure, une denture externe (52), plus particulièrement une roue de vis sans fin, qui s'engrène avec l'arbre d'entraînement (53).

7. Dispositif à soupape de régulation de niveau (22) selon l'une des revendications précédentes, **caractérisé en ce que**
a) la rotation de l'élément d'entraînement (13) est converti, par l'intermédiaire d'une liaison d'entraînement (61), en un mouvement de translation d'un élément d'actionnement (24),
b) le mouvement en translation de l'élément d'actionnement (24) étant transmis à l'élément de soupape (23),
c) l'actionneur (21) étant intercalé entre l'élément d'actionnement (24) et l'élément de soupape (23) et
d) l'actionneur (21) modifie la position relative entre l'élément d'actionnement (24) et l'élément de soupape (23).

8. Dispositif à soupape de régulation de niveau (22) selon l'une des revendications précédentes, **caractérisé en ce que** l'actionneur (21) agit de façon autobloquante sur l'élément de soupape (23).

9. Dispositif à soupape de régulation de niveau (22) selon l'une des revendications précédentes, **caractérisé en ce qu'**au moins un capteur (55 ; 56) est présent, qui
a) mesure une position relative de l'élément d'entraînement (13) ou de l'arbre d'entraînement (11) et de l'élément d'actionnement (21) ou
b) mesure une position de l'élément d'entraînement (13), de l'arbre d'entraînement (11) et/ou de l'élément d'actionnement (24).

10. Dispositif à soupape de régulation de niveau (22) selon la revendication 9, **caractérisé en ce que** le capteur (55 ; 56) est un capteur à effet Hall et/ou est intégré dans un ou dans le boîtier (7) de la soupape de régulation de niveau (6).

11. Dispositif à soupape de régulation de niveau (22) selon l'une des revendications précédentes, **caractérisé en ce que** la soupape de régulation de niveau (6) comprend des disques de soupape (71, 72, 73) entre lesquels, selon l'angle de rotation des disques de soupape (71, 72, 73),
- dans une première position relative (84), un raccord (9) pour un soufflet d'amortissement pneumatique (3) est bloqué,
- dans une deuxième position relative (86), le raccord (9) pour le soufflet d'amortissement pneumatique (3) est relié avec un raccord (8) pour une ventilation et/ou
- dans une troisième position relative (87), le raccord (9) pour le soufflet d'amortissement pneumatique (3) est relié avec une purge,
un disque de soupape (72) est mise en rotation par l'actionneur (21) et un disque de soupape (73) constitue l'élément de soupape (23) et un disque de soupape (72) constitue le contre-élément de soupape (29).

12. Dispositif à soupape de régulation de niveau (22) selon l'une des revendications précédentes, **caractérisé en ce qu'**un dispositif de commande électronique est présent, qui comprend une logique de commande, qui
a) pour une modification du niveau prédéterminée manuellement par un opérateur, génère un signal de commande pour l'actionneur (21), sur la base duquel l'actionneur (21) modifie la position relative de l'élément de soupape (23) et du contre-élément de soupape (29) en fonction de la modification de niveau prédéterminée par l'opérateur,
b) pour une modification du niveau automatique pour une adaptation du niveau au niveau d'une rampe, génère un signal de commande pour l'actionneur (21), sur la base duquel l'actionneur (21) modifie la position relative de l'élément de soupape (23) et du contre-élément de soupape (29) en fonction de la modification de niveau automatique,
c) pour une modification du niveau dynamique pendant la marche, génère un signal de commande pour l'actionneur (21), sur la base duquel l'actionneur (21) modifie la position relative de l'élément de soupape (23) et du contre-élément de soupape (29) de façon à ce qu'il en résulte une modification de la position relative de l'élément de soupape (23) et du contre-élément de soupape (29) dont la valeur est supérieure à la valeur de la modification de la position relative de l'élément de soupape (23) et du contre-élément de soupape (29) qui aurait été obtenue lors d'une régulation de niveau purement mécanique,
d) pour une modification du niveau dynamique afin d'éviter un cyclage de la structure du véhicule, génère un signal de commande pour l'actionneur (21), sur la base duquel l'actionneur (21) modifie la position relative de l'élément de soupape (23) et du contre-élément de soupape (29) de façon à ce que l'élément de soupape (23) et le contre-élément de soupape (29) restent dans la première position relative (84) ou sont amenés dans celle-ci bien que, sur la base d'une régulation de niveau purement mécanique, la deuxième ou troisième position relative (86 ; 87) aurait été obtenue,
e) pour une détection d'un début de marche, génère un signal de commande pour l'actionneur (21), sur la base duquel l'actionneur (21) modifie la position relative de l'élément de soupape (23) et du contre-élément de soupape (29) de façon à ce qu'il en résulte une hauteur d'assiette prédéfinie et/ou
f) pour une détection d'une montée ou d'une descente de passagers, génère un signal de commande pour l'actionneur (21) sur la base duquel l'actionneur (21) modifie la position relative de l'élément de soupape (23) et du contre-élément de soupape (29) de façon à ce qu'il en résulte une hauteur d'assiette réduite, qui simplifie la montée ou la descente et/ou, pour une détection d'une fin de montée ou de descente de passagers, génère un signal de commande pour l'actionneur (21) sur la base duquel l'actionneur (21) modifie la position relative de l'élément de soupape (23) et du contre-élément de soupape (29) de façon à ce qu'il en résulte une hauteur d'assiette prédéfinie.

13. Dispositif à soupape de régulation de niveau (22) selon l'une des revendications précédentes, **caractérisé en ce que** l'actionneur est conçu comme un actionneur pneumatique (143).

14. Dispositif à soupape de régulation de niveau (22) selon la revendication 13, **caractérisé en ce que** l'actionneur pneumatique (143) est un moteur à palettes (144) ou un moteur à pistons rotatifs (145).

15. Dispositif à soupape de régulation de niveau (22) selon la revendication 13, **caractérisé en ce que** l'actionneur pneumatique (143) est un piston de réglage (120) pouvant être sollicité pneumatiquement, qui constitue le contre-élément de soupape (29).

16. Dispositif à soupape de régulation de niveau (22) selon la revendication 15, **caractérisé en ce que** le piston de réglage (120) pouvant être sollicité pneumatiquement
a) définit, dans une position de fonctionnement non sollicitée pneumatiquement, une première position de référence,
b) définit, dans une première position de fonctionnement sollicitée pneumatiquement, une deuxième position de référence et
c) définit, dans une deuxième position de fonctionnement sollicitée pneumatiquement, qui est différente de la première position de fonctionnement sollicitée pneumatiquement, une troisième position de référence.

17. Dispositif à soupape de régulation de niveau (22) selon l'une des revendications 1, 2, 8, 9, 10, 12 et 14, **caractérisé en ce que** le contre-élément de soupape est un corps de siège de soupape (150) et un mouvement de rotation de l'actionneur (21) est converti, par l'intermédiaire d'un mécanisme à broche (156), en un mouvement de translation du corps de siège de soupape (150).

18. Dispositif à soupape de régulation de niveau (22) selon l'une des revendications précédentes, **caractérisé en ce qu'**une rotation de l'arbre d'entraînement (13) est converti, par l'intermédiaire d'un mécanisme à broche (164), en un mouvement de translation de l'élément de soupape (23).
